# EUROPEAN PATENT APPLICATION

(11) **EP 1 724 576 A2**
(43) Date of publication of application: **22.11.2006**
(21) Application number: 06119901.4
(22) Date of filing: 05.11.2003
(51) Int. Cl.: G01N 30/36

(54) **Chromatography system with fluid intake management**

(62) Divisional of application: 03795998.8
(71) Applicant: Agilent Technologies, Inc., A Delaware Corporation, Palo Alto, CA 94306 (US)
(72) Inventor: Weissgerber, Hans-Georg, 75334, Straubenhard (DE)
(74) Representative: Barth, Daniel Mathias

(57) **Abstract**

A variety of methods for operating a chromatography system are presented. Specifically, methods for operating a pumping system within a chromatography system are presented. The methods presented are directed to pumping apparatus in which very small amounts of fluid are pumped through the system. A number of techniques for detecting and compensating for leaks are presented as well as a number of techniques for operating the pumping system.

## Description

### BACKGROUND

Chromatography systems perform a broad range of analysis methods to separate and/or analyze complex mixtures. There are a number of different types of chromatography systems, such as gas chromatography systems, Ion exchange chromatography systems, affinity chromatography systems, liquid chromatography systems, etc. In each type of chromatography system, components of a mixture are separated and distributed between two phases known as a mobile phase and a stationary phase.

During operation, a mixture of various components is processed through a chromatography system at different rates. The different rates of migration through the chromatography system facilitate the separation of the mixture. Once the separation is accomplished, the different components of the mixture may be analyzed.

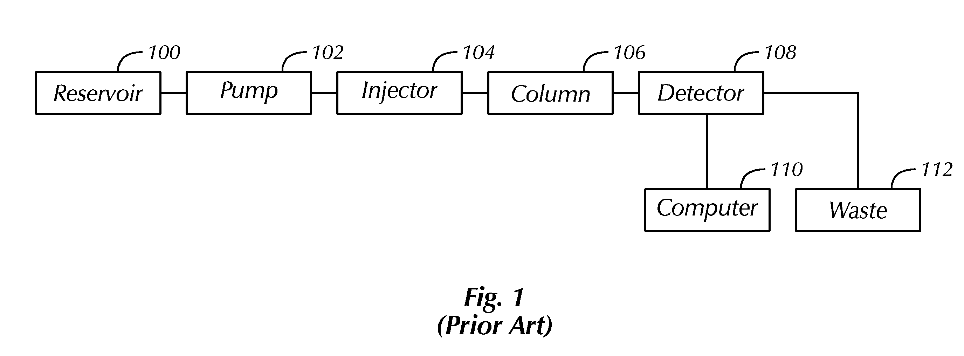

One conventional type of chromatography system is a High Pressure Liquid Chromatography system (HPLC). HPLC is a form of liquid chromatography used to separate compounds that are dissolved in a liquid. A conventional HPLC system is shown in Fig. 1. A reservoir 100 stores a liquid. The liquid in the reservoir 100 is considered as the mobile phase. The liquid is drawn (i.e., pumped) out of the reservoir 100 using a pump 102. A variety of pumps may be implemented, such as syringe pumps, reciprocating pumps, etc. A sample is introduced by an injector 104. The mixture of the initial liquid held in the reservoir 100 and the sample is then pushed through a column 106 packed with material. The column 106 is known in the art as the stationary phase. Different components of the mixture move through the column 106 at different rates and as a result, may be analyzed by a detector 108. Final analysis of the mixture is then performed using a computer 110. The mixture ultimately is deposited as waste 112.

A significant component of a chromatography system is the pumping system. A conventional pumping system includes at least one pump. The pump includes a chamber with a reciprocating piston disposed in the chamber. Each pump typically includes an input valve positioned at an input side of the chamber and an output valve positioned at an output side of the chamber. The input valve throttles the flow of liquid into the pump (i.e., chamber) and the outlet valve throttles the flow of liquid out of the pump (i.e., chamber).

One substantial feature that distinguishes the pumping systems is whether they are low-pressure gradient pumping systems or high-pressure gradient pumping systems. In a low-pressure gradient pumping system, liquid mixing (i.e., mixing of the mobile phase if more than one solvent is used) occurs before the pump. In a high-pressure gradient pumping system, liquid mixing occurs after the liquid is processed through the pump.

Since a chromatography system separates and quantifies a sample (i.e., mixtures of compounds) based on the rate a liquid is processed through a column, controlling and managing the flow of liquid through the chromatography system is critical to performing the proper analysis of the sample (i.e., mixtures). A central component used to manage the flow of liquid through a chromatography system is the pumping system. In addition, since the liquid (i.e., flow rate, volume) that is processed through a chromatography system is extremely small, an incredible amount of precision and control must be applied to properly manage the flow of liquid through the chromatography system.

However, there are a number of problems that arise when processing liquid through the chromatography system. The problems impact the flow of liquid through the chromatography system and as a result, impact the analysis of the sample (i.e., mixtures of components). For example, varying the flow of liquid through a pump affects the analysis of the sample in a chromatography system; leaks may affect the flow of liquid through a chromatography system; incorrectly calibrated devices, such as sensor(s), may affect the flow of liquid through a chromatography system; cross over of liquids in a pumping system with multiple channels may affect the flow of liquid through a chromatography system; discontinuities in a liquid may affect the flow of liquid through a chromatography system; the intake operation of the pump may affect the flow of liquid through a chromatography system; and the piston timing of a pump may affect the flow of liquid through a chromatography system.

Thus, there is a need for a method and apparatus for managing the flow of liquids in a chromatography system. There is a need for a method and apparatus for managing the flow rate of liquids processed through a pumping system deployed in a chromatography system. There is a need for a method and apparatus for detecting and compensating for leaks within a pump. There is a need for a method and apparatus for attaining and retaining desired flow rates. There is a need for a method and apparatus for calibrating flow sensors. There is a need for a method and apparatus for avoiding channel cross over in multiple channel pumping systems. There is a need for a method and apparatus for optimizing delay volume in a pumping system. There is a need for a method and apparatus for optimizing the intake stroke in a pumping system. Lastly, there is a need for a pumping system with improved piston timing.

### DISCLOSURE

It is an object of the invention to provide an improved chromatography system. The object is solved by the independent claim(s). Further embodiments are shown by the dependent claim(s). A variety of methods and apparatus for operating a pumping system are presented. Among these methods and apparatus are a pumping apparatus with a variable concept for flow generation dependent on a required flow rate; a method for determining and compensating for leaks in piston pumps; a method for calibrating a mass flow sensor; a method for avoiding channel cross flow in multiple channel pumping systems; a pumping method and apparatus with optimized delay volume; a pumping method and apparatus with optimized intake stroke; and a pumping method and apparatus with improved piston timing.

Embodiments of the invention can be partly or entirely embodied or supported by one or more suitable software programs, which can be stored on or otherwise provided by any kind of data carrier, and which might be executed in or by any suitable data processing unit.

One embodiment of a pumping system may comprise: means for configuring the pumping system with at least one sensor means; means for sensing a flow rate of fluid in the pumping system in response to configuring the pumping system with at least one sensor means; and means for determining leaks in the pumping system in response to sensing the flow rate of the fluid.

One embodiment of a pumping system may comprise: means for configuring the pumping system with at least one flow sensor; means for reconfiguring the at least one flow sensor within the pumping system; and means for determining leaks in the pumping system in response to reconfiguring the pumping system with the at least one flow sensor.

One embodiment of a pumping system may comprise: means for characterizing the pumping system to determine leaks in the pumping system; means for metering fluid through the flow sensor; and means for determining a calibration factor in response to characterizing the pumping system to determine leaks and in response to metering fluid through the flow sensor.

One embodiment of a pumping system may comprise: a pumping unit means; a flow sensor means positioned after the pumping unit means; means for characterizing the pumping unit means; means for metering fluid from the pumping unit means through the flow sensor means; and means for determining a calibration factor in response to metering fluid from the pumping unit means through the flow sensor means.

One embodiment of a pumping system may comprise: a channel; an output; means for pumping fluid at a flow rate in the pumping system; means for determining if the flow rate is below a predefined threshold; means for operating at least one first flow sensor at the output of the pumping system if the flow rate is below a predefined threshold; and means for determining if the flow rate is above the predefined threshold; and means for operating at least one second flow sensor within the channel if the flow rate is above the predefined threshold.

One embodiment of a pumping system may comprise: at least one channel, the channel including pumping units and an output; means for pumping fluid at a flow rate in the channel; means for determining if the flow rate is below a predefined threshold; means for operating at least one first flow sensor at the output of the channel if the flow rate is below a predefined threshold; and means for determining if the flow rate is above the predefined threshold; means for operating at least one second sensor within the channel if the flow rate is above the predefined threshold, wherein the at least one second flow sensor is positioned between the pumping units.

One embodiment of a pumping system may comprise: a conveyance; a pressure sensor coupled to the conveyance; a chamber coupled to the conveyance; means for compressing fluid in the chamber; means for monitoring pressure on the conveyance in response to compressing the fluid in the chamber; and means for determining a leak in response to monitoring the pressure on the conveyance.

One embodiment of a pumping system may comprise: a conveyance; a flow sensor coupled to the conveyance and to a valve, the valve further coupled to a chamber including a piston disposed therein, the chamber coupled to the conveyance; means for closing the valve; means for performing an intake stroke with the piston; means for monitoring for flow of fluid with the flow sensor in response to closing the valve and in response to performing an intake stroke with the piston; and means for determining a leak in response to monitoring for the flow of the fluid.

One embodiment of a pumping system may comprise: a pumping unit, the pumping unit comprising a chamber, and a pressure sensor coupled to the chamber; means for pressurizing the chamber; means for testing pressure in the chamber in response to pressurizing the chamber; means for determining a leak in response to testing the pressure in the chamber; and means for compensating for the leak in response to determining the leak.

One embodiment of a pumping system may comprise: an intake tube; a pressure sensor coupled to the intake tube and a chamber coupled to the intake tube; means for filling the chamber with fluid by conveying fluid through the intake tube; means for monitoring pressure on the intake tube in response to conveying fluid on the intake tube; and means for determining if the pressure has dropped below a predefined level in response to monitoring pressure on the intake tube.

One embodiment of a pumping system may comprise: an intake tube; a conveyance; a switching valve coupling the intake tube to the conveyance; a flow sensor coupled to the conveyance and a chamber, the chamber including a piston disposed therein; means for closing the switching valve; means for attempting to convey fluid on the conveyance subsequent to closing the switching valve; means for measuring fluid flow with the flow sensor in response to attempting to convey the fluid on the conveyance; and means for determining a leak in response to measuring the fluid flow with the flow sensor.

One embodiment of a pumping system may comprise: a chamber including an outlet and a piston disposed therein; an outlet valve coupled to the outlet of the chamber; a flow sensor coupled to the outlet valve; means for closing the outlet valve; means for moving the piston upward in the chamber; means for measuring fluid flow with the flow sensor in response to moving the piston upward in the chamber; and means for determining a leak in response to measuring the fluid flow with the flow sensor.

One embodiment of a pumping system may comprise: a conveyance coupled to a pumping unit; means for conveying fluid on the conveyance, the fluid including discontinuities; and means for operating the pumping unit to limit the discontinuities in the fluid.

One embodiment of a pumping system may comprise: means for metering at a flow rate; means for determining a leak in response to metering at the flow rate; and means for compensating for the leak by metering at a new flow rate.

One embodiment of a pumping system may comprise: means for monitoring the pumping system with a flow sensor; means for determining a change in flow rate in response to monitoring the pumping system with the flow sensor; and means for identifying a leak in response to determining a change in the flow rate.

One embodiment of a pumping system may comprise: means for monitoring a flow rate; means for determining a leak rate in response to monitoring the flow rate; and means for compensating for the leak rate in response to determining the leak rate.

One embodiment of a pumping system may comprise: means for monitoring a flow rate; means for determining a leak rate in response to monitoring the flow rate; and means for adjusting the flow rate in response to determining the leak rate.

One embodiment of a pumping system may comprise: a first pumping unit capable of generating a first volume of fluid and a second pumping unit capable of generating a second volume of fluid, wherein the first volume of fluid has a relationship with the second volume of fluid; means for operating the first pumping unit; means for operating the second pumping unit; means for identifying a change in the relationship between the first volume of fluid and the second volume of fluid in response to operating the first pumping unit and in response to operating the second pumping unit; and means for identifying a leak in response to identifying the change in the relationship between the first volume of fluid and the second volume of fluid.

One embodiment of a pumping system may comprise: first and second pumping units coupled together and a flow sensor located between the first and second pumping units; means for metering a flow rate; means for measuring a flow rate; means for comparing the measured flow rate to the metered flow rate; and means for determining a leak in response to comparing the measured flow rate to the metered flow rate.

One embodiment of a pumping system may comprise: a first pumping unit comprising a first chamber, a pressure sensor coupled to the first chamber; a second pumping unit including a second chamber, the second pumping unit in series with the first pumping unit; a valve positioned between the first pumping unit and the second pumping unit; means for delivering solvent with the second pumping unit; means for intaking solvent into the first chamber; means for compressing the solvent in the first chamber; means for opening the outlet valve in response to compressing the solvent in the first chamber while the second pumping unit is delivering solvent; means for delivering a small amount of solvent with the first pumping unit until the second pumping unit must be refilled; and means for measuring system pressure in response to delivering solvent with the first pumping unit and opening the outlet valve.

One embodiment of a pumping system may comprise: a first channel transporting first fluid; a second channel transporting second fluid; a waste output having a valve coupled to the first channel and coupled to the second channel via a conveyance, the waste output adapted for transporting waste, a system output coupled to the first channel via the conveyance and coupled to the second channel, the system output adapted for transporting system fluid; means for opening the valve; means for flushing the second channel in response to opening the valve; means for flushing the first channel in response to flushing the second channel; means for closing the valve in response to flushing the first channel; and means for pumping solvent from the first channel through the conveyance.

One embodiment of a pumping system may comprise: a first channel pumping first fluid; a second channel pumping second fluid; a system output coupled to the first channel and coupled to the second channel, the system output transporting system fluid in response to the first fluid and in response to the second fluid and a flow sensor coupled to the output of the first channel to measure the flow of the first fluid; means for stopping the first channel pumping the first fluid; means for sensing backflow with the flow sensor in response to stopping the first channel pumping the first fluid; and means for determine a leak in response to sensing the backflow.

### BRIEF DESCRIPTION OF THE DRAWINGS

Fig. 1 displays a block diagram of a prior art chromatography system.

Fig. 2 displays a block diagram of an embodiment of an isocratic pumping system with additional liquid selection.

Fig. 3 displays a block diagram of an embodiment of a pump control chip.

Fig. 4 displays a block diagram of an embodiment of a computer.

Fig. 5 displays a block diagram of an embodiment of a high-pressure gradient pumping system.

Fig. 6 displays a block diagram of an embodiment of a low-pressure gradient pumping system.

Fig. 7 displays a block diagram of an embodiment of a high-pressure gradient pumping system.

Fig. 8 displays a block diagram of an embodiment of a high-pressure gradient pumping system.

Fig. 9A displays a schematic diagram of a pumping system, such as a single-channel pumping system, where the pumping units are positioned in series.

Fig. 9B displays a schematic diagram of a channel of a pumping system with pumping units configured in parallel.

Fig. 10 displays a schematic diagram of a high-pressure gradient pumping system, such as a dual-channel pumping system.

Fig. 11A displays a flow diagram depicting a method of determining leaks in a pumping system.

Fig. 11B displays a flow diagram depicting a method of reconfiguring sensors in a pumping system.

Fig. 11C displays a flow diagram depicting a method of calibrating sensors.

Fig. 11D displays a graph of voltage versus flow rate.

Fig. 11E displays a flowchart depicting a method of producing a variable flow rate.

Fig. 12 displays a schematic of a pumping unit including a flow sensor and a pressure sensor(s).

Fig. 12A displays a method of identifying and compensating for leaks using a pressure sensor.

Fig. 12B displays a method of identifying and compensating for leaks using a flow sensor.

Fig. 12C displays a method of identifying and compensating for leaks using a pressure sensor.

Fig. 12D displays a method of identifying a blocked inlet tube.

Fig. 12E displays a method of identifying and compensating for leaks using a pressure sensor.

Fig. 12F displays a flow diagram that depicts a method of detecting a leak in a proportioning valve.

Fig. 12G displays a flow diagram that depicts a method of testing the tightness of a proportioning valve.

Fig. 13 displays a schematic of a single-channel pumping system including flow sensors.

Fig. 13A displays an embodiment of a flow diagram depicting a method of detecting a leak in a gradient valve.

Fig. 13B displays an embodiment of a flow diagram depicting a method of detecting a leak in an inlet valve.

Fig.13C displays a flow diagram of a method of performing a smooth intake stroke.

Fig. 13D displays a graph depicting a method of metering the intake flow to adjust for discontinuities in the intake flow.

Fig. 14 displays a dual-channel pumping system including flow sensors.

Fig. 14A displays a flow diagram depicting a method of operating a pumping system.

Fig. 15A displays a flow diagram depicting a method of determining a leak in a piston.

Fig. 15B displays a graph depicting the flow variations within a channel.

Fig. 15C displays a flow diagram depicting a method of determining the piston velocity required to produce the nominal (desired) flow rate.

Fig. 15D displays a flow diagram depicting a method of monitoring compression phases in a pumping chamber and monitoring the system pressure of a chromatography system.

Fig. 16 displays a schematic of a dual-channel pumping system including a flow sensor and a pressure sensor.

Fig. 16A displays a flowchart depicting a method of flushing a multi-channel pumping system.

Fig. 16B displays a flowchart depicting a method of eliminating cross-channel flow in a multi-channel pumping system.

### DETAILED DESCRIPTION OF EMBODIMENTS

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

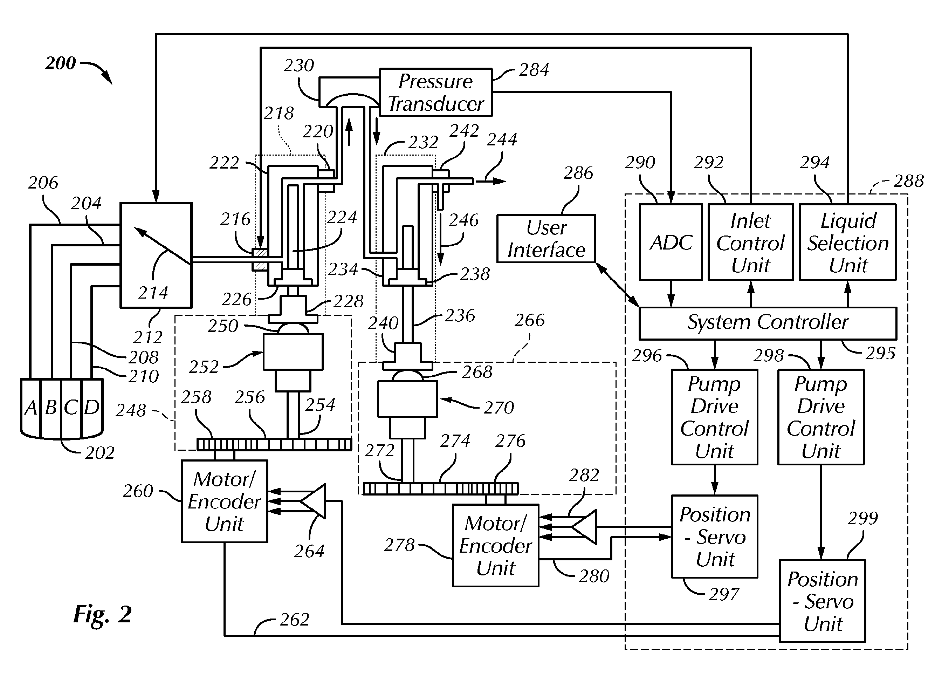

Fig. 2 displays a block diagram of an embodiment of an isocratic pumping system with additional liquid selection at a pump inlet. It should be appreciated that the methods presented in the instant application may be implemented on a pumping system, such as a pumping system 200 displayed in Fig. 2. The pumping system 200 displays two pumping units 218 and 232 positioned in series. Pumping unit 218 includes an inlet valve 216 on an input side of pumping unit 218 and an outlet valve 220 on an output side of the pumping unit 218. Pumping unit 232 includes a purge valve 242 on an output side of the pumping unit 232.

A liquid reservoir 202 stores liquids denoted as A, B, C, and D. Input conveyance 204, 206, 208, and 210 provide a pathway and convey liquid A, B, C, or D from the liquid reservoir 202 to a liquid selection valve 212. A selector 214 selects which input conveyance (204, 206, 208, 210) is connected to the inlet valve 216. The liquid selection valve 212 is controlled by a liquid selection unit 294. It should be appreciated that in another embodiment of the present invention, a low-pressure gradient pumping system may be implemented by implementing the liquid selection valve 212 as a proportioning valve and implementing the liquid selection unit 294 as a gradient control unit.

A pumping unit 218 is shown. The pumping unit 218 includes a chamber 222, a piston 224, a seal 226, and a piston holder 228. Liquid A, B, C, or D is each drawn through an inlet valve 216 into the chamber 222 by a downward motion (i.e., intake stroke) of the piston 224. An outlet valve 220 throttles a pathway to a damper unit 230. It should be appreciated that while the damper unit 230 and a pressure transducer 284 are shown in pumping system 200, either the damper unit 230 and/or the pressure transducer 284 may be removed.

Liquid A, B, C, or D flows through the damper unit 230 to a pumping unit 232. The pumping unit 232 includes a chamber 234, a piston 236, a seal 238, and a piston holder 240. The piston 236 performs an intake stroke and draws liquid A, B, C, or D into the chamber 234. On a delivery stroke (i.e., upward movement) of the piston 236, liquid A, B, C, or D leaves the chamber 234 and is pushed through a valve, such as a purge valve 242. The purge valve 242 provides a pathway 244 to the system or a pathway 246 to waste. It should be appreciated that throughout the disclosure, while a specific pumping unit (i.e., 218, 232) may be described and discussed, various modifications of the pumping unit (i.e., 218, 232) may be performed and still remain within the scope of the present invention. In addition, while pumping units with chambers and pistons are implemented, other types of pumping units, such as pumping units with impellers, etc., are anticipated and are within the scope of the present invention. In addition, valves, such as inlet valves 216, outlet valve 220, or purge valve 242, may be implemented as active valves or passive valves.

In one embodiment, a gear system 248 includes a ball 250, an actuator 252, a shaft 254, a gear 256, and a gear 258. The ball 250 is housed in the actuator 252 and is in contact with the piston holder 228. The shaft 254 causes the ball 250 and the piston 224 to move upward (i.e., delivery stroke) and downward (i.e., intake stroke), as the gear 256 is rotated clockwise and then counterclockwise. In one embodiment, the gear 256 is a toothed gear, which is interlocked with a gear 258, which is connected to a motor/encoder unit 260. In one embodiment, a motor/encoder unit 260 is a unit that includes a combined motor and encoder coupled to the motor. A position-servo unit 299 communicates information to the motor/encoder unit 260 through a position-servo interface 264 and receives feedback as shown by 262.

A gear system 266 includes a ball 268 positioned within an actuator 270 and makes contact with the piston holder 240. A shaft 272 causes the ball 268 and the piston 236 to reciprocate in an upward and downward motion as a gear 274 is rotated in the clockwise and counterclockwise direction. The gear 274 is interlocked with a gear 276, which is connected to a motor/encoder unit 278. A position-servo unit 297 communicates information to the motor/encoder unit 278 through a position-servo interface 282 and receives feedback as shown by 280.

In one embodiment, a pump control chip 288 is implemented to control the pumping system 200. A position-servo unit 299 is controlled by a pump drive control unit 298. The position-servo unit 299 controls the motor/encoder unit 260 through the position-servo interface 264 and receives feedback through a feedback 262. The position-servo unit 297 controls the motor/encoder unit 278 through a position-servo interface 282 and receives feedback on the position and movement of the motor/encoder unit 278 through a feedback 280.

The pump drive control unit 296 and the pump drive control unit 298 interface with an analog-to-digital converter (ADC) 290, an inlet control unit 292, and a liquid selection unit 294 through a system controller 295. In addition, end users may use a user interface 286 to interface with the pumping system 200 through the system controller 295.

The ADC 290 interfaces and controls a pressure transducer 284, an inlet control unit 292 interfaces and controls the inlet valve 216, and the liquid selection unit 294 interfaces and controls the liquid selection valve 212. A more thorough explanation of the operation of the pumping system 200 may be found in European Patent EP0309596, entitled "Pumping apparatus for delivering liquid at high pressure," published April 05, 1989, which is herein incorporated by reference.

During operation, one of the liquid containers A, B, C, or D, shown collectively as liquid reservoir 202, is connected to the inlet valve 216 so that liquid A, B, C, or D can be delivered. This can be accomplished by either holding the selector 214 in a fixed position so that the liquid selection valve 212 is connected to one of the liquid containers A, B, C, or D in the liquid reservoir 202. Alternatively, the liquid selection valve 212 may be operated as a proportioning valve by moving the selector 214 across each input conveyance 204, 206, 208, and 210 so that one of the liquid containers A, B, C, or D proportions the amount of liquid A, B, C, or D drawn in from the liquid reservoir 202.

During a start-up period, the piston 224 is moved to a predefined distance referred to as the upper dead center (UDC). Under the control of the pump control chip 288, the piston 224 moves upward into the chamber 222 until the piston holder 228 abuts the lower end of the chamber 222. Once this end position has been reached, the piston 224 moves back downward a predefined distance. In addition, the corresponding angular setting of the motor/encoder unit 260 is registered and stored to recreate the movement of the piston 224 to the UDC position. In one embodiment, moving a piston, such as piston 224, to a predefined position based on the corresponding angular setting of the motor/encoder unit 260 is referred to as metering. In another embodiment of the present invention, any change of piston position or rate of motion, which results in a change in the flow rate of liquid entering and exiting a chamber, such as chamber 222, is considered metering. Metering may be performed by operating the piston 224 in combination with the motor/encoder unit 260 and the pump control chip 288. A similar procedure may be performed to record a piston position where the piston 224 moves to the lowest point in the chamber 222 required to draw liquid A, B, C, or D into the chamber 222. The lowest point is known as the lower dead center (LDC).

After identifying and setting the UDC position and the LDC position in both pumping units 218 and 232, the pumping system 200 begins nominal operation. The inlet valve 216 is opened under the control of the inlet control unit 292 and the piston 224 moves down from the UDC position to the LDC position. As the piston 224 moves from the UDC position to the LDC position, liquid A, B, C, or D is drawn into the chamber 222.

In one embodiment, an end user operates the position-servo interface 282 to specify a flow rate for the pumping system 200. A corresponding stroke length, which is defined as the distance the piston 224 travels between the UDC position and the LDC position, is then implemented in both pumping units 218 and 232 to accomplish the flow rate. Based on the flow rate input by the end user, the pump control chip 288 computes a corresponding stroke length using a predetermined mathematical relationship between flow rate and stroke length (or stroke volume, which is proportional to the stroke length). In an alternate embodiment of the present invention, the pump control chip 288 may be modified to permit a variable or changing selection of the stroke length or volume.

Once the piston 224 has traveled the stroke length determined by the pump control chip 288 from the UDC position to the LDC position, the motor/encoder unit 260 stops movement to stop the flow of liquid into the chamber 222 and the inlet valve 216 is closed. The motor/encoder unit 260 is restarted, moving in the opposite direction as before until it again reaches the UDC position. Once this is completed, the sequence repeats with the piston 224 reciprocating in the chamber 222 (i.e., moving down from the UDC position to the LDC position and back again). The piston 236 performs a similar sequence of motions and delivers liquid A, B, C, or D to other parts of the chromatography system (i.e., column) as shown by the pathway 244. In one embodiment of the present invention, the movement of piston 224 and piston 236 are synchronized in such a way that the flow through the system is constant over time.

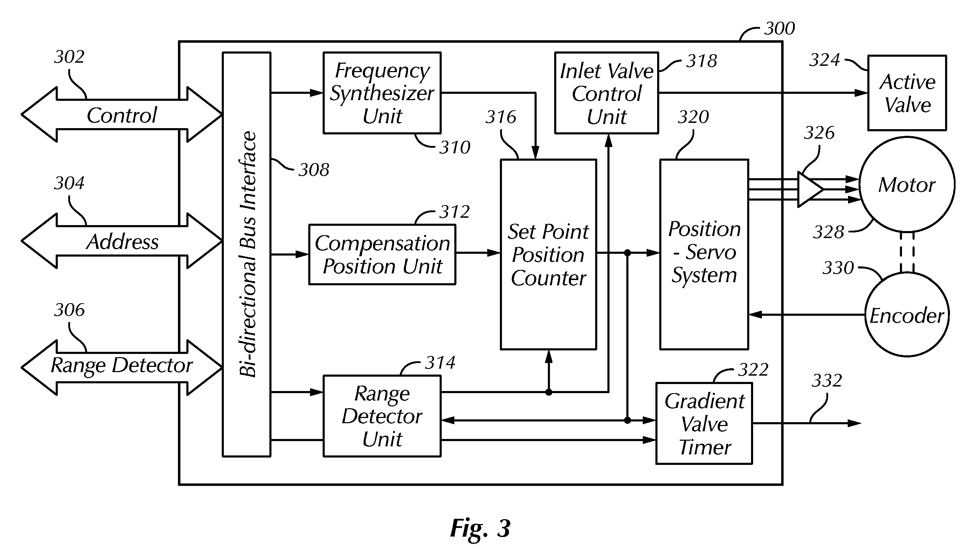

Fig. 3 displays a block diagram of a pump control chip. In one embodiment, pump control chip 300 represents an implementation of the pump control chip shown as 288 of Fig. 2. In another embodiment, the pump control chip 300 is implemented in a pumping system. In another embodiment, the pump control chip 300 may be implemented in a computer that interfaces with a pumping system. Input signaling, such as control signals 302, address signals 304, and range detector signals 306, are received in a bi-directional bus interface 308. The bi-directional bus interface 308 provides an interface between the input signaling (i.e., 302, 304, and 306) and a frequency synthesizer unit 310, a compensation position unit 312, and a range detector unit 314. The frequency synthesizer unit 310 provides frequency and counting direction information based on the movement of a piston. The compensation position unit 312 calculates the amount of piston movement necessary in the pre-compression phase of piston operation. The range detector unit 314 defines the upper dead center (UDC) and lower dead center (LDC) of the piston and is responsible for defining the total stroke length of a piston. The set point position counter 316 maintains the position of the piston. For example, if a piston reaches the UDC or LDC, a signal is sent to the set point position counter 316, the number of steps for pre-compression are transferred to the set point position counter 316 as soon as the piston begins to move upwards, etc.

The range detector unit 314 provides input to an inlet valve control unit 318, which controls an active valve 324. The range detector unit 314 and the set point position counter 316 provide input to a position-servo system 320, which interfaces with a motor 328 through a position-servo interface 326. The motor 328 is coupled to an encoder 330, which provides feedback to the position-servo system 320. Lastly, the set point position counter 316, the range detector unit 314, and the bi-directional bus interface 308 provide input to the gradient valve timer 322, which provides an output to the gradient valve as shown by 332. It should be appreciated that while a specific embodiment of a pump control chip 300 is displayed and discussed, a variety of embodiments may be implemented and still remain within the scope of the present invention.

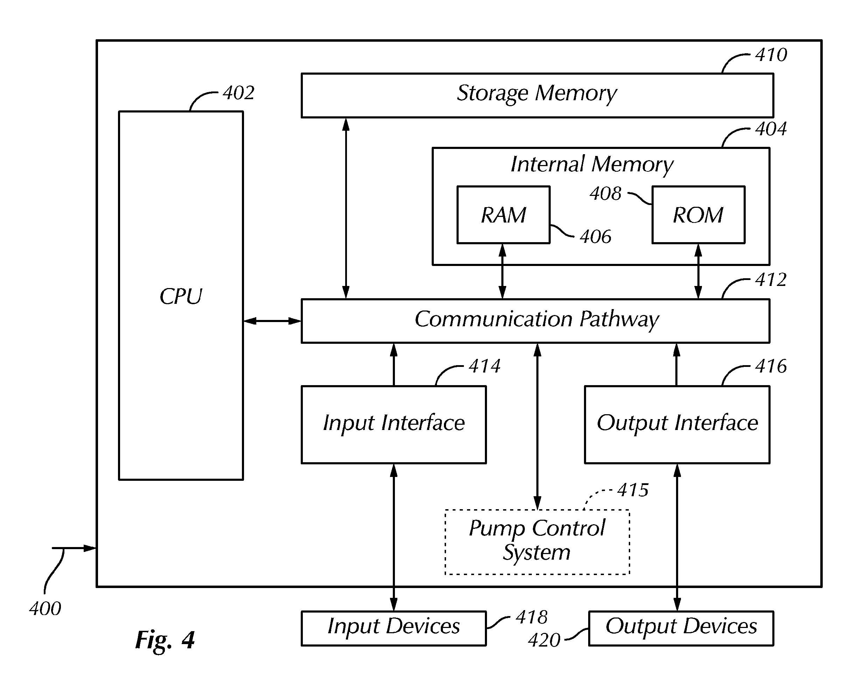

Fig. 4 displays a block diagram of a computer 400 implemented in accordance with the teachings of the present invention. A central processing unit (CPU) 402 functions as the brain of the computer 400. Internal memory 404 is shown. The internal memory 404 includes short-term memory 406 and long-term memory 408. The short-term memory 406 may be Random Access Memory (RAM) or a memory cache used for staging information. The long-term memory 408 may be a Read Only Memory (ROM) or an alternative form of memory used for storing information. In one embodiment of the present invention, a short-term memory, such as RAM 406, may be a display memory and used for storing a GUI for display on a monitor.

A storage memory 410, such as a hard drive, is also shown. A pump control system 415, such as the pump control chip 288 of Fig. 2 or pump control chip 300 of Fig. 3 is shown. In another embodiment, a pump control system 415 may be implemented using the other components of computer 400, such as CPU 402, storage memory 410, internal memory 404, communication pathway 412, input interface 414, output interface 416, etc. For example, the logic implementing the functionality of the pump control system 415 may be implemented in RAM 406 or in ROM 408. In yet another embodiment, input devices 418 and output devices 420 may be combined in a pump control system, such as pump control system 415. In this configuration, the pump control system 415 may be implemented in a pump system and controlled by computer 400. A communication pathway 412 is used to communicate information between short-term memory 406, long-term memory 408, storage memory 410, input interface 414, output interface 416, CPU 402, and the pump control system 415.

Input devices, such as a joystick, a keyboard, a microphone, a communication connection, servo motor inputs, inlet control inputs, outlet control inputs, gradient control inputs, ADC inputs, a mouse, etc., are shown as 418. The input devices 418 interface with the system through an input interface 414. Output devices, such as a monitor, speakers, communication connections, servo motor outputs, inlet control outputs, outlet control outputs, gradient control outputs, ADC outputs, etc., are shown as 420. The output devices 420 communicate with the computer 400 through an output interface 416.

In one embodiment of the present invention, routines used to operate a pumping system, such as the pumping system 200 of Fig. 2, may be stored in internal memory 404, storage memory 410, or in the pump control system 415. The CPU 402 may operate under the control of these routines and control the pumping system 200 of Fig. 2 by communicating with input devices 418 and output devices 420.

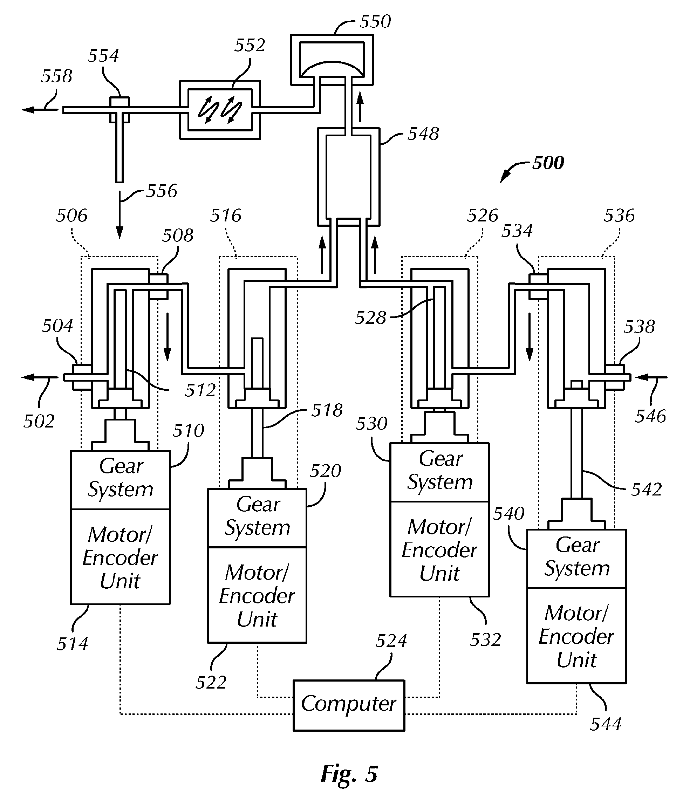

Fig. 5 displays a block diagram of an embodiment of a high-pressure gradient pumping system, such as a binary pumping system. Pumping system 500 includes two channels. The first channel includes a pumping unit 506 positioned in series (i.e., coupled to/in liquid communication) with a pumping unit 516. The second channel includes a pumping unit 526 positioned in series (i.e., coupled to/in liquid communication) with a pumping unit 536. The pumping unit 506 receives liquid through an inlet valve 504 and outputs liquid through an outlet valve 508. The pumping unit 536 receives liquid through an inlet valve 538 and outputs liquid through an outlet valve 534. Each pumping unit, such as 506, 516, 526, and 536, interfaces with a gear system 510, 520, 530, and 540, respectively. Further, each gear system 510, 520, 530, and 540 interfaces with a motor/encoder unit 514, 522, 532, and 544, respectively. Lastly, each motor/encoder unit (i.e., 514, 522, 532, and 544) is in communication with a computer 524. It should be appreciated that throughout the disclosure the gear system, such as gear system 510, and the motor/encoder unit, such as motor/encoder unit 514, may be considered a drive system used to drive the pumping unit, such as pumping unit 506. It should also be appreciated that alternative forms of pumping units, such as syringe pumping units, etc., and alternative forms of drive systems may be implemented in each of the disclosed embodiments and may still remain within the scope of the present invention. For example, any conventional system (i.e., drive system) used to drive a pumping apparatus is within the scope of the present invention.

The first channel and the second channel are in parallel with each other and liquid flows from the pumping unit 516 and the pumping unit 526 into a mixing chamber 548. The mixing chamber 548 is connected to a damper 550. The damper 550 is connected to a mixer 552, which in turn is connected to a purge valve 554. Liquid flows from the purge valve 554 out as waste as shown by 556 or out to the remainder of the chromatography system as shown by 558.

Each motor/encoder unit (i.e., 514, 522, 532, and 544) is connected to a computer 524. As a result, each pumping unit (i.e., 506, 516, 526, and 536) may be controlled. In one embodiment of the present invention, metering of liquid and delivery of the liquid to the chromatography system are performed by individually controlling the operation of each pumping unit (i.e., 506, 516, 526, and 536) with the motor/encoder unit (i.e., 514, 522, 532, and 544) in conjunction with the computer 524.

During operation, liquid flows from the liquid reservoirs as shown by 502 and 546 through an inlet valve 504 and an inlet valve 538, respectively. Each motor/encoder unit (i.e., 514, 522, 532, and 544) interfaces with a gear system (i.e., 510, 520, 530, and 540) to individually operate each pumping unit (i.e., 506, 516, 526, and 536). For example, motor encoder unit 514 interfaces with gear system 510 to individually control pumping unit 506. Motor/encoder unit 522 interfaces with gear system 520 to individually control pumping unit 516. Motor/encoder unit 532 interfaces with gear system 530 to individually control pumping unit 526. Lastly, motor/encoder unit 544 interfaces with gear system 540 to individually control pumping unit 536.

In one embodiment, the motor/encoder unit 514 and the motor/encoder unit 522 are synchronized via computer 524 to enable a piston 512 in the pumping unit 506 and a piston 518 in the pumping unit 516 to operate at variable speeds relative to each other. In one embodiment, piston 512 may operate at some multiple of piston 518. For example, piston 512 may operate at continuous multiple of 2X, 4X, 7X, etc. of piston 518. In an alternative embodiment, piston 512 may operate at varying multiple of piston 518. It should also be appreciated that the piston (i.e., 512, 518, 528, and 542) in each pumping unit (i.e., 506, 516, 526, 536) may operate at an equal speed, a speed that is a continuous multiple or varying multiple relative to each other. Operating a pumping unit relative to another pumping unit controls and/or manages the metering of liquid into and out of each pumping unit (i.e., 506, 516, 526, 536).

In one embodiment, during operation, liquid enters the pumping unit (i.e., 506, 516, 526, 536) in the bottom of a chamber and leaves the unit close to the top of a chamber. However, it should be appreciated that in alternate embodiments, liquid may enter and exit the chamber at different locations. In one embodiment, each chamber includes a piston, which has an outer diameter, which is smaller than the inner diameter of the chamber. As a result, liquid can fill the gap in between the outer diameter of the piston and the inner diameter of the chamber. In one embodiment, a piston has a stroke volume in the range of 20-100 ul as a function of the flow rate. A pump chip located in the computer 524 controls the flow rates in a range of nano-liters to milliliters. However, it should be appreciated that a wide range of stroke volumes and flow rates may be implemented and remain within the range of the present invention.

During operation, the pumping system 500 performs an initialization procedure to determine the upper dead center (UDC) and the lower dead center (LDC) for each piston (i.e., 512, 518, 528, and 542). In addition, during initialization, motor/encoder unit (i.e., 514, 522, 532, 544) are monitored to determine feedback movements, reference position signals are monitored, and assemblies are tested and monitored. Each piston (i.e., 512, 518, 528, and 542) moves upward slowly into the mechanical stop of the chamber and from there it moves back a defined path length. The computer 524 stores these piston positions in memory. After this initialization, the pumping system 500 starts operation with set parameters for each pumping unit (i.e., 506, 516, 526, and 536) in each channel.

Each inlet valve, such as 504 and 538, is opened. The piston 512 in the pumping unit 506 and the piston 542 in the pumping unit 536 each perform an intake stroke to draw liquid into the pumping unit 506 and 536, respectively. At the same time, pistons 518 and 528 in the pumping units 516 and 526 move upward delivering liquid to the mixing chamber 548. After a controller-defined stroke length (depending on the flow rate), each motor/encoder unit (i.e., 514, 522, 532, and 544) is stopped and the inlet valves 504 and 538 are closed. The direction of each motor/encoder unit (i.e., 514, 522, 532, and 544) is reversed and pistons 512 and 542 move upward until they reach the stored upper limit (i.e., UDC), and at the same time, pistons 518 and 528 move downward.

The sequence repeats itself moving the pistons (i.e., 512, 518, 528, and 542) up and down between the two limits (i.e., UDC and LDC). During the upward movement of the pistons 512 and 542, the liquid in pumping unit 506 and 536 is pressed through the outlet valves 508 and 534 into the pumping units 516 and 526. The pistons 518 and 528 each draw in a portion of the volume displaced by the pistons 512 and 542 and the remaining volume is directly delivered to the system. During the drawing stroke of the pistons 512 and 542, the pistons 518 and 528 deliver the drawn volume into the system.

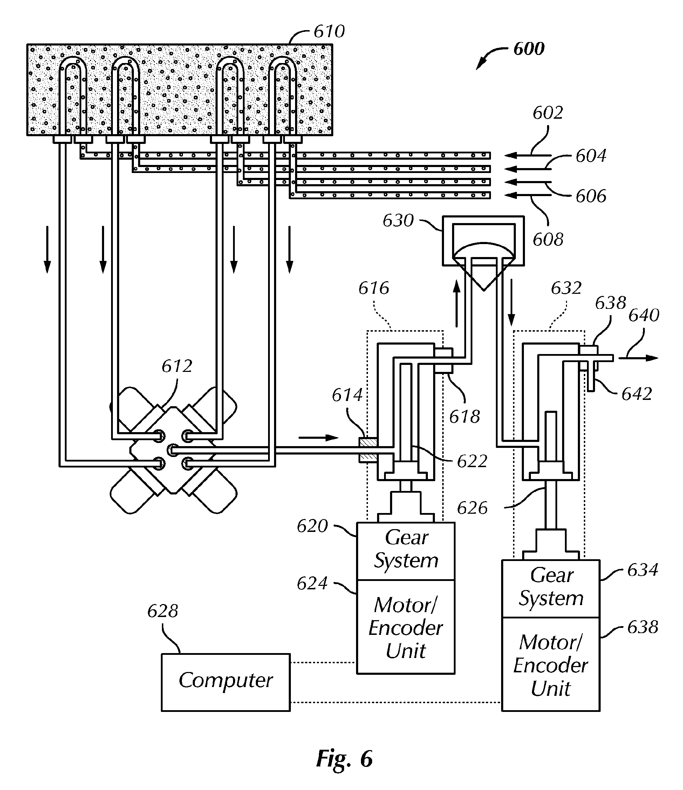

Fig. 6 displays a block diagram of an embodiment of a low-pressure gradient pumping system, such as a quaternary pumping system. Pumping system 600 includes two pumping units (616, 632) positioned in series. Liquids 602, 604, 606, and 608 are processed through a vacuum chamber 610 and through a proportioning valve 612. The proportioning valve 612 is in series with a pumping unit 616, which is in series with a damper unit 630, which is further in series with a pumping unit 632. A purge valve 638 provides an outlet to the system as shown by 640 and to waste as shown by 642. A gear system (i.e., 620, 634) and a motor/encoder unit (i.e., 624, 636) are connected to each pumping unit (i.e., 616, 632). Each motor/encoder unit (i.e., 624, 636) is coupled to a computer 628, which controls each of the pumping units (i.e., 616, 632).

The pumping system 600 is based on a dual-pump configuration. Metering of liquid and delivery are regulated by operating each pumping unit (i.e., 616, 632) individually using the gear system (i.e., 620, 634), the motor/encoder unit (i.e., 624, 636), and the computer 628. Degassing of liquids is performed in a vacuum chamber 610 and liquid compositions are generated by a high-speed proportioning valve 612. In one embodiment, the pumping unit 616 includes an active inlet valve 614 and an outlet valve 618. A damper unit 630 is connected between the two pumping units (i.e., 616 and 632).

When turned on, the pumping system 600 runs through an initialization procedure to determine the upper dead center (UDC) of a piston 622 in the pumping unit 616. The piston 622 moves slowly upward into the mechanical stop of the chamber and from there it moves back a predetermined path length. The computer 628 stores the position of piston 622 in memory. The lower dead center (LDC) varies as a function of the flow rate, stroke length, etc. After initialization, the pumping system 600 starts operation with the parameters acquired during the initialization procedure. The active inlet valve 614 is opened and the down moving piston 622 draws liquid into the chamber. At the same time, the piston 626 is moving upward delivering liquid into the system. After a controller-defined stroke length (depending on the flow rate), the motor/encoder unit 624 is stopped and the active inlet valve 614 is closed. The motor/encoder unit 624 is reversed and moves the piston 622 up until it reaches the stored upper limit and at the same time, a second motor/encoder unit 638, which controls the piston 626, moves the piston 626 downward. The sequence then repeats itself with the two pistons (i.e., 622 and 626) moving up and down between the two limits (i.e., reciprocating). During the up movement of the piston 622, the liquid in the chamber is delivered through the outlet valve 618 into the damper unit 630. The piston 626 draws in a portion of the volume displaced by the piston 622 from the damper unit 630 and the remaining amount of the volume is delivered to the system. During the intake stroke (i.e., drawing stroke) of the piston 622, the piston 626 delivers the drawn volume to the system as shown in 640. For liquid compositions that require percentages of liquids 602, 604, 606, and 608, the computer 628 controls and divides the length of the intake stroke into fractions and coordinates with the proportioning valve 612 to connect the specified liquid channel to the pumping units (i.e., 616, 632) to acquire the liquid in the proper percentages.

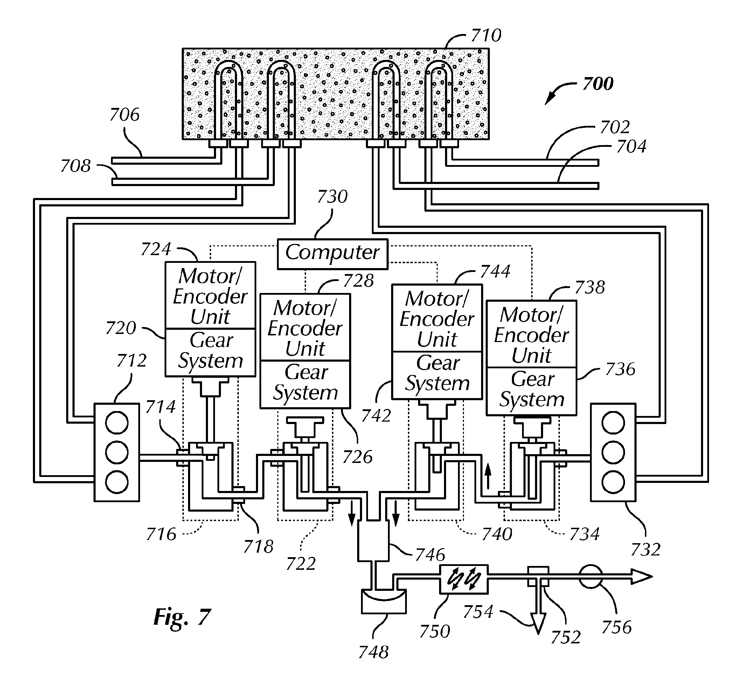

Fig. 7 displays a block diagram of a pumping system, such as a capillary pumping system. In Fig. 7, liquid flows into a pumping system 700 through a conveyance or inlet tubes as shown by 702, 704, 706, and 708. The liquid flows through a vacuum chamber 710. The liquid then flows through a solvent selection valve (SSV) 712 and a solvent selection valve (SSV) 732. The SSV 712 is in series with a pumping unit 716, which includes an inlet valve 714 and an outlet valve 718. The pumping unit 716 is controlled by a gear system 720, which is connected to a motor/encoder unit 724. The pumping unit 716 is in series with a pumping unit 722, which is controlled by a gear system 726 that is connected to a motor/encoder unit 728.

The SSV 732 is connected to a pumping unit 734, which is connected to a gear system 736, which interfaces with a motor/encoder unit 738. A pumping unit 740 is connected to a gear system 742, which is connected to motor/encoder unit 744. The pumping unit 722 and the pumping unit 740 are connected to a mixing chamber 746. The mixing chamber 746 is in series with a damper 748, which is in series with a mixer 750. A variable nozzle 752 is positioned in series with the mixer 750. The variable nozzle 752 controls the split ratio of the total flow between the flow of the flow sensor 756 and the flow to waste 754. The flow sensor 756 is positioned on the output of the pumping system 700.

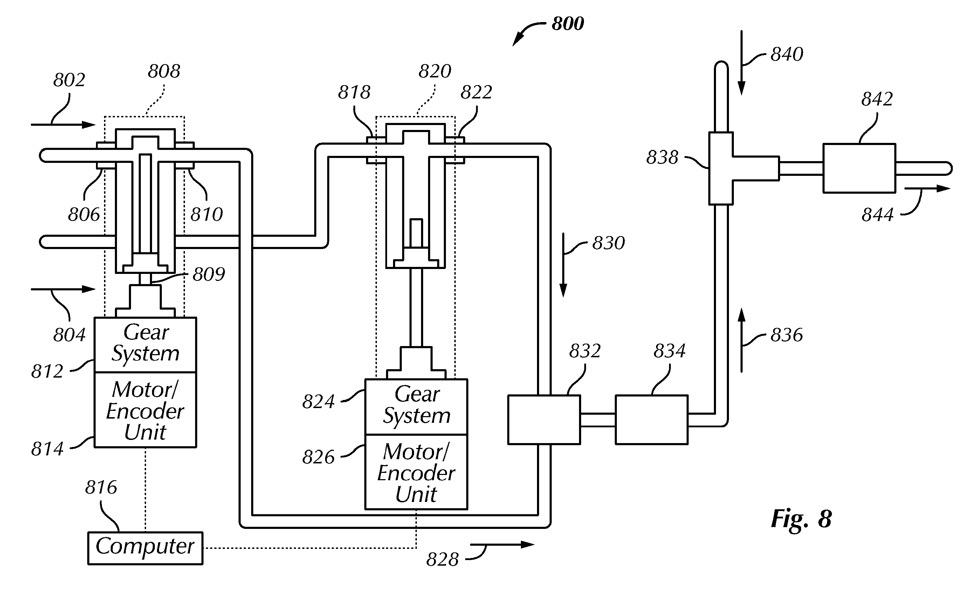

Fig. 8 displays a block diagram of an embodiment of a high-pressure gradient pumping system, such as a preparative pumping system. To reduce the complexity of the high-pressure gradient pumping system 800, a single channel is depicted in Fig. 8. The liquid 802 is input into the pumping unit 808, which is coupled to an inlet valve 806 and an outlet valve 810. In addition, a liquid 804 is input into a pumping unit 820, which is coupled to an inlet valve 818 and outlet valve 822. The pumping unit 808 interfaces with a gear system 812, which is controlled by a motor/encoder unit 814.

In one embodiment of the high-pressure gradient pumping system 800, the pumping unit 820 interfaces with a gear system 824, which is controlled by a motor/encoder unit 826. The piston 809 produces output shown as 828. The pumping unit 820 produces output shown as 830. The output 828 and the output 830 combine in a mixer 832. The mixer 832 is in series with a purge valve 834. The purge valve 834 is in series with a T-junction 838. The T-junction 838 also receives liquid 840 from a second channel (not shown) of the pumping system 800. It should be appreciated that Fig. 8 displays one channel of a pumping system 800. A second channel of the pumping system 800, which is not shown, replicates the first channel shown in Fig. 8. The output of the second channel, liquid 840 is shown. A mixer 842 is in series with the T-junction 838 and mixes liquid 840 before the liquid 840 is output to the column as shown by 844.

In another embodiment of the high-pressure gradient pumping system 800, the high-pressure gradient pumping system 800 is implemented without the gear systems (i.e., 812, 824). In an alternative configuration, the pistons are coupled and driven by an encoder controlled motor.

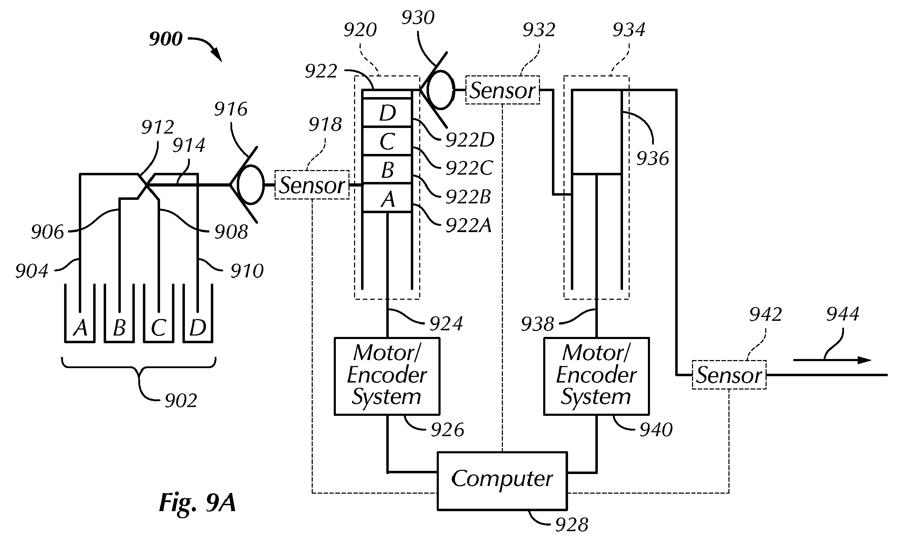

Fig. 9A displays a schematic diagram of a pumping system, such as a single-channel pumping system, where the pumping units are positioned in series. In one embodiment, the schematic diagram of pumping system 900 may represent a low-pressure gradient pumping system, where mixing occurs prior to the pumping units. In one embodiment, the switch 912 may represent a selection switch. In another embodiment, the switch 912 may represent a proportioning valve. It should be appreciated that the schematic diagram shown in Fig. 9A may be used to represent an isocratic pump as shown in Fig. 2, a single channel of a binary pump as shown in Fig. 5, a quaternary pump as shown in Fig. 6, a single channel of a capillary pump as shown in Fig. 7, or a preparative pump as shown in Fig. 8. It should also be appreciated that the methods presented in this application may be implemented on each of these pumping system configurations and, therefore, implementing any one of the methods presented in the instant application on any one of the pumping system configurations is within the scope of the present invention.

A variety of conventions have been employed in presenting the instant application. Throughout the instant application many figures include components that are outlined with dashed lines. Components outlined with dashed lines are used to display where the components may be positioned within the pumping system. However, each component may not be used in every configuration. For example, the pumping system 900 includes flow sensor 918, flow sensor 932, and flow sensor 942. Each flow sensor (i.e., 918, 932, 942) is outlined with dashed lines. Therefore, some of the methods presented below may utilize one of the flow sensors (i.e., 918, 932, 942) or a combination of the flow sensors (i.e., 918, 932, 942). For example, a method may utilize flow sensors 918, 932, or 942. In the alternative, a method may utilize a combination of flow sensors 918 and 932, 932 and 942, 918 and 942, or 918, 932, and 942. To identify which components are configured and/or implemented in the pumping system 900 during the discussion of a method operating on the pumping system 900, referencing text explaining the method will identify the components that are configured and operating in the pumping system 900 during the performance of the method.

Throughout the course of the application, pumping units, such as 920 and 934, are also outlined with dashed lines. The dashed lines presented around the pumping units (i.e., 920, 934) are provided to refer to the pumping units (i.e., 920, 934) with a single label (i.e., pumping unit). Although the methods presented in the instant application operate with at least two pumping units, variations and modifications of the method may be performed to work with a single pumping unit and are still within the scope of the present invention. Any discussion of methods that utilize pumping units will identify the pumping unit configuration.

Fig. 9A displays two pumping units (i.e., 920, 934) in series. In one embodiment, the two pumping units (i.e., 920, 934), which are positioned in series comprise a channel. Further, as depicted in Fig. 9A, an inlet valve 916 is in series with a flow sensor 918 which is in series with pumping unit 920. Further, outlet valve 930 is in series with flow sensor 932, which is in series with pumping unit 934. Lastly, flow sensor 942 is in series with pumping unit 934. As mentioned previously, flow sensors 918, 932, and 942 are represented in dashed lines, which depicts that different combinations of flow sensors 918, 932 and 942 may be implemented when performing the methods presented in the instant applications. Therefore, a specific flow sensor (i.e., 918, 932, and 942) will be discussed and described when the flow sensor is configured and operating during the performance of the method.

Fig. 9A displays the schematic diagram of a pumping system 900, which includes a variety of liquids (i.e., A, B, C, D) stored in a liquid reservoir 902. Each liquid (i.e., A, B, C, D) is conveyed through a conveyance 904, 906, 908, and 910 to a switch 912. When the switch 912 is implemented as a proportioning valve, the liquids (i.e., A, B, C, D) are mixed. The liquids (i.e., A, B, C, D) are then drawn through an inlet valve 916 into a pumping unit 920. The pumping unit 920 includes a chamber 922 and a piston 924, which performs a reciprocating motion (i.e., performs a piston stroke which consist of an intake stroke and a delivery stroke). An outlet valve 930 is in series with the pumping unit 920. A flow sensor 932 is in series with the outlet valve 930. A pumping unit 934 is in series with the flow sensor 932, which is in series with the outlet valve 930. The pumping unit 934 includes a chamber 936 and a piston 938. Throughout the discussion of the figures in the present invention, inlet valves and outlet valves will be described and discussed. It should be appreciated that the inlet valves, such as inlet valve 916 and the outlet valves, such as outlet valve 930, may be implemented as active valves or passive valves. In addition, the flow sensors, such as flow sensor 918, may be positioned before the inlet valve 916 or after the inlet valve 916 and the flow sensor 932 may be positioned before the outlet valve 930 or after the outlet valve 930. A wide variety of flow sensors may be implemented in accordance with the teachings of the present invention. One specific flow sensor that may be implemented in the present invention is flow sensor model SLG 1430 implemented by Sensirion, Switzerland.

A motor/encoder system (i.e., drive system) 926 and a motor/encoder system (i.e., drive system) 940 each include the gears (i.e., gear system), the motor, and the encoders (i.e., motor/encoder system) required to individually operate the pumping unit 920 and the pumping unit 934, respectively. A computer 928 is coupled to both the motor/encoder system 926 and the motor/encoder system 940.

During initialization, procedures are performed to identify the upper dead center (UDC) and lower dead center (LDC) of the piston 924 and piston 938 using the motor/encoder system (i.e., 926, 940). Additional activities, such as opening and closing the inlet valve 916 and the outlet valve 930, may also be performed during initialization.

During operation, the inlet valve 916 is opened. An intake stroke of the piston 924 draws liquid (i.e., A, B, C, D) through the switch 912 and fills the chamber 922. In one embodiment, liquids 922A, 922B, 922C, and 922D are drawn into the chamber 922 and correspond to the liquid A, B, C and D stored in liquid reservoir 902. Various percentages of liquids (i.e., A, B, C, D) are mixed together when the switch 912 is implemented as a proportioning valve. On the delivery stroke of the piston 924, liquid (i.e., 922A, 922B, 922C, 922D) is compressed and forced out of the chamber 922 through the outlet valve 930. The motor/encoder system 926 in conjunction with computer 928 are used to adjust the intake and delivery stroke of the piston 924 to adjust the metering (i.e., intake and expulsion) of liquid (i.e., 922A, 922B, 922C, 922D) from the chamber 922. In a similar manner, the motor/encoder system 940 in conjunction with computer 928 are used to adjust the intake and delivery stroke of the piston 938 to meter (i.e., adjust the intake and expulsion of liquid) from the chamber 936.

Metering is implemented using a number of alternative mechanisms. In one embodiment, metering is performed by individually controlling the pumping unit 920 with the motor/encoder system 926 and computer 928. In another embodiment, metering is accomplished by individually controlling the pumping unit 934 with the motor/encoder system 940 and the computer 928. In another embodiment, metering is performed by integrating and controlling the operation of the pumping units 920 and 934 with the motor/encoder systems 926 and 940 and computer 928. Lastly, metering may involve an integrated system operation controlling the flow rate of liquid throughout the entire pumping system 900 (i.e., single-channel pump). Metering in this context may include using various components in addition to the pumping unit 920 or the pumping unit 934. Therefore, metering using an integrated system may include using the inlet valve 916, the flow sensor 918, the pumping unit 920, the outlet valve 930, the flow sensor 932, the pumping unit 934, the flow sensor 942, and the output sensor 944, selectively or in combination to meter the flow of liquid through the pumping system 900.

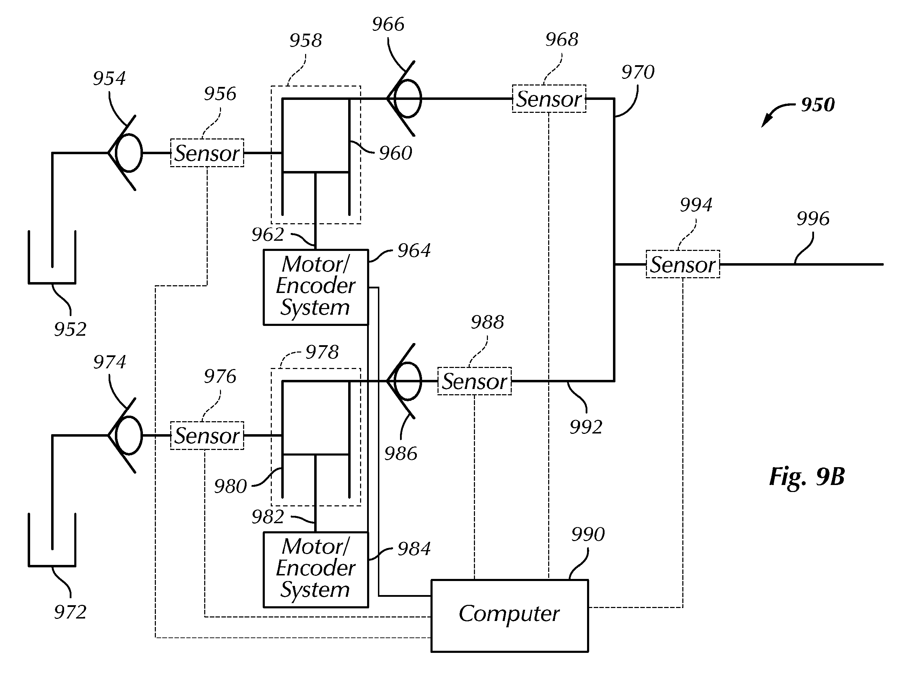

Fig. 9B displays the schematic diagram of a pumping system, such as a single channel of a pumping system with pumping units configured in parallel. Fig. 9B displays two pumping units (i.e., 958, 978) in parallel. In one embodiment, the two pumping units (i.e., 958, 978) are positioned in parallel and are implemented in a channel of pumping system 950. Inlet valve 954, flow sensor 956, pumping unit 958, outlet valve 966, and flow sensor 968 are positioned in series. Inlet valve 974, flow sensor 976, pumping unit 978, outlet valve 986, and flow sensor 988 are positioned in series. Flow sensor 994 is positioned in parallel with flow sensor 968. In addition, flow sensor 994 is positioned in parallel with flow sensor 988.

A liquid is conveyed from reservoir 952 through an inlet valve 954 and through a flow sensor 956 to the pumping unit 958. The pumping unit 958 is in series with the flow sensor 956. It should be appreciate that the flow sensor 956 may be configured before the inlet valve 954 or after the inlet valve 954. Liquid is drawn from the reservoir 952 into the pumping unit 958 during an intake stroke. The pumping unit 958 includes a chamber 960 and a piston 962, which performs a reciprocating motion (i.e., performs a piston motion which consists of a delivery stroke and an intake stroke). An outlet valve 966 is positioned in series with the pumping unit 958. A flow sensor 968 is in series with the outlet valve 966. It should be appreciated that the flow sensor 968 may be configured before the outlet valve 966 or after the outlet valve 966. An output 970 is also shown.

Liquid is conveyed from the reservoir 952 through an inlet valve 974 and through a flow sensor 976 to the pumping unit 978, which is in series with the flow sensor 976. It should be appreciate that the flow sensor 976 may be configured before the inlet valve 974 or after the inlet valve 974. Liquid is drawn from the reservoir 952 into the pumping unit 978 during an intake stroke. The pumping unit 978 includes a chamber 980 and a piston 982, which perform a reciprocating motion (i.e., performs a piston motion which consists of a delivery stroke and an intake stroke). An outlet valve 986 is positioned in series with the pumping unit 978. A flow sensor 988 is in series with the outlet valve 986. It should be appreciated that the flow sensor 988 may be configured before the outlet valve 986 or after the outlet valve 986. An output 992 is also shown. Both output 970 and output 992 connect at a channel output 996. A flow sensor 994 is positioned in the channel output 996.

A motor/encoder system 964 is connected to the pumping unit 958. The motor/encoder system 964 is controlled by a computer 990. A motor/encoder system 984 is connected to a pumping unit 978. The motor/encoder system 984 is controlled by the computer 990.

During initialization, procedures are performed to identify the upper dead center (UDC) and lower dead center (LDC) of the piston 962 and piston 982 using the motor/encoder system (i.e., 964, 984). Additional activities, such as opening and closing the inlet valve 954 and 974, and the outlet valve 966 and 986 may also be performed during initialization.

During operation, an inlet valve, such as 954 and/or 974, is opened. An intake stroke of a piston, such as 962 and/or 982, draws liquid from reservoir 952. The liquid is drawn through an inlet valve, such as 954 and/or 974, and through a flow sensor, such as 956 and/or 976, respectively. The liquid fills a chamber, such as 960 and/or 980, on the intake stroke. The piston 962 and/or 982 performs a delivery stroke and liquid stored in chambers 960 and 980 is compressed and forced out of the chambers 960 and 980 and through outlet valves 966 and 986, respectively. The liquid flows through flow sensors 968 and 988 to outputs 970 and 992. Outputs 970 and 992 combine at a channel output 996. The liquid flows through a flow sensor 994 positioned on the channel output 996. The motor/encoder system 964 and 984 in conjunction with computer 990 are used to adjust the intake and delivery stroke of the pistons 962 and 982, respectively, to adjust the metering (i.e., intake and delivery) of liquid from the chambers 960 and 980.

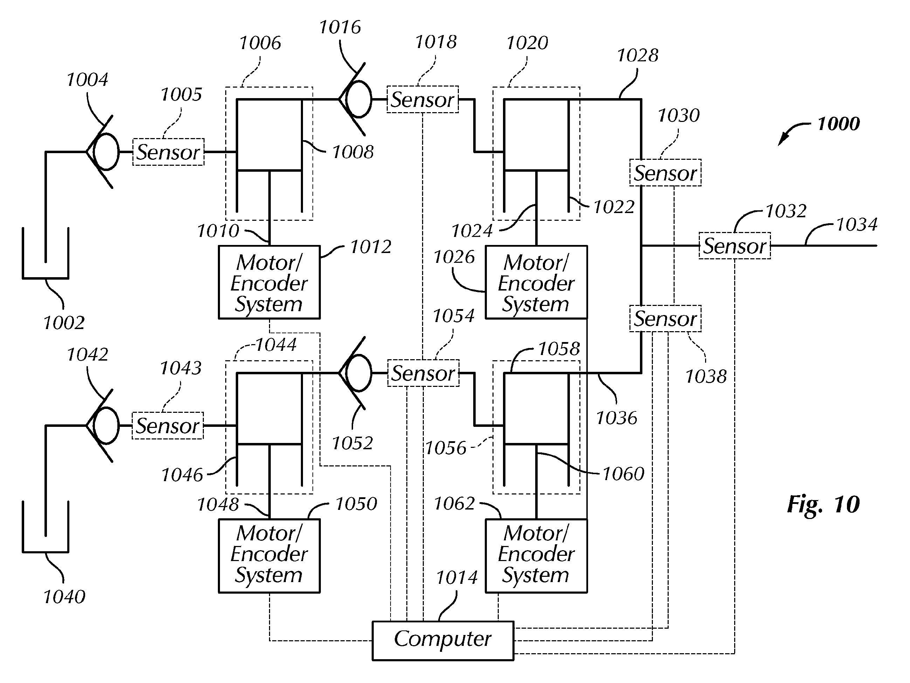

Fig. 10 displays a schematic diagram of a pumping system, such as a dual-channel pumping system. In one embodiment, pumping system 1000 may represent a high-pressure gradient pumping system, such as the pumping systems represented in Fig. 5 and Fig. 7. In a first channel, inlet valve 1004, flow sensor 1005, pumping unit 1006, outlet valve 1016, flow sensor 1018, pumping unit 1020, and flow sensor 1030 are positioned in series. In a second channel, inlet valve 1042, flow sensor 1043, pumping unit 1044, outlet valve 1052, flow sensor 1054, pumping unit 1056, and flow sensor 1038 are positioned in series. The first channel and the second channel are parallel to each other. The first channel and the second channel combined are in series with flow sensor 1032. It should be appreciated that although Fig. 10 displays a dual-channel pumping system with pumping units configured in series, the methods presented in the instant application may also be implemented in a dual-channel pumping system where the pumping units are positioned in parallel.

Pumping system 1000 includes a liquid stored in a liquid reservoir 1002. The liquid stored in the liquid reservoir 1002 is drawn through a flow sensor 1005 and through an inlet valve 1004 into a pumping unit 1006. The pumping unit 1006 includes a chamber 1008 and a piston 1010, which reciprocate upward and downward within the chamber 1008. On the intake stroke of the piston 1010, liquid fills the chamber 1008 and on the delivery stroke of the piston 1010, liquid is compressed and forced out of the chamber 1008. A motor/encoder system 1012 in conjunction with a computer 1014 are used to meter the intake and expulsion (i.e., flow) of liquid into and out of the chamber 1008 by adjusting (i.e., position, such as stroke length and/or timing) the upward and intake stroke of the piston 1010

An outlet valve 1016 is positioned in series with the pumping unit 1006. A flow sensor 1018 is positioned in series with the outlet valve 1016 (note: can be located before or after the outlet valve 1016) and detects the flow of liquid between the pumping unit 1006 and the pumping unit 1020. A piston 1024 operates within the chamber 1022. Liquid flows from the pumping unit 1006 to the pumping unit 1020. Liquid fills the chamber 1022 and on the delivery stroke of the piston 1024, liquid is forced out of the chamber 1022. In addition, in an alternate embodiment, liquid from chamber 1008 flows through chamber 1022 directly to channel output 1028 if piston 1024 is stationary or moving upwards. It should be appreciated that a variety of embodiments may be implemented and still remain within the scope of the present invention. A motor/encoder system 1026 in conjunction with the computer 1014 are used to meter (i.e., adjust the upward and intake stroke) the flow of liquid from the piston 1024.

The pumping system 1000 includes a liquid reservoir 1040. Liquid is drawn through flow sensor 1043 and through inlet valve 1042. The liquid is then drawn into a pumping unit 1044. The pumping unit 1044 includes a chamber 1046 and a piston 1048, which reciprocates upward and downward within the chamber 1046. On the intake stroke of the piston 1048, liquid fills the chamber 1046 and on the delivery stroke of the piston 1048, liquid is compressed and forced out of the chamber 1046. A motor/encoder system 1050 in conjunction with a computer 1014 are used to meter the flow of liquid into and out of the chamber 1046 by adjusting (i.e., position, such as stroke length and/or timing) the upward and intake stroke of the piston 1048 to adjust the intake and expulsion of liquid from the chamber 1046.

An outlet valve 1052 is positioned in series with the pumping unit 1044. A flow sensor 1054 is positioned in series with the outlet valve 1052 and detects the flow of liquid between the pumping unit 1044 and the pumping unit 1056, which is in series with the pumping unit 1044. A piston 1060 operates within the chamber 1058. Liquid flows from the pumping unit 1044 to the pumping unit 1056. Liquid fills the chamber 1058 on an intake stroke of piston 1060 and on the delivery stroke of the piston 1060, liquid is compressed and forced out of the chamber 1058. In addition, in an alternate embodiment, liquid from chamber 1046 flows through chamber 1058 directly to channel output 1036 if piston 1060 is stationary or moving upwards. As previously stated, it should be appreciated that a variety of embodiments may be implemented and still remain within the scope of the present invention. A motor/encoder system 1062 in conjunction with the computer 1014 are used to meter (i.e., adjust the intake and delivery stroke) the flow of liquid from the chamber 1058 and to adjust the intake and expulsion of liquid from the chamber 1058.

In one embodiment, pumping unit 1006 and pumping unit 1020 combine to form a first channel, which outputs liquid to a first channel output 1028. In another embodiment, pumping unit 1044 and pumping unit 1056 combine to form a second channel, which outputs liquid to a second channel output 1036. Both the first channel output 1028 and the second channel output 1036 are coupled to a pumping system output shown as 1034. Therefore, the combined liquid conveyed on the first channel output 1028 and the liquid conveyed on the second channel output 1036 is conveyed on the pumping system output 1034.

In one embodiment, a flow sensor 1030 is positioned on the first channel output 1028 and detects the flow of liquid conveyed on the first channel output 1028. In another embodiment, a flow sensor 1038 is positioned on the second channel output 1036 and detects the flow of liquid conveyed on the second channel output 1036. In another embodiment, a flow sensor 1032 is positioned on the pumping system output 1034 and detects the flow of liquid conveyed on the pumping system output 1034.

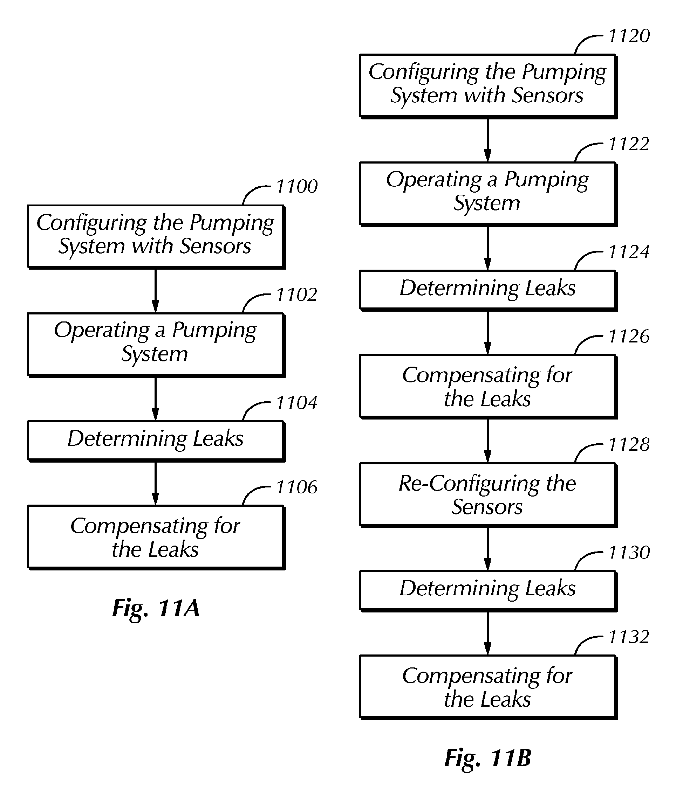

Fig. 11A displays a flow diagram depicting a method of configuring sensors in a pumping system. Figs. 9A, 9B, and 10 will be discussed in conjunction with Fig. 11A. At step 1100, a pumping system, such as the pumping system represented by the schematic diagrams depicted in Figs. 9A, 9B, and 10, are configured with flow sensors. Configuring may include manufacturing the pumping system with a specific configuration of flow sensors or implementing (i.e., operating) a specific configuration of flow sensors in the pumping system during operation of the pumping system. Implementing a specific configuration of flow sensors may include real-time operation of flow sensors connected to the pumping system, non-real time implementation of flow sensors between testing, etc.

In one embodiment, selected flow sensors are implemented in the pumping system to individually detect the flow of liquid in the pumping system. In another embodiment, flow sensors are implemented in the pumping system and simultaneously operate to detect and compare the flow of liquid throughout the pumping system. For example, referring to Fig. 9A, flow sensors 918, 932, and 942 may each individually be implemented within the pumping system and work individually to detect liquid flow within the pumping system. In another embodiment, flow sensors 918, 932, and 942 may all be implemented within the pumping system and work collaboratively to detect and determine the flow of liquid throughout the pumping system. Lastly, any combination of flow sensors may be implemented and operate collectively within the pumping system.

Referring to Fig. 9B, flow sensors 956, 968, 976, 988, and 994 may each individually be implemented within the pumping system and work individually to detect liquid flow within the pumping system. In another embodiment, flow sensors 956, 968, 976, 988, and 994 may all be implemented within the pumping system and work collaboratively to detect and determine the flow of liquid throughout the pumping system. Lastly, any combination of flow sensors 956, 968, 976, 988, and 994 may be implemented and operate collectively within the pumping system.

A similar methodology may be implemented using Fig. 10 as a reference. Flow sensors 1005, 1018, 1030, 1032, 1038, 1043, and 1054 may each be implemented individually or collectively in the pumping system 1000. Further, any combination or permutation of the flow sensors 1005, 1018, 1030, 1032, 1038, 1043, and 1054 may be implemented in the pumping system 1000.

Once the flow sensors are configured, the pumping system performs normal operations as shown by 1102. At step 1104, leaks may be determined by using the flow sensors. A variety of techniques may be used to determine leaks using the flow sensors. For example, 1) a change in the flow rate recorded by a flow sensor over time may suggest a leak in a pumping system; 2) a comparison between the flow rate metered by the motor/encoder system and the flow rate measured by a flow sensor may identify a leak; 3) a comparison in flow rates measured by different flow sensors within the channel or between channels may suggest a leak in a pumping system; and 4) a comparison of flow rates metered by different pumping units within the channel or between the channels may suggest a leak in a pumping system. While specific examples of determining a leak with a flow sensor are provided, numerous examples for determining leaks with a flow sensor are presented in the instant application and are within the scope of the present invention. At step 1106, once a leak is determined, compensation is made for the leaks in the pumping system. For example, each pumping unit may be controlled to compensate for the leaks by varying the metering of liquid flowing through each pumping unit.

Fig. 11B displays a flow diagram depicting a method of reconfiguring sensors in a pumping system. Figs. 9A, 9B, and 10 will be discussed in conjunction with Fig. 11B. At step 1120, a pumping system, such as the pumping system represented by the schematic diagram depicted in Figs. 9A, 9B, and 10, is configured with flow sensors. Configuring may include manufacturing the pumping system with a specific configuration of flow sensors or implementing/operating (i.e., turning on and off) a specific configuration of flow sensors in the pumping system during operation of the pumping system.

In one embodiment, selected flow sensors are implemented in the pumping system individually to detect the flow of liquid in the pumping system. In another embodiment, flow sensors are implemented in the pumping system and simultaneously operate to detect and compare the flow of liquid throughout a pumping system. For example, referring to Fig. 9A, flow sensors 918, 932, and 942 may each be individually implemented within the pumping system and work individually to detect flow within the pumping system. In another embodiment, flow sensors 918, 932, and 942 may all be implemented within the pumping system and/or work collaboratively to detect and determine the flow of liquid throughout the pumping system. Referring to Fig. 9B, flow sensors 956, 968, 976, 988, and 994 may each individually be implemented within the pumping system and work individually to detect liquid flow within the pumping system. In another embodiment, flow sensors 956, 968, 976, 988, and 994 may all be implemented within the pumping system and work collaboratively to detect and determine the flow of liquid throughout the pumping system. Lastly, any combination of flow sensors 956, 968, 976, 988, and 994 may be implemented and operate collectively within the pumping system.

A similar methodology may be implemented using Fig. 10 as a reference. Flow sensors 1005, 1018, 1030, 1032, 1038, 1043 and 1054 may each be implemented individually or collectively in the pumping system 1000. Further, any combination or permutation of the flow sensors 1005, 1018, 1030, 1032, 1038, 1043, and 1054 may be implemented in the pumping system 1000. It should also be appreciated that any combination of the foregoing methods or configurations may be implemented and still remain within the scope of the present invention.

Once the flow sensors are configured into a first configuration as stated at 1120, the pumping system performs normal operations as shown by 1122. At step 1124, leaks may be determined by using the flow sensors. A variety of techniques may be used to determine leaks using the flow sensors. For example, a change in the flow rate, such as a decrease in the flow rate indicated by the flow sensor over time, may suggest a leak. While a specific example of determining a leak with a flow sensor is provided in this example, numerous examples for determining leaks with a flow sensor are presented in the instant application and are within the scope of the present invention.

At step 1126, techniques, such as metering, are used to compensate for the leaks determined while operating the pumping systems. At step 1128, the flow sensors are reconfigured into a second configuration. In one embodiment, reconfiguring the flow sensors may occur in real time during testing operations. In another embodiment, reconfiguring the flow sensors may occur in non-real time. In one embodiment, reconfiguration includes implementing a different configuration of flow sensors in the pumping system. At step 1130, leaks are determined using the new configuration (i.e., reconfiguration) of flow sensors. For example, 1) a change in the flow rate recorded by a flow sensor over time may suggest a leak in a pumping system; 2) a comparison between the flow rate metered by the motor/encoder system and the flow rate measured by a flow sensor may identify a leak; 3) a comparison in flow rates measured by different flow sensors within the channel or between channels may identify a leak; and 4) a comparison of flow rates metered by different pumping units within the channel or between the channels may identify a leak. Further, each of these methods of determining leaks when the flow sensors are configured in the second configuration (i.e., 1128) may be compared against the methods of determining leaks when the flow sensors are configured in the first configuration (i.e., 1120). The comparison may then be used to determine leaks. At 1132, compensation is made for the leaks in the pumping system. For example, each pumping unit may be controlled to compensate for the leaks by varying the metering of liquid from each pumping unit.

A number of alternative embodiments may be implemented using Fig. 11B. For example, after operating the pumping system as stated at 1122, the step of reconfiguring the sensors as stated at step 1128 may be performed. Once the step of re-configuring the flow sensors as stated at 1128 is performed, then the step of determining leaks is performed as stated at step 1130, and the step of compensating for the leaks may be performed as stated at step 1132. In alternate embodiments, the step of reconfiguring the sensors 1128 may be performed after the step of operating the pumping system as stated at 1122 or after the step of determining leaks as stated at 1124. Once the step of reconfiguring the sensors as stated at 1128 is performed, then the step of determining leaks is performed as stated at step 1130, and the step of compensating for the leaks may be performed as stated at step 1132. It should be appreciated that a variety of permutations and combinations of the various methods depicted by the flow diagram shown in Fig. 11B may be performed without departing from the spirit or scope of the invention.

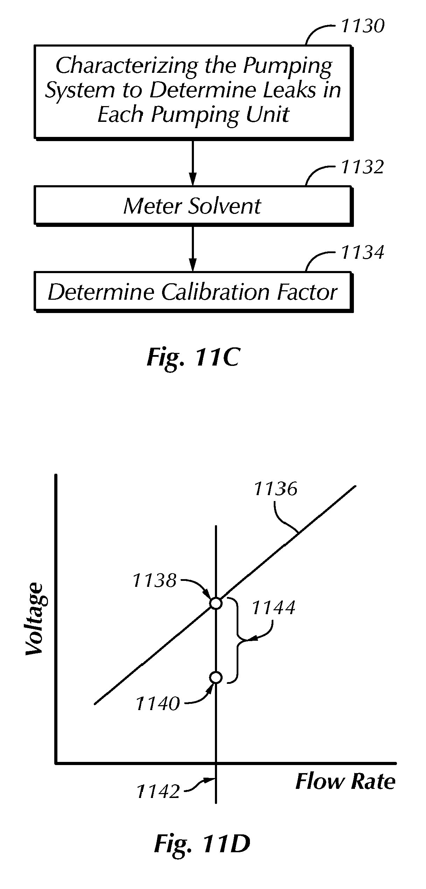

Fig. 11C displays a flow diagram depicting a method of calibrating flow sensors. Figs. 9A, 9B, and 10 will be discussed in conjunction with Fig.11C. At 1130 of Fig. 11C, the operation of a pumping system is characterized to determine leaks or the tightness of each pumping unit. In one embodiment, the pumping unit is characterized by determining the tightness of the pumping unit. To determine the tightness of the pumping unit, each pumping unit 1) is blocked (i.e., the inlet valve and the outlet valve surrounding the pumping unit is closed, the pumping unit is manually blocked online or offline, etc.); 2) the pressure in the pumping unit (i.e., chamber) is increased; and then 3) the pressure in the pumping unit (i.e., chamber) is monitored for a decrease in pressure. For example, using Fig. 9A as an example, the piston 924 performs an intake stroke to draw liquid into the chamber 922. The inlet valve 916 and the outlet valve 930 are then closed. The piston 924 moves through part of a delivery stroke to pressurize the chamber 922. Lastly, the chamber 922 is monitored for a decrease in pressure. If there is a decrease in pressure, this signals a leak in the pumping unit. If there is no pressure decrease, then there are no leaks (i.e., the pumping unit is tight). This process may be performed for each pumping unit in the pumping systems shown in Figs. 9A, 9B, and 10 to determine the tightness of each pumping unit.

At step 1132 of Fig. 11C, the liquid is then metered out of the pumping unit. Metering the liquid involves individually controlling and recording the movement of an encoder found in the motor/encoder system to determine the exact amount of liquid that is being delivered out of a chamber in a pumping unit. For example, metering the liquid may involve recording the movement of an encoder found in the motor/encoder system 926 to determine the amount of liquid output from the chamber 922. In an alternate embodiment, the liquid may be metered out of the chamber 922 at different flow rates and then measured by a flow sensor that we are attempting to calibrate.

Lastly, at step 1134, a calibration factor is determined. To determine the calibration factor, a graph, such as the graph shown in Fig. 11D, may be used. The graph shown in Fig. 11D includes a voltage on the y-axis and the flow rate on the x-axis. A curve representing a calibration curve for a know solvent 1136 when the known solvent is used with a flow sensor is presented. The calibration curve for a known solvent 1136 is provided (e.g., by the manufacturer). The voltage of a known solvent 1138 at a known flow rate 1142 is shown. An unknown solvent is then processed through the flow sensor with a known flow rate. The voltage of the unknown solvent (i.e., solvent in the chamber) 1140 at a known flow rate 1142 is shown. The calibration factor depicted by 1144 is then defined by a relation between the voltage of the unknown solvent 1140 and the voltage of the known solvent 1138. In one embodiment, the calibration factor 1144 is equivalent to the voltage of the unknown solvent 1140 divided by the voltage of the known solvent 1138. This method may be performed at different flow rates.

An alternate method of calibrating a flow sensor is presented using the flowchart depicted in Fig. 11C, the graph presented in Fig. 11D, and the pumping unit depicted in Fig. 9A. In the alternate embodiment, a method of calibrating solvents in a low-pressure gradient pump is presented. At 1130 of Fig. 11C, the operation of a pumping system is characterized to determine leaks or the tightness of each pumping unit. For example, using Fig. 9A as an example, the piston 924 performs an intake stroke to draw liquid into the chamber 922. In the alternate embodiment of the present invention, the valve 912 is switched to allow liquids conveyed on 904, 906, 908, and 910 to be accessed from the reservoir 902 and transported on conveyance 914. The liquid is then stacked in chamber 922 as shown by liquid 922A, liquid 922B, liquid 922C, and liquid 922D. The inlet valve 916 and the outlet valve 930 are then closed. The piston 924 moves through part of a delivery stroke to pressurize the chamber 922. Lastly, the chamber 922 is monitored for a decrease in pressure. In one embodiment, the decrease in pressure may be measured using a pressure sensor (not shown) positioned to measure the pressure in chamber 922. It should be appreciated that a pressure sensor may be deployed in each chamber of the pumping units presented in Figs. 9A, 9B, and 10. The pressure for the chamber in each of the pumping units may then be measured by the pressure sensor using methods presented in the instant application. Lastly, additional methods of determining a decrease in the pressure of the chamber may be implemented and are within the scope of the present invention. If there is a decrease in pressure, this signals a leak in the pumping unit. If there is no pressure decrease, then there are no leaks (i.e., the pumping unit is tight). This process may be performed for each pumping unit in the pumping systems shown in Figs. 9A, 9B, and 10 to determine the tightness of each pumping unit.

At step 1132 of Fig. 11C, the liquid is then metered out of the pumping unit. Metering the liquid involves individually controlling and recording the movement of an encoder found in the motor/encoder system to determine the exact amount of liquid that is being delivered out of a chamber in a pumping unit. For example, metering the liquid may involve recording the movement of an encoder found in the motor/encoder system 926 to determine the amount of liquid output from the chamber 922. In an alternate embodiment, the liquid may be metered out of the chamber 922 at different flow rates and then measured by a flow sensor that we are attempting to calibrate.

In one embodiment, metering is performed to deliver each liquid and then calibration is performed relative to each liquid. For example, liquid 922A, liquid 922B, liquid 922C, and liquid 922D are each metered out of the chamber and used to calibrate flow sensor 918 and/or flow sensor 932. The flow sensors are calibrated after each liquid is metered out of the chamber. For example, at step 1134, a calibration factor is determined. To determine the calibration factor, a graph, such as the graph shown in Fig. 11 D, may be used. The graph shown in Fig. 11 D includes a voltage on the y-axis and the flow rate on the x-axis. A curve representing a calibration curve for a know solvent 1136 when the known solvent is used with a flow sensor is presented. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through the flow sensor at a known flow rate 1142. The calibration factor 1144 is then defined as the ratio of voltage of the unknown solvent 1140 to the voltage of the known solvent 1138. This method may be performed at different flow rates.

In the following, the method of calibrating a flow sensor depicted in Fig. 11B will be described with respect to several configurations in Fig. 9A. For example, a method of calibrating flow sensor 918 is presented. A method of calibrating flow sensor 932 is presented, and a method of calibrating flow sensor 942 is presented. In the method of calibrating flow sensor 918, a test as described above is performed to determine the tightness of the pumping unit 920. The inlet valve 916 is then opened and the outlet valve 930 is closed, and the liquid stored in the chamber 922 is metered out of the chamber 922 and through the flow sensor 918. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through flow sensor 918 at a known flow rate 1142. The calibration factor 1144 is then defined as the ratio of voltage of the unknown solvent 1140 to the voltage of the known solvent 1138. This method may be performed at different flow rates.

To calibrate flow sensor 932, a test as described above is performed to determine the tightness of the pumping unit 920. The outlet valve 930 is then opened, the inlet valve 916 closed, and the liquid (i.e., unknown solvent) stored in the chamber 922 is metered out of the chamber 922 and through the flow sensor 932. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through flow sensor 932 at a known flow rate 1142. The calibration factor 1144 is then defined as the ratio of voltage of the unknown solvent 1140 to the voltage of the known solvent 1138. This method may be performed at different flow rates.

To calibrate flow sensor 942, a test as described above is performed to determine the tightness of the pumping unit 920 and the pumping unit 934. A variety of testing methods may be used to calibrate a flow sensor placed on an output of a low-pressure gradient pumping system. In one embodiment, the pumping unit 920 is used to calibrate the flow sensor 942. In a second embodiment, the pumping unit 934 is used to calibrate the flow sensor 942. In a third embodiment, a combination of the pumping unit 920 and the pumping unit 934 are used to test the flow sensor 942.

In one embodiment, a test is made to determine the tightness of the pumping unit 920 and pumping unit 934. Liquid stored in the pumping unit 920 is metered out of the chamber 922, through the flow sensor 932, through the chamber 936, and through the flow sensor 942. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through flow sensor 942 at a known flow rate 1142. The calibration factor 1144 is then defined as the ratio of voltage of the unknown solvent 1140 to the voltage of the known solvent 1138. This method may be performed at different flow rates.

In a second embodiment, a test is made to determine the tightness of the pumping unit 934. The liquid stored in the pumping unit 934 is metered out of the chamber 936 and through the flow sensor 942. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through flow sensor 942 at a known flow rate 1142. The calibration factor 1144 is then defined as the ratio of voltage of the unknown solvent 1140 to the voltage of the known solvent 1138. This method may be performed at different flow rates.

In a third embodiment, a test is made to determine the tightness of the pumping unit 920 and the pumping unit 934. The liquid stored in the pumping unit 920 is metered out of the chamber 922 and through the flow sensor 932, through the chamber 936, and through the flow sensor 942. The liquid stored in the pumping unit 934 is metered out of the chamber 936 and through the flow sensor 942. The calibration curve for a known solvent 1136 is provided (e.g., by the manufacturer). The voltage of a known solvent 1138 at a known flow rate 1142 is identified. An unknown solvent 1140, such as liquid 922A, liquid 922B, liquid 922C, and liquid 922D, is then processed through flow sensor 942 at a known flow rate 1142. The calibration factor 1144 is then defined as the ratio of voltage of the unknown solvent 1140 to the voltage of the known solvent 1138. This method may be performed at different flow rates.

Fig. 9B will be discussed in conjunction with Fig.11C. At 1130 of Fig. 11C, the operation of a pumping system is characterized to determine leaks or the tightness of each pumping unit. For example, using Fig. 9B as an example, the piston 962 and/or 982 performs an intake stroke to draw liquid into the chamber 960 and/or 980. The inlet valve 954 and/or 974 and the outlet valve 966 and/or 986 are then closed. The piston 962 and/or 982 may each move through part of a delivery stroke to pressurize the chamber 960 and/or 980. Lastly, the chamber 960 and/or 980 is monitored for a decrease in pressure. If there is a decrease in pressure, this signals a leak in the pumping unit (i.e., 958, 978). If there is no pressure decrease, then there are no leaks (i.e., the pumping unit is tight). This process may be performed for each pumping unit (i.e., 958, 978) in the pumping system 950 shown in Fig. 9B to determine the tightness of each pumping unit (i.e., 958, 978).

At step 1132 of Fig. 11C, the liquid is then metered out of the pumping unit. Metering the liquid involves individually controlling and recording the movement of an encoder found in the motor/encoder system to determine the exact amount of liquid that is being delivered out of a chamber in a pumping unit. For example, metering the liquid may involve recording movement of an encoder found in the motor/encoder system 964 and/or 984 to determine the amount of liquid output from the chamber 960 and/or 980. In an alternate embodiment, the liquid may be metered out of the chamber 960 and/or 980 at different flow rates and then measured by a flow sensor that we are attempting to calibrate.

Lastly, at step 1134, a calibration factor is determined. To determine the calibration factor, a graph, such as the graph shown in Fig. 11D, may be used. The graph shown in Fig. 11D includes a voltage on the y-axis and the flow rate on the x-axis. A curve representing a calibration curve for a know solvent 1136 when the known solvent 1136 is used with a flow sensor is presented. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor (i.e., 956, 968, 976, 988, 994) at a known flow rate 1142. The calibration factor 1144 is then defined as the ratio of voltage of the unknown solvent 1140 to the voltage of the known solvent 1138. This method may be performed at different flow rates.

The method of calibrating a sensor depicted in Fig. 11C will be described with respect to several configurations in Fig. 9B. For example, a method of calibrating flow sensor 956 is presented, a method of calibrating flow sensor 968 is presented, a method of calibrating flow sensor 976 is presented, a method of calibrating flow sensor 988 is presented, and a method of calibrating flow sensor 994 is presented. In the method of calibrating flow sensor 956, the pumping system 950 is characterized to determine leaks in the pumping system 950. The inlet valve 954 is then opened and the outlet valve 966 is closed, and the liquid stored in the chamber 960 is metered out of the chamber 960 and through the flow sensor 956. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor 956 at a known flow rate 1142. The calibration factor 1144 is then defined as the ratio of voltage of the unknown solvent 1140 to the voltage of the known solvent 1138. This method may be performed at different flow rates.

To calibrate flow sensor 968, the pumping system 950 is characterized to determine the tightness of the pumping units 958 and 978. The outlet valve 966 is then opened, inlet valve 954 is closed, and the liquid stored in the chamber 960 is metered out of the chamber 960 and through the flow sensor 968. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor 968 at a known flow rate 1142. The calibration factor 1144 is then defined as the ratio of voltage of the unknown solvent 1140 to the voltage of the known solvent 1138. This method may be performed at different flow rates. In one embodiment of the present invention, the foregoing methods may also be used to calibrate flow sensors 976 and 988.

A variety of testing methods may be used to calibrate a flow sensor placed on an output, such as the flow sensor 994, which is positioned on the output of pumping system 950. In one embodiment, the pumping unit 958 is used to calibrate the flow sensor 994. In a second embodiment, the pumping unit 978 is used to calibrate the flow sensor 994. In a third embodiment, a combination of the pumping unit 958 and the pumping unit 978 are used to calibrate flow sensor 994.

To calibrate flow sensor 994, the pumping system 950 is characterized to determine the tightness of the pumping units 958 and the pumping unit 978. Liquid stored in the pumping unit 958 is metered out of the chamber 960, through the flow sensor 968, and through the flow sensor 994. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor 994 at a known flow rate 1142. The calibration factor 1144 is then defined as the ratio of voltage of the unknown solvent 1140 to the voltage of the known solvent 1138. This method may be performed at different flow rates. It should be appreciated that flow sensors 968 and 994 may both be calibrated using the foregoing methods and then compared to provide a more accurate calibration factor 1144 for each flow sensor (i.e., 968, 994).

In a second embodiment, the pumping system 950 is characterized to determine the tightness of the pumping units 958 and the pumping unit 978. Liquid stored in the pumping unit 978 is metered out of the chamber 980 through the flow sensor 988 and through the flow sensor 994. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor 994 at a known flow rate 1142. The calibration factor 1144 is then defined as the ratio of voltage of the unknown solvent 1140 to the voltage of the known solvent 1138. This method may be performed at different flow rates. It should be appreciated that flow sensors 988 and 994 may both be calibrated using the foregoing methods and then compared to provide a more accurate calibration factor 1144 for each flow sensor (i.e., 988, 994).

In a third embodiment, the pumping system 950 is characterized to determine the tightness of the pumping unit 958 and the pumping unit 978. The liquid stored in the pumping unit 958 is metered out of the chamber 960 through the flow sensor 968 and through the flow sensor 994. The liquid stored in the pumping unit 978 is metered out of the chamber 980 through the flow sensor 988 and through the flow sensor 994. The calibration curve for a known solvent 1136 is provided (e.g., by the manufacturer). The voltage of a known solvent 1138 at a known flow rate 1142 is identified. An unknown solvent 1140, such as liquid stored in reservoir 952, is then processed through a flow sensor 994 at a known flow rate 1142. The calibration factor 1144 is then defined as the ratio of voltage of the unknown solvent 1140 to the voltage of the known solvent 1138. This method may be performed at different flow rates.

The method of calibrating a flow sensor depicted in Fig. 11C will be described with respect to several configurations in Fig. 10. The calibration method depicted in Fig. 11C is applied to each configuration to calibrate one of the flow sensors. In the following discussion, methods are presented for calibrating flow sensors 1005, 1018, 1030, 1032, 1038, 1043, and 1054.

In the method of calibrating flow sensor 1005, the pumping system 1000 is characterized to determine the tightness of the pumping units 1006, 1020, 1044, and 1056. Outlet valve 1016 is closed and inlet valve 1004 is opened. Flow sensor 1005 may be positioned before or after inlet valve 1004. Liquid stored in the pumping unit 1006 is metered out of the chamber 1008 through the flow sensor 1005. The calibration curve for a known solvent 1136 is provided e.g., (by the manufacturer). The voltage of a known solvent 1138 at a known flow rate 1142 is identified. An unknown solvent 1140, such as liquid stored in liquid reservoir 1002, is then processed through a flow sensor 1018 at a known flow rate 1142. The calibration factor 1144 is then defined as the ratio of voltage of the unknown solvent 1140 to the voltage of the known solvent 1138. This method may be performed at different flow rates.

In the method of calibrating flow sensor 1018, the pumping system 1000 is characterized to determine the tightness of the pumping units 1006, 1020, 1044, and 1056. Inlet valve 1004 is closed and outlet valve 1016 is opened. The flow sensor 1018 may be positioned before or after outlet valve 1016. Liquid stored in the pumping unit 1006 is metered out of the chamber 1008 through the flow sensor 1018. The calibration curve for a known solvent 1136 is provided (e.g., by the manufacturer). The voltage of a known solvent 1138 at a known flow rate 1142 is identified. An unknown solvent 1140, such as liquid stored in reservoir 1002, is then processed through a flow sensor 1018 at a known flow rate 1142. The calibration factor 1144 is then defined as the ratio of voltage of the unknown solvent 1140 to the voltage of the known solvent 1138. This method may be performed at different flow rates.

In the method of calibrating flow sensor 1043, the pumping system 1000 is characterized to determine the tightness of the pumping units 1006, 1020, 1044, and 1056. Outlet valve 1052 is closed and inlet valve 1042 is opened. Flow sensor 1043 may be positioned before or after inlet valve 1042. Liquid stored in the pumping unit 1044 is metered out of the chamber 1046 through the flow sensor 1043. The calibration curve for a known solvent 1136 is provided (e.g., by the manufacturer). The voltage of a known solvent 1138 at a known flow rate 1142 is identified. An unknown solvent 1140, such as liquid stored in reservoir 1040, is then processed through a flow sensor 1018 at a known flow rate 1142. The calibration factor 1144 is then defined as the ratio of voltage of the unknown solvent 1140 to the voltage of the known solvent 1138. This method may be performed at different flow rates.

In the method of calibrating flow sensor 1054, the pumping system 1000 is characterized to determine the tightness of the pumping units 1006, 1020, 1044, and 1056. Inlet valve 1042 is closed and outlet valve 1052 is opened. Liquid stored in the pumping unit 1044 is metered out of the chamber 1046 through the flow sensor 1054. The calibration curve for a known solvent 1136 is provided (e.g., by the manufacturer). The voltage of a known solvent 1138 at a known flow rate 1142 is identified. An unknown solvent 1140, such as liquid stored in reservoir 1002, is then processed through a flow sensor 1018 at a known flow rate 1142. The calibration factor 1144 is then defined as the ratio of voltage of the unknown solvent 1140 to the voltage of the known solvent 1138. This method may be performed at different flow rates.

To calibrate flow sensors 1030, 1032, or 1038, the pumping system 1000 is characterized to determine the tightness of the pumping units 1006, 1020, 1044, and 1056. A variety of testing methods may be used to test a flow sensor placed on an output of a pumping system 1000. In one embodiment, the pumping unit 1006 is used to test the flow sensors 1030, 1032, or 1038. In a second embodiment, the pumping unit 1020 is used to test the flow sensors 1018, 1030, or 1032. In a third embodiment, a combination of the pumping unit 1006 and the pumping unit 1020 are used to test the flow sensors 1030, 1032, or 1038.

In one embodiment, a pumping unit in a second channel may be used to calibrate a flow sensor positioned on the output of the second channel. In another embodiment, a pumping unit in a first channel in combination with a pumping unit in the second channel may be used to calibrate a flow sensor positioned on the output of the second channel. For example, when calibrating flow sensor 1038, piston 1024 may be used in combination with piston 1060 or piston 1060 may be used individually to calibrate flow sensor 1038. When using piston 1024 in combination with piston 1060, piston 1024 performs a delivery stroke and piston 1060 performs an intake stroke to calibrate flow sensor 1038. When using piston 1060 individually to calibrate flow sensor 1038, piston 1060 performs an intake stroke for backward calibration or piston 1060 performs a delivery stroke for forward calibration. It should be appreciated that a similar approach may be used to calibrate flow sensor 1030 using piston 1060 in combination with piston 1024 or piston 1024 individually.

In one embodiment, pumping unit 1006 is used to test flow sensors 1030, 1032, and 1038. A test is made to determine the tightness of the pumping unit 1006, pumping unit 1020, and pumping unit 1056. The liquid stored in the pumping unit 1006 is metered out of the chamber 1008 through the flow sensor 1018 through the chamber 1022 and through the flow sensors 1030, 1032, and/or 1038. The calibration curve for a known solvent 1136 is provided (e.g., by the manufacturer). The voltage of a known solvent 1138 at a known flow rate 1142 is identified. An unknown solvent 1140, such as liquid stored in reservoir 1002, is then processed through a flow sensor(s) 1030, 1032, and/or 1038 at a known flow rate 1142. The calibration factor 1144 is then defined as the ratio of voltage of the unknown solvent 1140 to the voltage of the known solvent 1138. This method may be performed at different flow rates. It should be appreciated that a similar approach may be performed to test flow sensors 1030, 1038, and 1032 using pumping unit 1044.

In a second embodiment, pumping unit 1020 is used to test flow sensors 1030, 1032, and 1038. A test is made to determine the tightness of the pumping unit 1020 and pumping unit 1056. The liquid stored in the pumping unit 1020 is metered out of the chamber 1022 and through the flow sensors 1030, 1032, and/or 1038. It should be appreciated that in the case of flow sensor 1038, the piston 1060 moves through an intake stroke to draw in solvent as the piston 1024 performs a delivery stroke. The calibration curve for a known solvent 1136 is provided (e.g., by the manufacturer). The voltage of a known solvent 1138 at a known flow rate 1142 is identified. An unknown solvent 1140, such as liquid stored in reservoir 1002, is then processed through a flow sensor 1030, 1032, and/or 1038 at a known flow rate 1142. The calibration factor 1144 is then defined as the ratio of voltage of the unknown solvent 1140 to the voltage of the known solvent 1138. This method may be performed at different flow rates. It should be appreciated that a similar method may be used to test flow sensors 1030, 1038, and 1032 using pumping unit 1056.

In a third embodiment, pumping unit 1006 in combination with pumping unit 1020 are used to test flow sensors 1030, 1032, and 1038. A test is made to determine the tightness of the pumping unit 1006 and the pumping unit 1020. The liquid stored in the pumping unit 1006 is metered out of the chamber 1008 and through the flow sensor 1018 through the chamber 1022 and through the flow sensors 1030, 1032, or 1038. The liquid stored in the pumping unit 1020 is metered out of the chamber 1022 and through the flow sensors 1030, 1032, or 1038. Any combination of pumped solvent from pumping unit 1006 and 1020 is possible. It should be appreciated that in the case of flow sensor 1038, the piston 1060 moves through an intake stroke to draw in solvent as the piston 1024 performs a delivery stroke.

The calibration curve for a known solvent 1136 is provided (e.g., by the manufacturer). The voltage of a known solvent 1138 at a known flow rate 1142 is identified. An unknown solvent 1140, such as liquid stored in reservoir 1002, is then processed through flow sensors 1030, 1032, and/or 1038 at a known flow rate 1142. The calibration factor 1144 is then defined as the ratio of voltage of the unknown solvent 1140 to the voltage of the known solvent 1138. This method may be performed at different flow rates. It should be appreciated that a similar method may be used to test flow sensors 1030, 1038, and 1032 using pumping unit 1044 in combination with pumping unit 1056.

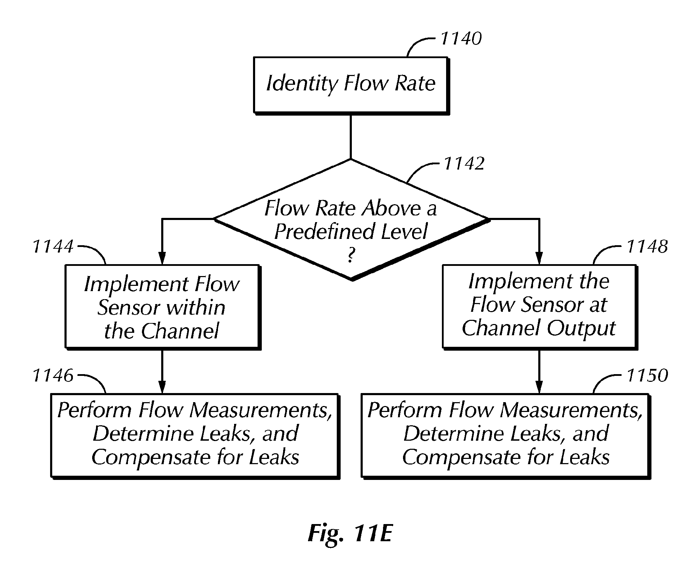

Fig. 11E displays a flowchart depicting a method of producing a variable flow rate. Fig. 11E will be discussed in conjunction with Fig. 9A, 9B, and Fig. 10. In the method of producing a variable flow rate, flow sensors are positioned at various locations within a pumping system depending on the required flow rate of the pumping system. In one embodiment, the total flow rate of the pumping system is measured at low flow rates. In another embodiment, a portion of the total flow rate is measured at high flow rates. In both cases, leaks in the pumping system are identified and compensated for. The flow sensors are connected within a channel for high flow rates and the flow sensors are connected at the output of a channel for low flow rates.

At step 1140, a flow rate is identified. The flow rate may be identified by reading a flow sensor, or may be identified based on a metering system, or may be identified by inputting a predefined flow rate into a computer for operations. At step 1142, a test is performed to determine whether the flow rate is above or below a predefined level. In one embodiment, the predefined level corresponds to the maximum measuring capability of the flow sensor. If the flow rate is below the predefined level, the flow sensor is implemented at the output of the channel as stated at step 1148. Further, the flow sensor at the output of the channel is used to characterize the total flow measurement of the pumping system as stated at 1150. If the flow rate is above a predefined level when tested at step 1142, the flow sensor is implemented within the channel as stated at 1144. Further, as stated at step 1146, the flow sensors are used to perform flow measurement, determine leaks, and compensate for leaks. In one embodiment, implementing the flow sensor may include configuring or implementing a flow sensor into a pumping system during operations. For example, when the pumping system is operating with a low flow rate, the flow sensors at the output of the channel may be turned on and operating, and when the pumping system is operating to produce a high flow rate, the flow sensors positioned within the channel of the pumping system may be turned on and operating. It should be appreciated that the same flow sensor can be used for both positions.

The method of producing a variable flow rate presented in Fig. 11E will be discussed with respect to Figs. 9A, 9B, and 10. In Fig. 9A, flow sensor 918 and/or 932 may be implemented in the pumping system 900 when the pumping system 900 is operating to produce a high flow rate and flow sensor 918 and/or 942 may be implemented when the pumping system 900 is operating at a low flow rate. Further, at a high flow rate, flow sensor 918 and/or 932 may indicate a portion of the total flow rate of the pumping system, where the total flow rate is measured at a point denoted by 944. At a low flow rate, flow sensor 942 is implemented and used to operate the pumping system 900. Using a method presented in the present application, leaks are detected and compensated for by metering the flow of liquid out of chamber 922, chamber 936, or chamber 922 in combination with chamber 936.

The method of producing a variable flow rate presented in Fig. 11E will be discussed with respect to Fig 9B. In Fig. 9B, flow sensors 956, 968, 976, and 988 may be implemented in the system when the pumping system 950 is operating to produce a high flow rate, and sensors 956, 976, and 994 may be implemented when the pumping system 900 is operating to produce a low flow rate. Further, at a high flow rate, flow sensors 956, 968, 976, and 988 may indicate a portion of the total flow rate of the pumping system, where the total flow rate is measured at a point denoted by 996. At a low flow rate, flow sensor 994 is implemented and used to operate the pumping system 900. Using a method presented in the present application, leaks are detected and compensated for by metering the flow of liquid out of chamber 960, chamber 980, or chamber 960 in combination with chamber 980.

In Fig. 10, flow sensors 1005, 1018, 1043, and/or 1054 may be implemented in pumping system 1000 to measure a high flow rate, and flow sensors 1030, 1032, and 1038 may be implemented when the pumping system 1000 is operating to measure a low flow rate. Further, at a high flow rate, flow sensors 1005, 1018, 1043, and 1054 may represent a portion of the total flow rate of the pumping system 1000, where the total flow rate is the flow rate of liquid at a point denoted by 1034. At a low flow rate, flow sensors 1030, 1032, and/or 1038 are implemented and used to operate the pumping system 1000. Using methods presented in the instant application, leaks are detected and compensated for by metering the flow of liquid out of chamber 1008, chamber 1022, chamber 1046, chamber 1058, or any combination of chambers 1008, 1022, 1046, and/or 1058.

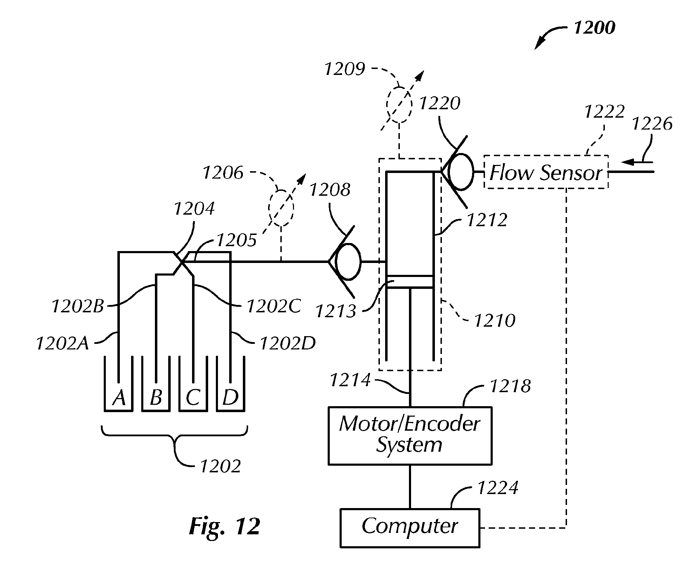

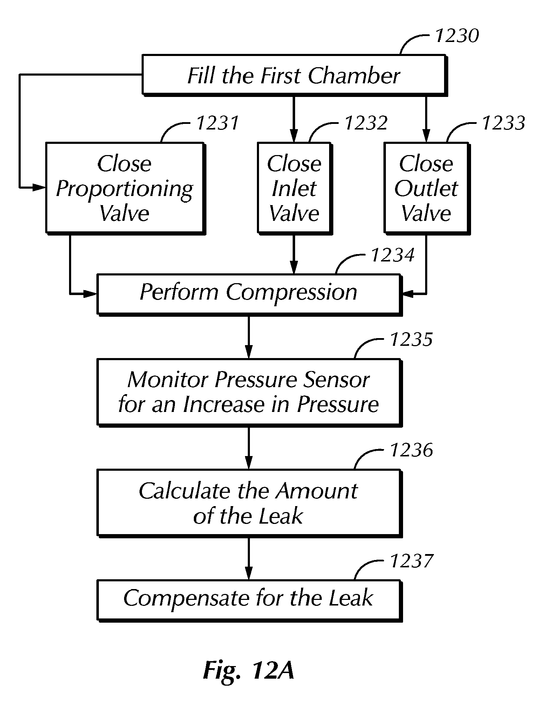

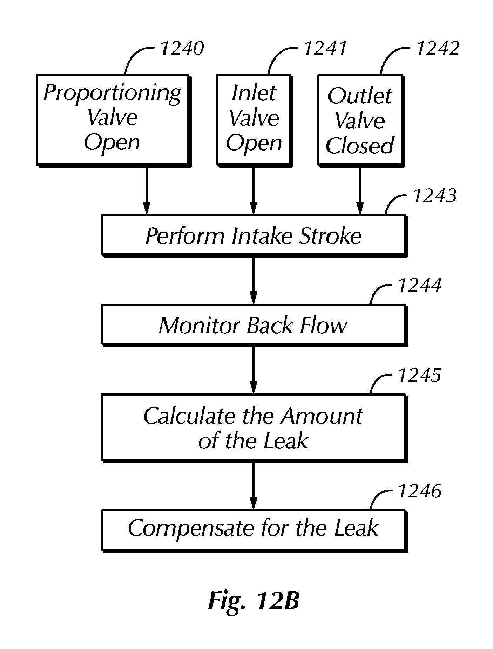

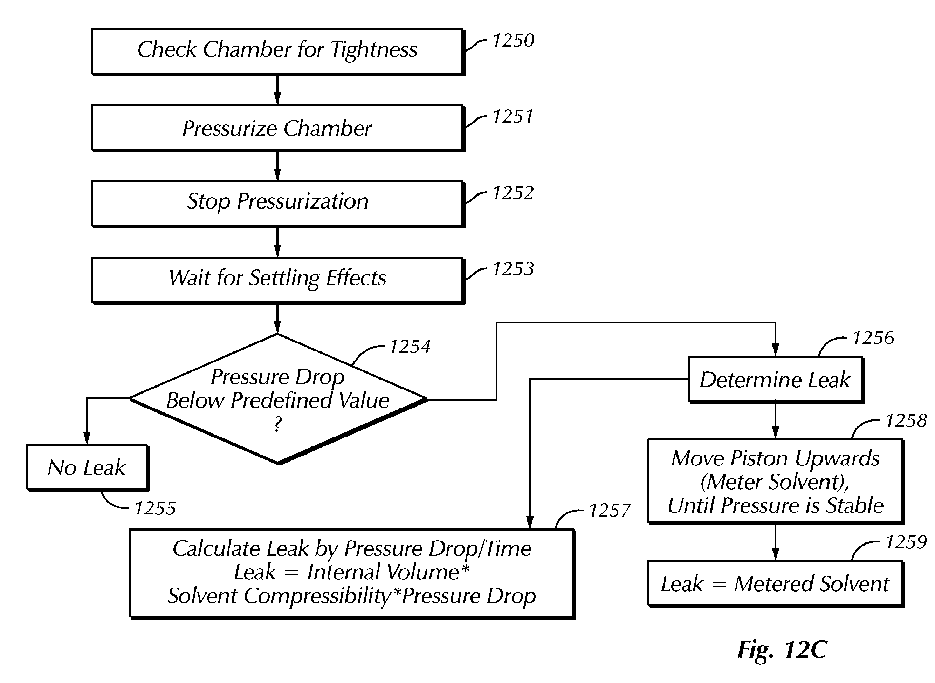

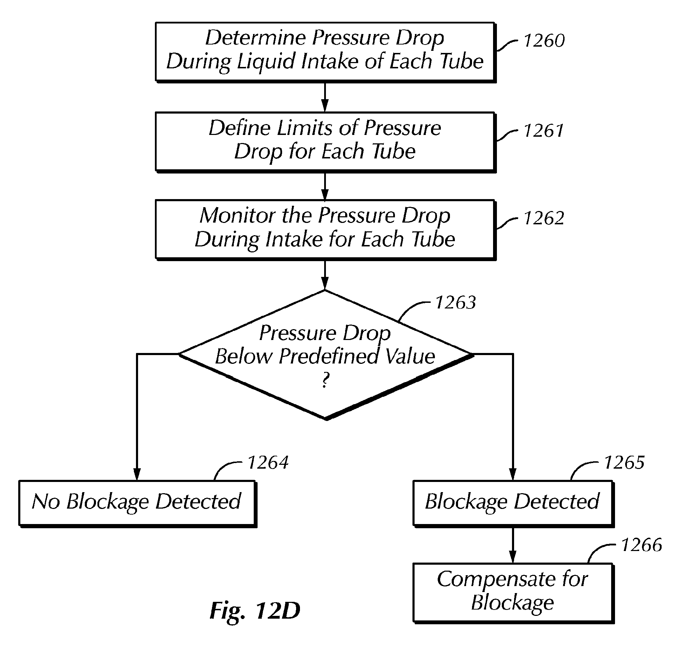

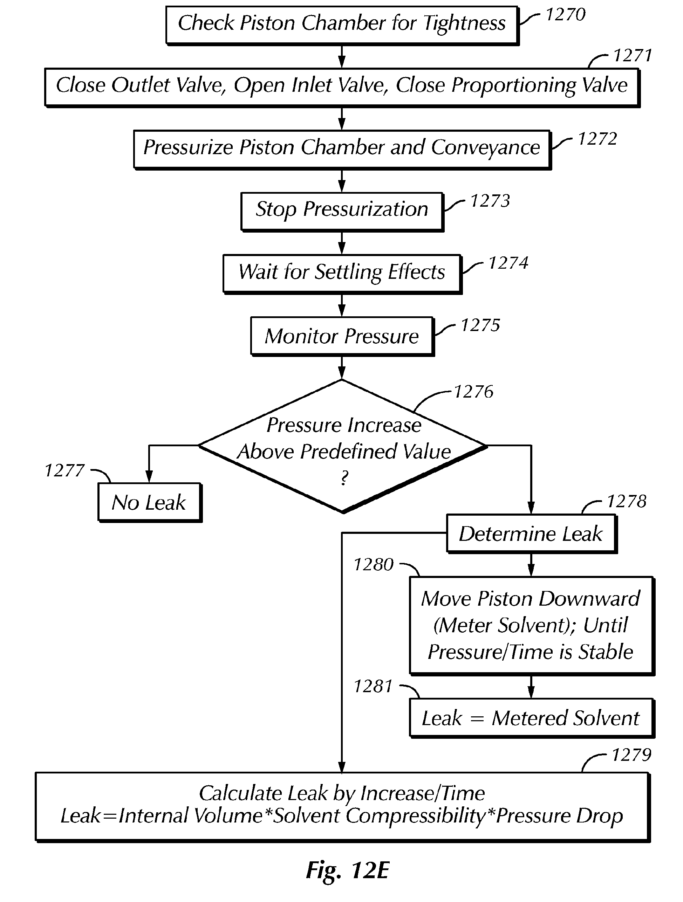

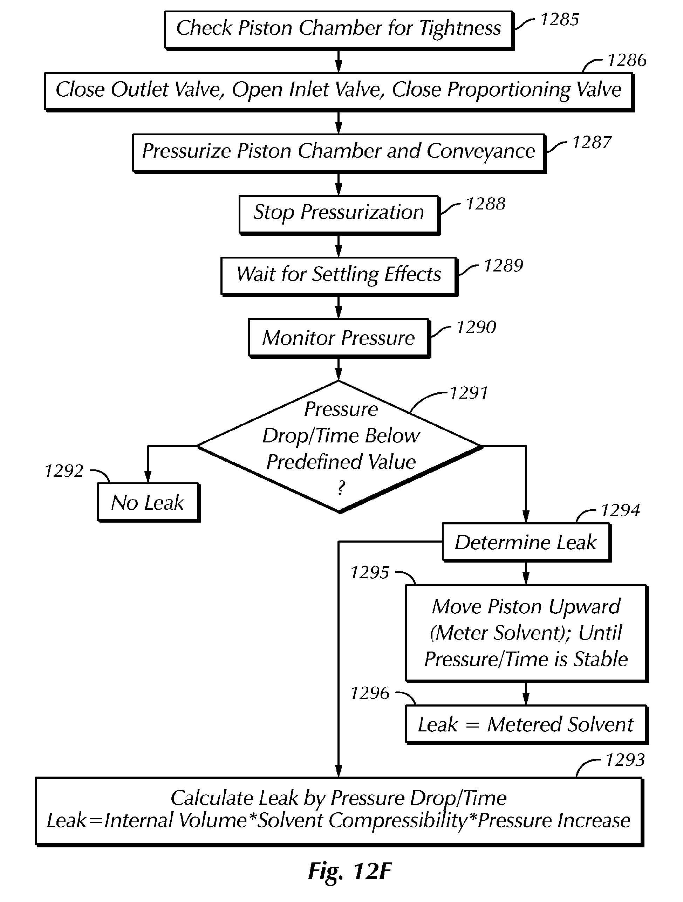

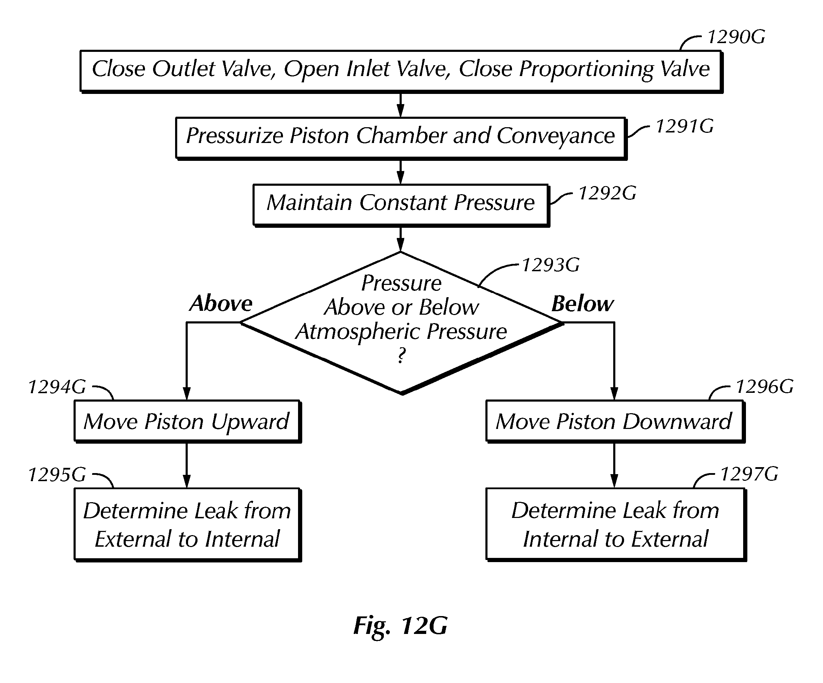

Fig. 12 displays a schematic of a pumping system including pressure sensors. A pumping system 1200 includes a variety of liquids as shown by liquids A, B, C, and D. The liquids A, B, C, and D are stored in a reservoir 1202. Each liquid (i.e., A, B, C, D) is conveyed on a conveyance 1202A, 1202B, 1202C, and 1202D. The liquids (i.e., A, B, C, D) are mixed using a proportioning valve 1204. The liquid (i.e., A, B, C, D) is drawn through an inlet valve 1208 on a conveyance 1205. A pressure sensor 1206 is positioned on the conveyance 1205 to sense the pressure between the proportioning valve 1204 and the inlet valve 1208. A pumping unit 1210 is positioned in series with the inlet valve 1208. The pumping unit 1210 includes a chamber 1212, a piston 1214, and a seal 1216. On the intake stroke of the piston 1214, liquid fills the chamber 1212 and on the delivery stroke of the piston 1214, liquid is compressed and forced out of the chamber 1212 through an outlet valve 1220. A pressure sensor 1209 is position to measure the pressure in the chamber 1212.

A motor/encoder unit 1218 in conjunction with a computer 1224 are used to adjust the upward and intake stroke of the piston 1214 which meters the flow of liquid through the chamber 1212 by adjusting the intake and expulsion of liquid from the chamber 1212. A flow sensor 1222 is positioned in series with the outlet valve 1220. The flow sensor 1222 is capable of measuring the flow of liquid out of pumping unit 1210.

A variety of methods for determining and compensating for leaks are presented and implemented with the pumping system 1200. In one embodiment, a method of determining leaks in an inlet valve is presented. In a second embodiment, a method of detecting leaks in an outlet valve is presented. In a third embodiment, a method of determining leaks in a seal/piston combination is presented. In a fourth embodiment, a method of determining leaks in a gradient valve is presented.

Fig. 12A displays a flow diagram depicting a method of identifying and compensating for leaks using pressure sensors. Fig. 12A will be discussed in conjunction with Fig. 12. In the method depicted in Fig. 12A, at step 1230, a chamber is filled with liquid. For example, chamber 1212 is filled with liquid. To fill chamber 1212 with liquid, the outlet valve 1220 is closed, the proportioning valve 1204 is opened, and the inlet valve 1208 is opened. The chamber 1212 then fills with liquid as the piston 1214 performs an intake stroke. Once the chamber 1212 is filled with liquid, the proportioning valve 1204 is closed as shown at 1231. The inlet valve 1208 and the outlet valve 1220 are also closed as stated at steps 1232 and 1233. With each valve closed (i.e., 1204, 1208, 1220), compression is performed as shown at step 1234. During compression, the piston 1214 moves upward (i.e., delivery stroke) to compress the liquid in the chamber 1212 before the outlet valve 1220 is opened. Compressing liquid in the chamber 1212 increases the pressure in the chamber 1212. When the pumping system 1200 reaches steady state (i.e., all the components have settled), the pressure is measured. The pressure sensor 1206 is monitored for a change in pressure as stated at 1235. If an increase in pressure is determined, the increase in pressure signals a flow of liquid back through the inlet valve 1208 as a result of a leak in the inlet valve 1208. In addition, based on the amount of pressure increase in the pressure sensor 1206, the amount of the leak in the inlet valve 1208 may be calculated as stated at 1236. In one embodiment of the present invention, the amount of leak in the inlet valve 1206 is calculated using the volume between the proportioning valve 1204 and the inlet valve 1206, the compressibility factor of the liquid and the pressure increase. Once the amount of the leak has been determined, adjustments may be made in the pumping system 1200 to accommodate for the leak as stated at 1237. For example, using the piston 1214, the motor/encoder unit 1218, and the computer 1224, metering may be performed to compensate for the leak.

Fig. 12B displays a flow diagram depicting a method of identifying and compensating for leaks using flow sensors. Fig. 12B will be discussed in conjunction with Fig. 12. In the method depicted in Fig. 12B, a proportioning valve is opened as stated at 1240. An inlet valve is opened as stated at 1241, and an outlet valve is closed as stated at 1242. A first piston in a first pumping unit performs an intake stroke as stated at 1243. It should be appreciated that in a second embodiment, the method depicted in Fig. 12B may be performed without performing the intake stroke as stated at step 1243. Opening the proportioning valve as stated at 1240, opening the inlet valve as stated at 1241, and closing the outlet valve as stated at 1242 will result in a backflow of liquid provided that the pressure after the outlet valve is higher than the pressure within chamber 1212. A flow sensor is used to monitor the back flow of liquid as stated at 1244. The back flow is used to calculate the amount of a leak as stated at 1245. In any case, metering is performed, e.g., with a second piston (not shown in Fig. 12) leaks can be compensated for as stated at 1246.

The method depicted in the flow diagram of Fig. 12B will be discussed with respect to the pumping system depicted in Fig. 12. As stated at steps 1240, 1241, and 1242, a proportioning valve and an inlet valve are opened and an outlet valve is closed. For example, using Fig. 12, the proportioning valve 1204 is opened, the inlet valve 1208 is opened, and the outlet valve 1220 is closed. At step 1243, an intake stroke is performed. For example, piston 1214 positioned in pumping unit 1210 performs an intake stroke. At step 1244, a flow sensor, such as flow sensor 1222, positioned before or after the outlet valve 1220, is monitored to detect a back flow 1226 of liquid. If liquid is detected by flow sensor 1222, the liquid indicates that there is a leak in the outlet valve 1220. Once the leak has been determined, the amount of liquid flowing through the flow sensor 1222 may be used to calculate the amount of the leak as stated at 1245. In one embodiment, it should be appreciated that the flow sensor is measuring the amount of the leak directly. If a leak occurs, the new-metered flow rate with a piston after the flow sensor (not shown in Fig 12) is equivalent to the metered flow, which is equal to the nominal flow plus the leak. Once the amount of the leak is calculated, metering may be performed to compensate for the leak as stated at 1246. Metering may include operating, e.g., a second piston of a serial pumping system, a motor/encoder unit responsible for moving that second pumping piston, and a corresponding computer (not shown in Fig. 12) to compensate for the amount of the leak.

Fig. 12C displays an embodiment of a flow diagram depicting a method of detecting a leak in a chamber, such as chamber 1212 of Fig. 12. Fig. 12C will be discussed in conjunction with Fig. 12. The method depicted in the flow diagram of Fig. 12C may be used to detect leaks in a piston/seal 1214/1213 combination, the leak in an inlet valve 1208, the leak in an outlet valve 1220, a leaky fitting, etc.

At step 1250 of Fig. 12C, a chamber positioned in a pumping unit is checked for tightness. For example, chamber 1212 positioned in pumping unit 1210 is checked for tightness. At step 1251, the chamber is pressurized. In one embodiment, piston 1214 is moved through a portion of a delivery stroke to pressurize liquid in chamber 1212. At step 1252, stopping the movement of the piston 1214 stops the pressurization. At step 1253, time is allotted to wait for the settling effects and pressure is monitored over a period of time. For example, time is allotted to wait for the settling effects of the pumping unit 1210. After settling is completed, the pressure sensor 1209 is used to monitor the pressure in the chamber 1212 over a period of time. At step 1254, if the pressure has not dropped below a predefined value, then there is no leak as stated at 1255. At step 1254, if the pressure has dropped below a predefined value, then a leak is determined as stated at 1256. The leak may be determined using two methods. In one embodiment, at step 1257, a leak is determined by a pressure drop over time. As a result, the leak equals the internal volume times solvent compressibility times the pressure drop, where the internal volume is the volume of the liquid in the chamber 1212, the solvent compressibility is the compression of liquid in the chamber 1212, and the pressure drop is the pressure reading on the pressure sensor 1209. In an alternate embodiment, the leak is determined by moving the piston 1214 upward until the pressure is stable as stated at 1258. Using Fig. 12, this would include moving piston 1214 upward through a portion of a delivery stroke until the pressure registered by pressure sensor 1209 is stable. During the partial delivery stroke, the metered liquid or solvent may be determined using the motor/encoder system 1218 and the computer 1224. The leak will then equal the metered solvent as stated at 1259.

Fig. 12D displays an embodiment of a flow diagram depicting a method of detecting a blocked conveyance (i.e., a blocked filter at a conveyance inlet). Fig. 12D will be discussed in conjunction with Fig. 12. At step 1260, the pressure drop is determined during the intake of liquid through each conveyance or tube (i.e., 1202A, 1202B, 1202C, 1202D). At step 1261, the limits of the pressure drop are defined for each conveyance. At step 1262, the pressure drop is monitored as liquid is conveyed through each tube. If the pressure does not drop below a predefined level as stated at step 1263, no blockage is detected as stated at step 1264. If the pressure does drop below a predefined level as stated at step 1263, blockage is detected as stated at step 1265. In one embodiment, adjustments may be made to compensate for blockage as stated at 1266. For example, in the case of a partial blockage, the intake stroke of piston 1214 may be adjusted to draw in liquid with lower speed to compensate for the blockage (e.g., avoid generation of gas bubbles).

The flow diagram of Fig. 12D will be discussed in conjunction with the pumping system 1200 depicted in Fig. 12. In Fig. 12, pressure sensor 1206 may be used to calibrate the inlet pressure for conveyances 1202A, 1202B, 1202C, and 1202D. To calibrate the inlet pressure for each conveyance (1202A, 1202B, 1202C, and 1202D), as the inlet valve 1208 is opened and the piston 1214 intakes liquid (i.e., A, B, C, D), pressure is measured as the liquid (i.e., A, B, C, D) is conveyed past the pressure sensor 1206. For example, when liquid (i.e., A) flows through conveyance 1202A via conveyance 1205 to inlet valve 1208, the pressure is measured. When liquid (i.e., B) flows through conveyance 1202B the to conveyance 1205, the pressure is measured. When liquid (i.e., C) flows through conveyance 1202C to conveyance 1205, the pressure is measured. When liquid (i.e., D) flows through conveyance 1202D to conveyance 1205, the pressure is measured. Using the aforementioned techniques, a pressure drop is determined as stated at 1260 of Fig. 12D. The limits of the pressure drop are defined as stated at 1261 of Fig. 12D. At step 1262, the pressure drop is monitored during the intake phase of the solvent using pressure sensor 1206. During operation, at step 1263, a test is made to determine if the pressure drop is below a predefined value (i.e., level). If the pressure has dropped below a predefined value (i.e., Yes), then this signals that there is no blockage. If the pressure has not dropped below a predefined value (i.e., No), this signals a partial or total blockage. In one embodiment, the blockage may occur in conveyances 1202A, 1202B, 1202C and/or 1202D. Once blockage has been detected, activities may be performed to compensate for a partial blockage as stated at 1266. For example, piston 1214 may perform an adjusted intake stroke to ensure the correct volume of liquid is brought in across the conveyance. For example, in one embodiment, the intake stroke speed is reduced to avoid the generation of gas bubbles.

Fig. 12E displays an embodiment of a flow diagram depicting a method of detecting a leak in a proportioning valve. Fig. 12F displays an embodiment of a flow diagram depicting a method of testing the tightness of a proportioning valve. Both Figs. 12E and 12F will be discussed in conjunction with Fig. 12. In one embodiment of detecting a leak in a proportioning valve, an on/off valve, such as a proportioning valve 1204, is closed. If more channels or conveyances (i.e., liquids) are connected (A, B, C, D), all the channels or conveyance are closed. A piston, such as the piston 1214, is moved to intake liquid into the chamber 1212. Pressure is measured. For example, the pressure sensor 1206 may measure the pressure on conveyance 1205. In one embodiment, when performing an intake stroke with the piston 1214 (i.e., inlet valve opened and outlet valve closed), the pressure on conveyance 1205 decreases to a level below atmospheric pressure. The piston stops and the pressure is monitored. After waiting a time for settling effects, the pressure is constant. In the case of a leak in the proportioning valve, the pressure will increased to atmospheric pressure. It should be appreciated that the pumping unit must be tested for tightness before the test described above is performed.

In another embodiment, the tightness of the proportioning valve is tested. First, the pumping unit (i.e., piston/chamber) is tested for tightness as described above. Afterwards, all of the channels (i.e., each conveyance) of the proportioning valve is closed, the inlet valve is opened and the outlet valve is closed. The piston moves upward to increase the pressure in the conveyance 1205 to a level above atmospheric pressure. The piston stops, waiting a time for settling effects and monitoring the pressure. If the proportioning valve 1204 is tight, the pressure is constant and remains above a predefined level. If leaky, the pressure decreases to atmospheric pressure over time.

In both embodiments presented above, the amount of leak is calculated by the volume of liquid between the proportioning valve 1204 and the inlet valve 1208, the compressibility factor of the liquid, and the pressure change over time. For example, in one embodiment, the leak is equal to the volume times the compressibility of liquid times the pressure change.

In another embodiment, the chamber 1212 is checked for tightness using a pressure sensor 1206 on a conveyance, such as conveyance 1205. The inlet valve 1208 is opened, the outlet valve 1220 is closed, the proportioning valve 1204 is closed completely (all channels), the conveyance 1205 is pressurized by moving the piston 1214 upwards. The pressure is monitored. A pressure level is predefined. Adapting the speed of the piston 1214 to keep the pressure constant controls the pressure. The pumped liquid required to keep that pressure constant on conveyance 1205 is equivalent to the amount of the leak. It should be appreciated that the pressure registered using pressure sensor 1206 may be above or below the atmospheric pressure. In the first case, the piston 1214 is moved upward. In the second case, the piston 1214 is moved downward. The first case, where the pressure is above atmospheric pressure, this may signal a liquid leak from internal (i.e., inside the chamber 1212) to external (i.e., outside the chamber 1212). In the second case, where the pressure is below atmospheric pressure, this may signal an air leak from external (i.e., outside the chamber 1212) to internal (i.e., inside the chamber 1212). In either case, the metered flow equals the leak (i.e., at constant pressure).

Fig. 12E displays an embodiment of a flow diagram depicting a method of detecting a leak in a proportioning valve. Fig. 12F displays an embodiment of a flow diagram depicting a method of testing the tightness of a proportioning valve. Fig. 12G displays an embodiment of a flow diagram depicting a method of testing a chamber disposed in a pumping unit for tightness. Figs. 12E and 12F will be discussed in conjunction with Fig. 12.

At 1270 of Fig. 12E, a valve, such as a gradient valve or proportioning valve 1204, is checked to determine leaks. For example, proportioning valve 1204 is checked for leaks. At step 1271, an outlet valve, such as outlet valve 1220, is closed; an inlet valve, such as inlet valve 1208, is opened; and a valve, such as proportioning valve 1204, is closed. At step 1272, the chamber 1212 is pressurized. In one embodiment, pressurizing the chamber 1212 includes moving the piston 1214 downward through a partial intake stroke. When the piston 1214 moves downward through a partial intake stroke, the pressure on conveyance 1205 decreases to a level below atmospheric pressure. At step 1273, the piston 1214 is stopped to discontinue the pressurization of the conveyance 1205. At step 1274, time is allowed to wait for settling effects. At step 1275, the pressure is monitored on conveyance 1205 using pressure sensor 1206. At step 1276, a test is made to determine if the pressure has increased above a predefined level and if so then there is no leak in proportioning valve 1204 as stated at 1277. If the pressure does increase above a predefined value, then a leak in proportioning valve 1204 may be determined as stated at 1278. The leak may be determined in two ways. In one embodiment, the leak is calculated by the increase in pressure over time as shown at 1279. In this case, the calculated leak equals the internal volume times the solvent compressibility times the pressure increase. In a second embodiment, the leak is determined by moving the piston 1214 downward as stated at 1280 until the pressure measured by pressure sensor 1206 is stable. The motor/encoder unit 1218 in conjunction with the computer 1224 are then used to determine the metered solvent from the downward movement of the piston 1214 and the leak is equal to the metered solvent as stated at 1281.

At 1285 of Fig. 12F, a valve, such as proportioning valve 1204, is tested for tightness. At step 1286, an outlet valve, such as outlet valve 1220, is closed; an inlet valve, such as inlet valve 1208, is opened; and a proportioning valve, such as proportioning valve 1204, is closed. At step 1287, the chamber 1212 is pressurized. In addition, since inlet valve 1208 is opened, conveyance 1205 is pressurized. In one embodiment, pressurizing the chamber 1212 includes moving the piston 1214 upward through a partial delivery stroke. When the piston 1214 moves upward through a partial intake stroke, the pressure on conveyance 1205 is increased to a level above atmospheric pressure. At step 1288, the piston 1214 is stopped to stop the pressurization of the chamber 1212 and the conveyance 1205. At step 1289, time is allowed to wait for settling effects. At step 1290, the pressure is monitored on conveyance 1205 using pressure sensor 1206. At step 1291, a test is made to determine if the pressure has decreased below a predefined level as stated at 1291. If the pressure has not dropped below a predefined level pressure, then no leak has been determined as stated at 1292. If the pressure has dropped below a predefined level pressure, then a leak may be determined as stated at 1294. The leak may be determined in two ways. In one embodiment, the leak is calculated by the decrease in pressure over time as shown at 1293. In this case, the calculated leak equals the internal volume times the solvent compressibility times the pressure drop. In a second embodiment, the leak is determined by moving the piston 1214 upward as stated at 1295 until the pressure measured by pressure sensor 1206 is stable. The motor/encoder system 1218 in conjunction with the computer are then used to determine the metered solvent from the upward movement of the piston 1214 and the leak equals the metered solvent as stated at 1296.

A method of testing a chamber for tightness is displayed in Fig. 12G. In another embodiment, the chamber 1212 is checked for tightness using a pressure sensor 1206 positioned in a conveyance, such as conveyance 1205. In the method at step 1290G, an inlet valve, such as inlet valve 1208, is opened, the outlet valve, such as outlet valve 1220, is closed, and the proportioning valve, such as proportioning valve 1204, is closed completely (all channels). The conveyance 1205 is pressurized as stated at 1291 G by moving the piston 1214 upwards. The pressure on conveyance 1205 is monitored. The pressure is monitored using pressure sensor 1206. A pressure level is predefined. The pressure is controlled by adapting the speed of the piston 1214 to keep the pressure constant as stated at 1292G. The pumped liquid required to keep the pressure constant on conveyance 1205 is equivalent to the amount of the leak. It should be appreciated that the pressure registered using pressure sensor 1205 may be below or above the atmospheric pressure. At 1293G, a test is made to determine if the pressure is above or below atmospheric pressure. If the pressure is above atmospheric pressure, piston 1214 is moved upward as stated at 1294G. A pressure above atmospheric pressure signals a liquid leak from internal (i.e., inside the chamber 1212) to external (i.e., outside the chamber 1212) and steps may be taken to determine the leak as stated at 1295G. In one embodiment, the metered flow equals the leak (i.e., at constant pressure). If the pressure is below atmospheric pressure, piston 1214 is moved downward as stated at 1296G. Where the pressure is below atmospheric pressure, this may signal an air leak from external (i.e., outside the chamber 1212) to internal (i.e., inside the chamber 1212) and steps may be taken to determine the leak from external to internal as stated at 1297G. In one embodiment, the metered flow equals the leak (i.e., at constant pressure).

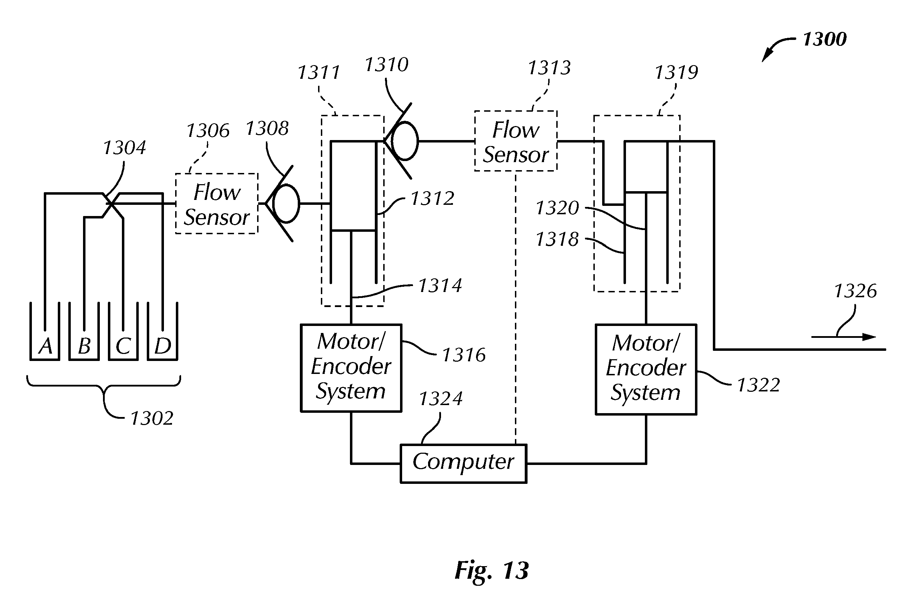

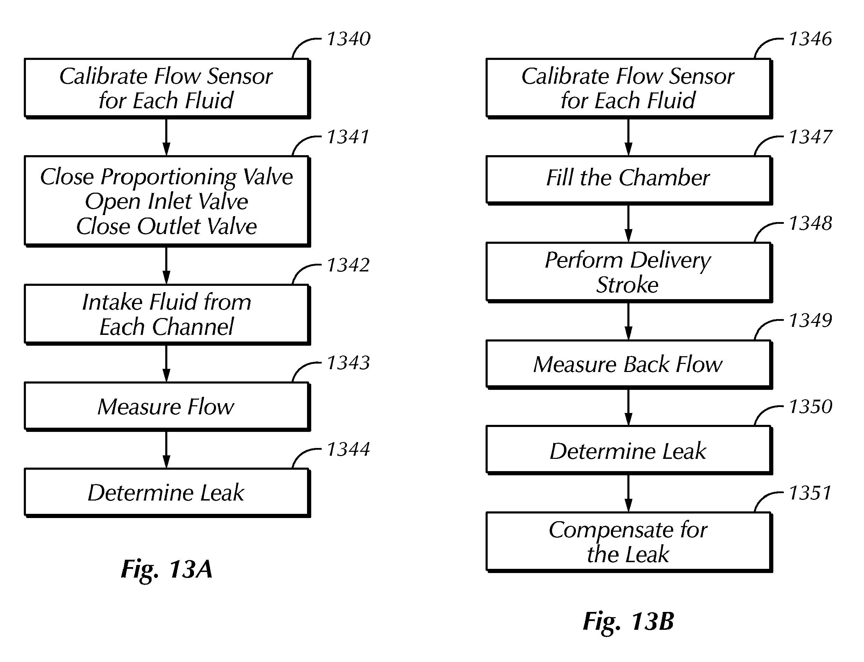

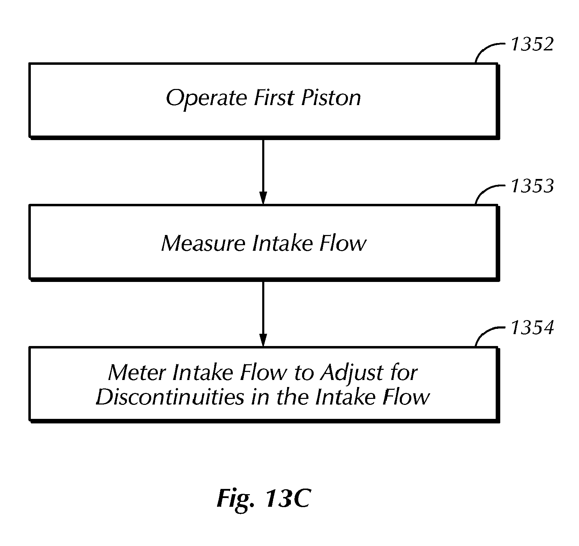

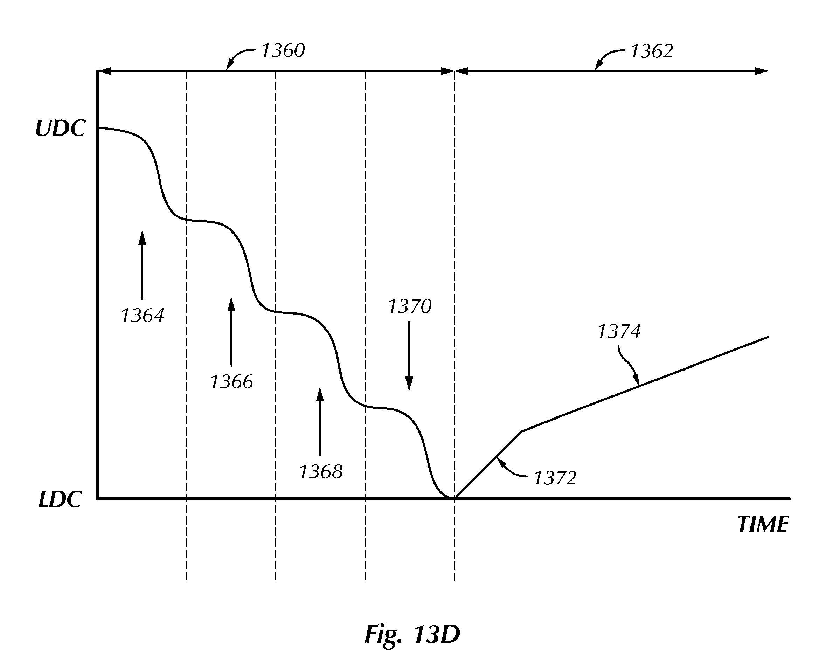

Fig. 13 displays a schematic diagram of a single-channel pumping system 1300 including flow sensors. The single-channel pumping system 1300 includes a reservoir 1302 storing a variety of liquids as shown by liquids A, B, C, and D. A switch, such as a proportioning valve 1304, is connected in series with a flow sensor 1306. The flow sensor 1306 is connected in series with an inlet valve 1308. The inlet valve 1308 is in series with a pumping unit 1311. The pumping unit 1311 includes a chamber 1312 and a piston 1314. The pumping unit 1311 is further in series with a chamber 1318. In one embodiment, flow sensor 1313 is positioned between pumping unit 1311 and pumping unit 1319. The pumping unit 1319 includes a chamber 1318 and a piston 1320. The pumping unit 1311 is connected to a motor/encoder system 1316 and the pumping unit 1319 is connected and controlled by a motor/encoder system 1322. Both the motor/encoder system 1316 and the motor/encoder system1322 are connected to and controlled by computer 1324.

The liquids (i.e., A, B, C, D) are mixed in a proportioning valve 1304 and conveyed through a flow sensor 1306 to an inlet valve 1308. On the intake stroke of the piston 1314, liquid (i.e., A, B, C, D) fills the chamber 1312 and on the delivery stroke of the piston 1314, liquid (i.e., A, B, C, D) is compressed and forced out of the chamber 1312 through the outlet valve 1310. A motor/encoder system 1316 and a computer 1324 are used to meter the flow of liquid (i.e., A, B, C, D) through the pumping unit 1311 by adjusting the upward and intake stroke of the piston 1314 to adjust the intake and expulsion of liquid (i.e., A, B, C, D) from the chamber 1312. The outlet valve 1310 is positioned to allow liquid (i.e., A, B, C, D) to flow between the pumping unit 1311 and the pumping unit 1319, which is in series with the pumping unit 1311. A pumping unit 1319 includes a piston 1320. Liquid (i.e., A, B, C, D) is received from the chamber 1312 into the chamber 1318. The flow of liquid (i.e., A, B, C, D) between the pumping unit 1311 and the pumping unit 1319 is measured by a flow sensor 1313 positioned between the two pumping units 1311 and 1319. Liquid (i.e., A, B, C, D) fills the chamber 1318 and on the delivery stroke of the piston 1320, liquid (i.e., A, B, C, D) is forced out of the chamber 1318. A motor/encoder system 1322 and a computer 1324 are used to adjust the upward and intake stroke of the piston 1320 to adjust the intake and expulsion of liquid (i.e., A, B, C, D) from the chamber 1318. Lastly, liquid (i.e., A, B, C, D) is delivered to the remainder of the chromatography system as shown at 1326.

Fig. 13A displays an embodiment of a flow diagram depicting a method of detecting a leak in a gradient valve. Fig. 13A will be discussed in conjunction with Fig. 13. At step 1340, a flow sensor positioned between a proportioning valve 1304 and an inlet valve 1308 is calibrated for each liquid (i.e., A, B, C, D) stored in a reservoir 1302. For example, the flow sensor 1306 positioned between the proportioning valve 1304 and the inlet valve 1308 is calibrated for each liquid (i.e., A, B, C, D) stored in the reservoir 1302. At step 1341, the proportioning valve 1304 is closed, the inlet valve 1308 is opened, and the outlet valve 1310 is closed. At step 1342, the piston 1314 performs a portion of an intake stroke to attempt to intake liquid (i.e., A, B, C, D) from the proportioning valve 1304. At 1343, the flow sensor 1306 is used to measure the flow of liquid (i.e., A, B, C, D). If there is a leak in the proportioning valve 1304, liquid (i.e., A, B, C, D) flows through the flow sensor 1306 and a leak is determined as stated at 1344.

Fig. 13B displays an embodiment of a flow diagram depicting a method of detecting a leak in an inlet valve. Fig. 13B will be discussed in conjunction with Fig. 13. At step 1346, the flow sensor 1306 is calibrated for each liquid (i.e., A, B, C, D) stored in the reservoir 1302. At step 1347, the chamber 1312 is filled with liquid (i.e., A, B, C, D). To fill the chamber 1312 with liquid (i.e., A, B, C, D), the proportioning valve 1304 is opened, the inlet valve 1308 is opened, and the outlet valve 1310 is closed. The piston 1314 then performs an intake stroke to fill the chamber 1312. Once the chamber 1312 is filled, the inlet valve 1308 is closed. The piston 1314 then moves through a delivery stroke to compress the liquid (i.e., A, B, C, D) and pressurize the chamber 1312 as stated at step 1348. At step 1349, an attempt is then made to measure liquid (i.e., A, B, C, D) in the flow sensor 1306. If a flow of liquid (i.e., A, B, C, D) is measured in flow sensor 1306 as stated at step 1349, the flow of liquid (i.e., A, B, C, D) is an indication that the inlet valve 1308 has a leak and a leak is determined as stated at step 1350. Once the leak is determined, metering may be performed to compensate for the leak as stated at step 1351.

In an alternate embodiment of the present invention, a flow diagram in Fig. 13B may be used to determine a leak in outlet valve 1310. Fig. 13B will be discussed in conjunction with Fig. 13. At step 1346, the flow sensor 1313 is calibrated for each liquid (i.e., A, B, C, D) stored in the liquid reservoir 1302. It should be appreciated that the flow sensor 1313 may be positioned before the outlet valve 1310 or the flow sensor 1313 may be positioned after the outlet valve 1310. At step 1347, the chamber 1318 is filled with liquid (i.e., A, B, C, D). To fill the chamber 1318 with liquid (i.e., A, B, C, D), while the inlet valve 1308 is closed and the outlet valve 1310 is opened, the piston 1314 moves upward through a delivery stroke and the piston 1320 moves downward through an intake stroke. Performing the intake stroke fills the chamber 1318. Once the chamber 1318 is filled, the outlet valve 1310 is closed. The piston 1320 then moves through a delivery (i.e., upward) stroke. At step 1349, an attempt is then made to measure liquid (i.e., A, B, C, D) in the flow sensor 1313. If flow (i.e., back flow from chamber 1318) is measured in flow sensor 1313 as stated at step 1349, the back flow is an indication that the outlet valve 1310 has a leak and a leak is determined as stated at step 1350. It should be appreciated that the leak may be determined using any of the methods presented for determining leaks. Once the leak is determined, metering may be performed to compensate for the leak as stated at step 1351.

Fig.13C presents a flow diagram of a method of performing a smooth intake stroke. Fig. 13C will be discussed in conjunction with Fig. 13. At step 1352, a pumping system, such as single-channel pumping system 1300, is operating. During operation, the proportioning valve 1304 allows liquid (i.e., A, B, C, D) from reservoir 1302 to be delivered to the pumping unit 1311. At step 1353, a flow sensor, such as the flow sensor 1306, positioned between the proportioning valve 1304 and the pumping unit 1311 is used to measure the intake flow. In another embodiment, the flow sensor is not configured in the system. In one embodiment, the intake flow of liquid is not continuous flow and has discontinuities or increases and decreases in volume or flow. At step 1354, the motor/encoder system 1316 is used to meter the intake flow to adjust for any discontinuities in the intake flow. Metering the intake flow includes adjusting the speed and/or timing of the piston 1314 using the motor/encoder system 1316 in conjunction with the computer 1324.

Fig. 13D presents a graph depicting a method of metering the intake flow to adjust for discontinuities in the intake flow. As a result of metering, a smooth and highly precise intake flow may be accomplished. The individual liquids (A, B, C, and D) accelerate and facilitate smooth transitions when the proportioning valve 1304 is switched. Fig. 13D will be discussed in conjunction with Fig. 13. Fig. 13D presents a graph of the position of the piston 1314 as a function of time. The upper limit of piston movement known as the upper dead center (UDC) and the lower limit of piston movement known as the lower dead center (LDC) are shown on the Y-axis of the graph. The liquid intake period is shown as 1360 and the liquid delivery period is shown as 1362 (i.e., for part of the delivery cycle). The portion of the graph associated with the intake of liquid A is shown as 1364, the portion of the graph associated with the intake of liquid B is shown as 1366, the portion of the graph associated with intake of liquid C is shown as 1368, and the portion of the graph associated with the intake of liquid D is shown as 1370. In addition, the initial compression and the final delivery of liquid, which occurs during the liquid delivery period 1362 is shown as 1372 and 1374, respectively. As shown in Fig. 13D, the piston 1314 is moving in a non-uniform manner to vary intake speed and the position of the piston 1314 as shown by the portion of the graph associated with the intake of liquid A shown as 1364, the portion of the graph associated with the intake of liquid B shown as 1366, the portion of the graph associated with the intake of liquid C shown as 1368, and the portion of the graph associated with the intake of liquid D shown as 1370. As a result, no discontinuities in the intake of the liquid (i.e., A, B, C, D) are seen by the pumping system 1300 when the proportioning valve 1304 switches between liquids in the reservoir 1302. Further, more precise metering is accomplished when no liquid or less liquid is drawn by piston 1314 while activating the switching or proportioning valve 1304. The corresponding liquids (i.e., A, B, C, D) are accelerated and decelerated very smoothly.

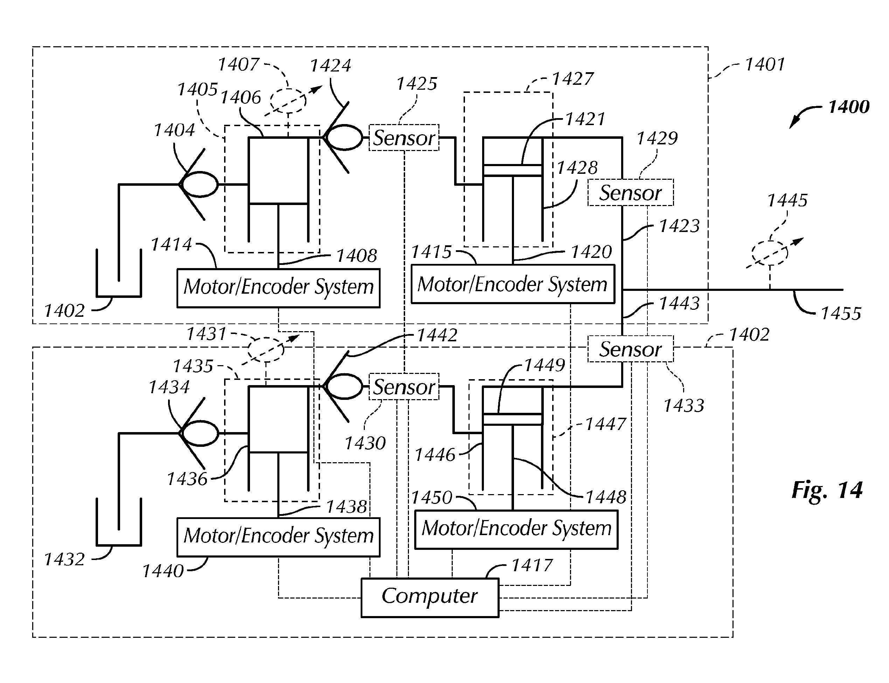

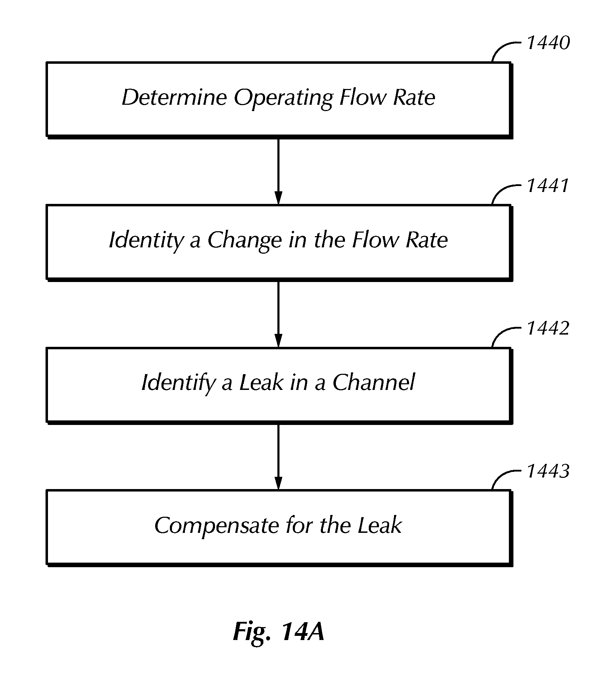

Fig. 14 depicts a pumping system 1400. A channel 1401 and 1402 are shown in the pumping system 1400. A liquid may be stored in reservoir 1403. An inlet valve 1404 is positioned in series with a pumping unit 1405. The pumping unit 1405 includes a chamber 1406 and a piston 1408 capable of reciprocating motion within the chamber 1406. The pumping unit 1405 may be configured with a pressure sensor 1407, which is positioned in chamber 1406, to detect the pressure in chamber 1406. An outlet valve 1424 is positioned in series with the pumping unit 1405 and is positioned on an oppositely disposed side of the chamber 1406 from the inlet valve 1404. A motor/encoder system 1414 is connected to the pumping unit 1405 and controls the reciprocating motion of the piston 1408. A computer 1417 controls the motor/encoder system 1414.

A pumping unit 1427 is in series with the pumping unit 1405. The pumping unit 1427 includes a chamber 1428 and a piston 1420 capable of reciprocating motion within the chamber 1428. The pumping system 1400 may be configured with a flow sensor 1425 positioned between the pumping unit 1405 and the pumping unit 1427. It should be appreciated that the flow sensor 1425 may be positioned before or after the outlet valve 1424. The pumping system 1400 may be configured with a flow sensor 1429 positioned on output 1423 of the channel 1401. A motor/encoder unit 1415 is connected to the pumping unit 1427 and controls the reciprocating motion of the piston 1420. Computer 1417 controls the motor/encoder unit 1415.

A liquid may be stored in a reservoir 1432. An inlet valve 1434 is positioned in series with a pumping unit 1435. The pumping unit 1435 includes a chamber 1436 and a piston 1438 capable of reciprocating motion within the chamber 1436. The pumping system 1400 may be configured with a pressure sensor 1431 positioned in the chamber 1436. An outlet valve 1442 is in series with the pumping unit 1435 and is positioned on an oppositely disposed side of the chamber 1436 from the inlet valve 1434. A motor/encoder unit 1440 is connected to the pumping unit 1435 and controls the reciprocating motion of the piston 1438. A computer 1417 controls the motor/encoder system 1440.

A pumping unit 1447 is in series with the pumping unit 1427. The pumping system 1400 may include a flow sensor 1430 positioned between the pumping unit 1435 and the pumping unit 1447. The pumping unit 1447 includes a chamber 1446 and a piston 1448 capable of reciprocating motion within the chamber 1446. The pumping system 1400 may include a flow sensor 1433 positioned on the output 1443 of the channel 1402. A motor/encoder unit 1450 is connected to the pumping unit 1447 and controls the reciprocating motion of the piston 1448. A computer 1417 controls the motor/encoder unit 1450. Lastly, a pressure sensor 1445 is positioned on the output 1455 of the pumping system 1400.

Fig. 14A displays a flow diagram depicting a method of operating a pumping channel. In addition, alternate embodiments of the method of operating a pumping channel are presented. For example, a method of detecting a leak in a first piston in a channel is presented. A method of detecting a leak in a second piston in a channel is presented. A method of detecting a leak when the pumping system 1400 is operating at low flow rates (i.e., within the range of the flow sensor) is presented. A method of detecting a leak when a pumping system 1400 is operating outside of the range of the flow sensor (i.e., high flow rates) is presented. Fig. 14A will be discussed in conjunction with Fig. 14.

In addition to the various embodiments, several parameters are defined for discussion purposes. In one embodiment, a nominal flow rate may be defined as a flow rate requested at the output 1455 of the pumping system. The nominal flow rate may be input by a user into computer 1417 and the pumping system 1400 may coordinate between the various pumping units (i.e., 1407, 1427, 1435, and 1447) within the pumping system 1400 to produce the nominal flow rate. In one embodiment, the measured flow rate may be defined as the flow rate measured by a flow sensor, such as flow sensors 1425, 1429, 1430, and 1433. Lastly, in one embodiment, a metered flow rate may be defined as a flow rate produced or recorded by a motor/encoder system 1414, motor/encoder system 1415, motor/encoder system 1440, motor/encoder system 1450. In one embodiment of the present invention, a leak is equivalent to the metered flow rate minus the measured flow rate (i.e., leak = metered flow rate - measured flow rate).

A method of determining leaks is presented in Fig. 14A. At step 1440, the flow rate of a pumping unit (i.e., 1405, 1427, 1435, 1447) is determined. The flow rate may be determined by measuring, metering, etc. Further, the flow rate may be determined at various positions within the pumping system 1400. At step 1441, a change in the flow rate is determined. In one embodiment, a change in the flow rate is determined by measuring the change with a flow sensor (i.e., 1425, 1429, 1430, 1433). At step 1442, a leak is identified and calculated in the channel. At step 1443, compensation is made for the leak.

A method of determining a leak in a pumping unit in a channel when the pumping unit is operating within the range of a flow sensor is presented. The method will be discussed using Fig. 14 in combination with the flow diagram presented in Fig. 14A. First, a constant flow rate is metered (i.e., used) for as the nominal flow rate. At 1440 of Fig. 14A, the flow rate is determined. For example, the flow sensor 1425 or the flow sensor 1430 is used to determine the measured flow rate of pumping unit 1405 or 1435. Since the flow sensor 1425 and the sensor 1430 are connected to the computer 1417, the computer 1417 is capable of recording the flow rate detected by each sensor (i.e., 1425, 1430) over time. At step 1441, each flow sensor (i.e., 1425, 1430) is monitored to identify a change in the flow rate. At step 1442, a change in the flow rate signifies a leak in a pumping unit. In one embodiment, this assumes a constant metered flow rate. At step 1443, compensation is made for the leak in the channel. In a second embodiment, at 1440 of Fig. 14A, the flow rate is determined. For example, the flow sensor 1425 or the flow sensor 1430 is used to determine the measured flow rate of pumping unit. At step 1441, the metered flow rate is determined. For example, motor/encoder system 1414 and motor/encoder system 1440 are each used in combination with computer 1417 to determine a metered flow rate for each pumping unit (i.e., 1405 and 1435, respectively). At step 1442, a leak is identified and calculated. In one embodiment, the leak equals the metered flow rate minus the measured flow rate (i.e., leak = metered - measured). Once the leak has been calculated, at step 1443, compensation is made for the leak. Compensation for the leak may include operating pumping units 1405 and 1435 to deliver additional liquid, which is equivalent to the amount of the leak.

In another embodiment of the present invention, a method of determining a leak in a channel when the output of the channel is within the operating range of a flow sensor is presented. The method will be discussed using Fig. 14 in combination with the flow diagram presented in Fig. 14A. At 1440 of Fig. 14A, the flow rate is determined. For example, the flow sensor 1429 or the flow sensor 1433 is used to determine the measured flow rate of channels 1401 and 1402, respectively. Since the flow sensor 1429 and the flow sensor 1433 are connected to the computer 1417, the computer 1417 is capable of recording the flow rate detected by each flow sensor (i.e., 1429, 1433) over time. At step 1441, each flow sensor (i.e., 1429, 1433) is monitored to identify a change in the flow rate. In one embodiment, this assumes a constant metered flow rate. At step 1442, a change in the flow rate signifies a leak in the channel (i.e., 1401, 1402). At step 1443, compensation is made for the leak in the channel (i.e., 1401, 1402). In one embodiment, compensating for the leak in the channel (i.e., 1401, 1402) may include operating a pumping unit (1405, 1435) in the channel (i.e., 1401, 1402)) to output liquid equal to the amount of the leak. In a second embodiment, compensating for the leak in the channel may include operating a pumping unit (i.e., 1427, 1447) in the channel to output liquid equal to the amount of the leak. In a third embodiment, compensating for the leak in the channel may include operating pumping units (1405, 1435) in the channel in combination with a pumping unit (1427, 1447) in a channel to output liquid equal to the amount of the leak. It should be appreciated that the foregoing method may be extended to any amount of pumping units configured in a channel.

In a second embodiment of determining a leak in a channel when the output of the channel is within the operating range of a flow sensor, at 1440 of Fig. 14A, the flow rate is determined. For example, the flow sensor 1429 or the flow sensor 1433 may be used to determine the measured flow rate of channel 1401. At step 1441, the metered flow rate is determined for each pumping unit (i.e., 1405, 1427, 1435, 1447). For example, motor/encoder system 1414, motor/encoder system 1440, motor/encoder system 1415, motor/encoder system 1450 are each used in combination with computer 1417 to determine a metered flow rate for each pumping unit (i.e., 1405, 1435, 1427, 1447, respectively). At step 1442, a leak is identified and calculated. In one embodiment, the leak equals the metered flow rate minus the measured flow rate (i.e., leak = metered - measured). Once the leak has been calculated, at step 1443, compensation is made for the leak. Compensation for the leak may include operating pumping units 1405, 1427, 1435, and 1447 to deliver additional liquid, which is equivalent to the amount of the leak calculated for each channel (i.e., 1401, 1402).

In a number of alternate embodiments, once a leak has been determined, a number of methods are presented for compensating for the leak in the pumping system 1400 as stated in step 1443. For example, individual metering methods may be implemented or integrated metering methods may be implemented. With an individual metering method, the flow of liquid through a single pumping unit (i.e., 1405, 1427, 1435, 1447) may be metered to compensate for the leak in the channel (i.e., 1401, 1402). Each pumping unit (i.e., 1405, 1427, 1435, 1447) in a channel (i.e., 1401, 1402) may be individually adjusted to compensate for a leak in the channel (i.e., 1401, 1402). For example, pumping units 1405 and 1427 may be individually adjusted to meter liquid through the pumping unit (i.e., 1405, 1427) and consequently compensate for the leak in the channel 1401. In a similar manner, pumping units 1435 and 1447 may be individually adjusted to meter liquid through the pumping unit (i.e., 1435, 1447) and consequently compensate for the leak in the channel 1402. In the alternative, integrated metering methods may be implemented. For example, if there is a leak in the channel 1401, the pumping unit 1405 and the pumping unit 1427 may operate in a coordinated fashion to compensate for the leak.

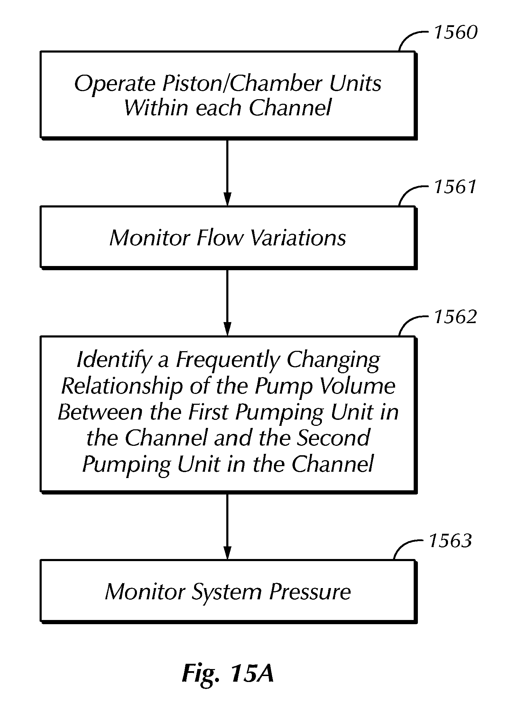

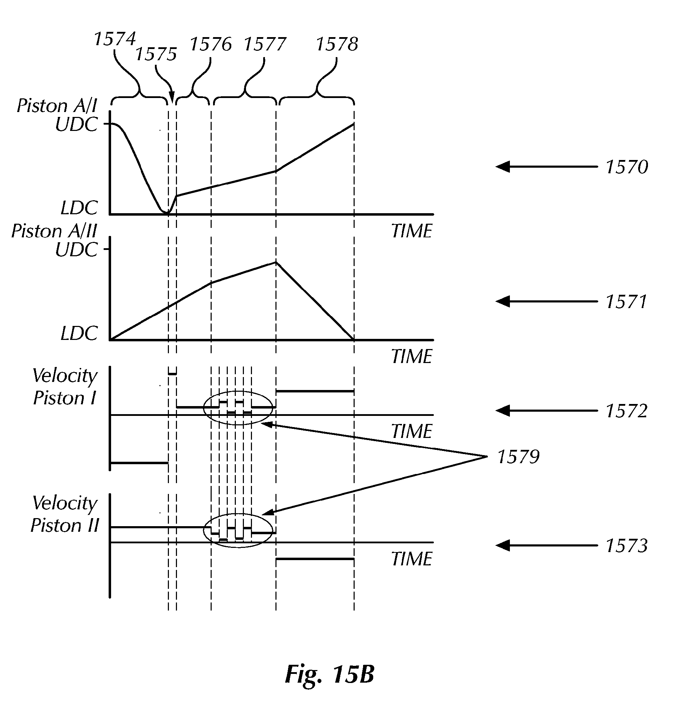

Fig. 15A displays a flow diagram depicting a method of determining a leak in a piston seal with a flow sensor positioned between two pumping units in a channel of a pumping system. Fig. 15A will be discussed in conjunction with Fig. 14 and Fig. 15B. The flow diagram of Fig. 15A depicts a method of determining a leak in a seal 1421, in piston 1420, using sensor 1425, and/or determining a leak in a seal 1449 in piston 1448 using sensor 1430. In Fig. 15A, at step 1560, each pumping unit (i.e., 1405, 1427, 1435, 1447) within each channel (i.e., 1401, 1402) is operating. Therefore, the pumping unit 1405, the pumping unit 1427, the pumping unit 1435, and the pumping unit 1447 operate. At step 1561 of Fig. 15A, the flow variations of each channel, such as the channel 1401 and the channel 1402, are monitored.

In one embodiment, monitoring the flow variations in each channel (i.e., 1401, 1402) includes plotting the flow variations between each pumping unit (i.e., 1405, 1427, 1435, 1447) in a channel (i.e., 1401, 1402). For example, monitoring the flow variation in each channel (i.e., 1401, 1402) includes plotting the flow rate of one pumping unit (i.e., 1405, 1427, 1435, 1447) relative to another pumping unit (i.e., 1405, 1427, 1435, 1447) in the channel (i.e., 1401, 1402). In another embodiment, monitoring the flow variations may include plotting the metering variations of each pumping unit (i.e., 1405, 1427, 1435, 1447) in each channel (i.e., 1401, 1402). Using Fig. 15B, graphs of the flow variations within a channel (i.e., 1401, 1402) are schematically presented. In one embodiment, the pumping units 1405 and 1427 are positioned in series and pumping units 1435 and 1447 are positioned in series. The graph 1570 represents a piston that is deployed in a pumping unit 1405, 1435, positioned in a channel and the graph 1571 represent a piston that is deployed in a pumping unit 1427, 1447 positioned in the channel. Both graphs (i.e., 1570 and 1571) display movement of piston versus time as the channel operates. The graph 1572 displays the velocity of a piston (i.e., in a pumping unit 1405, 1435 in a channel versus time. The graph 1573 displays the velocity of a piston in a pumping unit 1427, 1447 in the same channel versus time. A graph of a liquid intake period 1574 into pumping unit 1405, 1435 is bounded by the vertical axes on each graph and the dashed lines to the right of the vertical axes. A graph of a fast pre-compression jump 1575 of the piston chamber 1406, 1436 is shown and bounded by vertical dashed lines. 1576 is final compression of the piston chamber 1406, 1436. A graph of delivering liquid with the pumping units (i.e., 1405, 1435; 1427, 1447) within a channel is 1577 is bounded by vertical dashed lines. A graph of the pumping unit 1405, 1435 delivering the liquid into the pumping system and the pumping unit 1427, 1447 filled by the pumping unit 1405, 1435 is shown by 1578.

Graph 1570 represents the movement of a piston positioned in a pumping unit in a channel. For example, graph 1570 may represent piston 1408 or piston 1438. Graph 1571 represents the movement of a piston positioned in a pumping unit in a channel. For example, graph 1571 may represent piston 1420 or piston 1448. During the liquid intake period 1574, the piston (i.e., 1408 or 1438) in the channel moves from upper dead center (UDC) to lower dead center (LDC). In addition, the velocity of the pistons (i.e., 1408 and 1420 or 1438 and 1448) may be shown schematically by graphs 1572 and 1573. The velocity of the piston (i.e., 1408, 1438) within a channel is chosen so that the pumping units 1405 and/or 1435 is outputting liquid within the operating range of the flow sensors 1425 and/or 1430. Therefore, the flow sensors 1425 and/or 1430 will be able to measure the flow rate. The piston within the channel, such as pistons 1420 and/or 1448, is then used to deliver the remainder of the requested flow rate (i.e., nominal flow rate). The pressure sensor 1445 positioned at the output 1455 of the pumping system 1400 is used to measure the pressure drop of the pumping system 1400. In addition, the pressure sensor 1445 is used to correlate the flow rate on the output 1455.

At step 1562 of Fig. 15A, the frequently changing relationship between the pumped volume and between two pistons (i.e., 1408 and 1420 and/or 1438 and 1448) within the same channel is shown as 1577 of Fig. 15B. The frequently changing relationship of the pump volume between two pumping units within the same channel in combination with different pressure levels corresponding to the frequently changing piston speeds at the output of the pumping system is an indication of a leak. For example, the changing relationship depicted in 1577 of Fig. 15B displays a dynamic leak in the piston seal 1421 and/or 1449 of Fig. 14 if the pressure sensor 1445 indicates a lower pressure on output 1455 when the volume of liquid output from the piston (i.e., 1420 and/or 1448) in the channel is higher than the volume of liquid output by the piston 1408 and/or 1438 in the channel 1401 and/or 1402. It should be appreciated that dynamic leaks in piston/seal combinations can be detected. In a second embodiment, only one channel is connected to pumping system output 1455.

It should be appreciated that a number of different pumping scenarios may be implemented and still remain in accordance with the teachings of the present invention. It should also be appreciated that individual pumping units may operate at specific times. For example, operating the piston (e.g. 1408 and 1438) within the channel without operating the piston 1420 and/or 1448 within the channel 1401 and/or 1402 respectively is within the scope of the present invention.

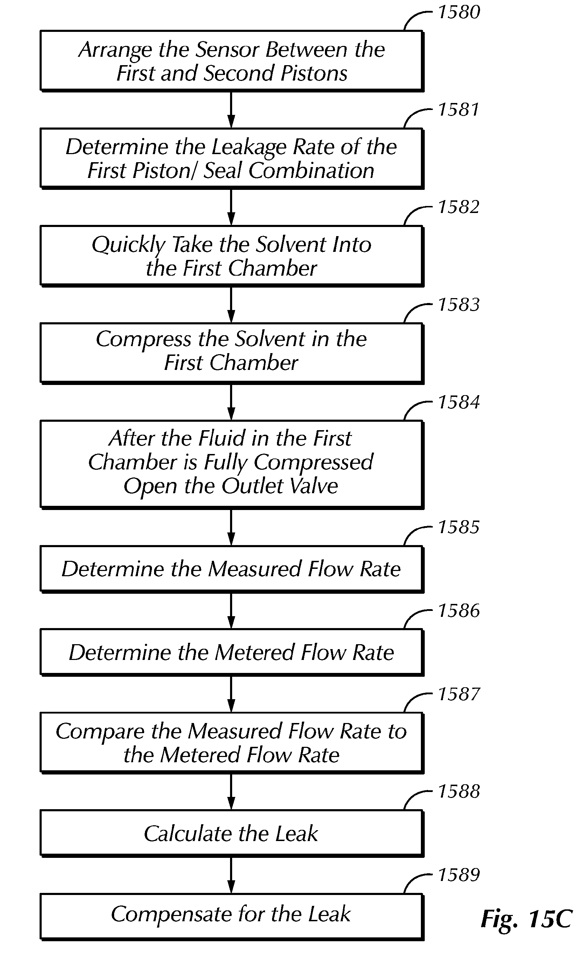

Fig. 15C displays a flow diagram depicting a method of determining the piston velocity required to produce the nominal (desired) flow rate. In one embodiment, a flow sensor is used to determine a leak rate. A nominal flow rate is determined by performing metering as defined by a metered flow rate, determining the delivered flow rate (i.e., measured flow rate), calculating the leak by comparing metered flow rate and measured flow rate, and calculating correction and/or compensation factors. Metering is then performed to operate the pumping system at the nominal rate. For example, using pumping unit 1405 metering is performed using the motor/encoder system 1414. The metering outputs liquid from the pumping unit 1405 at a metered flow rate. Flow sensor 1425 is then used to measure the flow rate. The measurement produces a measured flow rate. The difference between the metered flow rate and the measured flow rate is then referred to as the leak rate. The motor/encoder system 1414 then adjusts the operation of the piston 1408 to compensate for the leak rate. In one embodiment, compensating for the leak rate includes adjusting the operation of piston 1408 to produce an additional amount of liquid from pumping unit 1405 to compensate for the liquid lost as a result of the leak.

Fig. 15C will be discussed in conjunction with Fig. 14. At step 1580, a flow sensor is implemented between pumping units within a channel. For example, flow sensor 1425 is positioned between the pumping unit 1405 and pumping unit 1427. In another embodiment, flow sensor 1430 is positioned between the pumping unit 1435 and pumping unit 1447. The flow sensors 1425 and/or 1430 may be positioned before the outlet valve 1424 and 1442, respectively. In a second embodiment, the flow sensors 1425 and/or 1430 may be positioned after the outlet valve 1424 and1442, respectively.

At step 1581, the leakage rate of a piston is determined by metering and measuring the flow as described above. At step 1582, liquid is taken into the chambers 1406 and/or 1436 in the channels 1401 and 1402. This requires a downward stroke of the piston 1408 and/or the piston 1438. In one embodiment of the present invention, the downward stroke is a quick downward stroke. Typically, it is possible to draw in 100 µl liquid within less than 1 second.

At step 1583, after filling the chamber (1406 and/or 1436) in the channel, liquid in the chambers 1406 and/or 1436 is compressed. In one embodiment, the liquid is compressed rapidly. For example, in one embodiment compress chamber 1406 and/or chamber 1436 rapidly. In one embodiment, the initial upward stroke of the piston 1408 and the piston 1438 is performed quickly within 100ms.

At step 1584, when the liquid in the chamber is fully compressed, open the outlet valve. For example, after the liquid stored in chambers 1406 and/or 1436 is fully compressed, open the outlet valves 1424 and/or 1442. At step 1585, a flow sensor, such as flow sensors 1425 and/or 1430 are used to detect the measured rate. Once the outlet valves (i.e., 1424 and/or 1442) are opened, the flow sensors (i.e., 1425 and/or 1430) will detect the flow rate delivered by pistons 1408 and 1438. Since the flow sensors 1425 and/or 1430 are calibrated, the reading attained from the flow sensors 1425 and/or 1430 is the actual (i.e., measured) flow rate and can be determined by reading the flow sensor as stated at 1585. At step 1586, the encoder located in the motor/encoder system is read. The number of steps produced by the motor/encoder system is equal the metered flow rate. At step 1587, compare the actual flow rate with the metered flow rate. At step 1588, a comparison of the actual (i.e., measured) flow rate and the metered flow rate is performed to calculate the leak. Once the leak has been calculated, the leak can be compensated for by metering at a new calculated piston velocity, etc.

A second method of determining the piston velocity required to produce the nominal (desired) flow rate is presented. In the second method, a leak is determined in an outlet valve when a second piston is pumping. In one embodiment, the method depicted in the flow diagram of 13B is implemented.

In the second method of determining the piston velocity required to produce the nominal flow rate when a leak is determined in the outlet valve and the second piston in the channel is pumping. For example, at step 1347 of Fig. 13B, the chamber 1428 and/or 1446 in the channel 1401 and/or 1402 is filled. The outlet valve 1424 and/or 1442 is closed and the piston 1421 and/or 1449 in the channel performs a delivery stroke. A flow sensor 1425 and/or 1430 positioned between the pumping unit 1405 and/or 1435 and the pumping unit 1427 and/or 1447 in the channel 1401 and/or 1402 is then used to measure backflow as stated step 1349 of Fig. 13B. The backflow is equivalent to the amount of the leak; therefore, the backflow is used to determine the leak as stated at 1350 of Fig. 13B. The piston 1421 and/or 1449 is then adjusted to compensate for the leak as stated at 1351 of Fig. 13B. In one embodiment, compensating for the leak includes calculating a new piston velocity required to produce the nominal or desired flow rate at the output. Using Fig. 14 to discuss the method, chambers 1427 and/or 1447 are filled with liquid. Outlet valves 1424 and/or 1442 are closed. Pistons 1421 and/or 1448 perform a delivery stroke. Flow sensors 1425 and/or 1430 are used to measure any flow of liquid. A flow of liquid indicates a leak in outlet valve 1424 and/or outlet valve 1442. The leak is equivalent to the flow of liquid. A new piston velocity may then be determined to compensate for the leak. The new piston velocity may be calculated by computer 1417 and implemented by motor/encoder system 1415 and/or 1450, respectively. Once the compensation is made, a nominal flow rate will be produced at the output 1455.

It should be appreciated that once the outlet valve 1424 and/or 1442 is opened and the piston chamber 1428 and/or 1446 is fully compressed, the creeping effect of the pumping system 1400 must be considered when calculating the leak rate. Creeping is a natural function of the pumping system 1400 in which the components of the pumping system 1400 settle. During creeping, some leakage may occur; however, once creeping effects have terminated, the pumping system 1400 should operate in steady state (i.e., with or without leakage).

In one embodiment, a method of determining leaks when the flow rate is higher than the range of the flow sensor is presented. A chamber in a first pumping unit is filled with fluid. At the same time that the chamber in the first pumping unit is being filled with fluid, the second pumping unit is delivering the desired flow rate. After filling the first pumping unit, the piston in the first pumping unit moves upward to compress the liquid in the first chamber at the same time the second piston is delivering the desired flow rate. Once the compression is complete, the outlet valve associated with the first pumping unit is opened. Afterwards, the first pumping unit delivers a portion of total flow rate into the system. The portion of the total flow rate is selected within the range of the flow sensor. A leak is then determined. The difference between the metered flow rate and the measured flow rate defines the leak. At the same time, the second piston delivers the remainder (nominal flow rate - measured flow rate) of the desired flow rate into the system. In the case where the first piston is delivering the total flow rate into the system, the metered flow rate is equivalent to the nominal flow rate plus the leak (i.e., nominal flow rate + the leak).

Using Fig. 14, chambers 1406 and/or 1436 in pumping units 1405 and/or 1435 are filled with liquid. At the same time that chambers 1406 and/or 1436 are being filled with liquid, pumping units 1427 and/or 1449 are delivering the desired flow rate. After filling chambers 1406 and/or 1436, pistons 1408 and/or 1438, respectively, move upward to compress the solvent in chambers 1406 and/or 1436 at the same time that pistons 1420 and/or 1448 are delivering the desired flow rate. Once the compression is complete, the outlet valves 1424 and/or 1442 associated with the pumping units 1405 and/or 1435 are opened. Afterwards, the pumping units 1405 and/or 1435 deliver a portion of total flow rate into the system. The portion of the total flow rate is selected within the range of the flow sensors 1425 and/or 1430. A leak is then determined. The difference of metered flow rate and measured flow rate defines the leak. At the same time, the second pistons 1420 and/or 1448 delivers the remainder (nominal flow rate-measured flow rate) of the desired flow rate into the system. In the case where the pistons 1408 and/or 1438 are delivering the total flow rate into the system, the metered flow rate is equivalent to the nominal flow rate plus the leak (i.e., nominal flow rate + the leak).

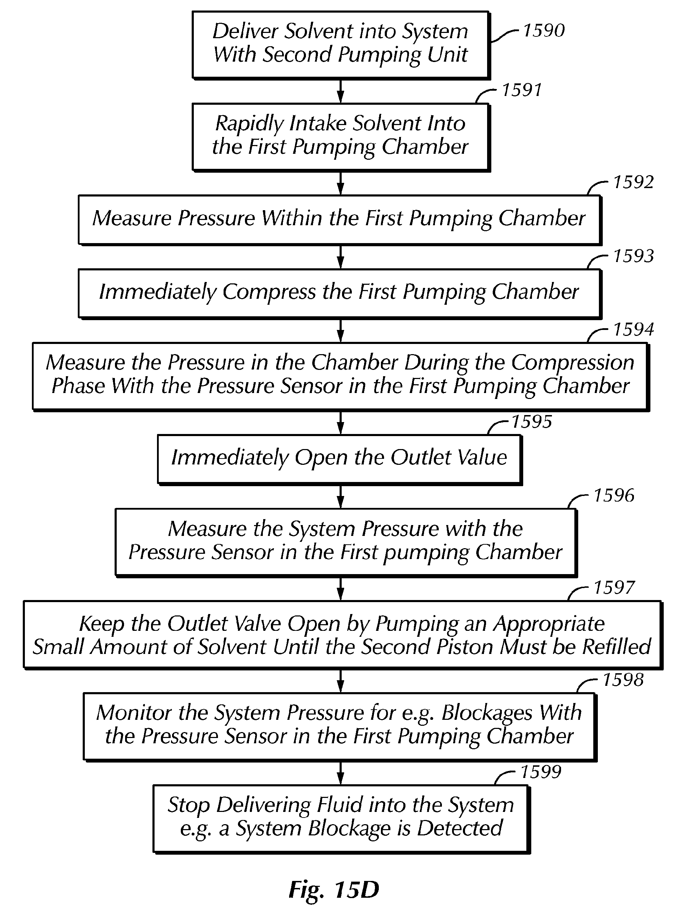

Fig. 15D includes a flow diagram depicting a method of monitoring compression phases in a pumping chamber and monitoring the system pressure of a chromatographic system. In one embodiment, a single pressure sensor, such as pressure sensors 1407 and/or 1431 are required to monitor compression phase of chambers 1406 and/or 1436 and to monitor system pressure of the chromatographic system. Fig. 15D will be described in conjunction with Fig. 14.

At step 1590, solvent (i.e., liquid) is delivered into a pumping system using a second pumping unit. At step 1591, the first piston is used to rapidly intake liquid into the chamber in the first pumping unit (i.e., first pumping chamber). At step 1592, pressure is measured within the chamber of the first pumping unit. At step 1593, the liquid in the first pumping chamber is immediately compressed. At step 1594, the pressure in the first pumping chamber is measured during the compression phase with the pressure sensor in the first pumping chamber. At step 1595, the outlet valve associated with the first pumping chamber is immediately opened. At step 1596, the pressure in the first pumping chamber may be used to measure the system pressure of the pumping system 1400. At step 1597, the outlet valve is kept opened by pumping a small amount of liquid until the second chamber must be refilled. At step 1598, monitor the system pressure and blockages with the pressure sensor in the first pumping chamber. At step 1599, delivery of liquid into the system is stopped if a system blockage is detected.

Fig. 14 will be used to demonstrate the method detailed in the flow diagram in Fig. 15D. At step 1590, solvent (i.e., liquid) is delivered into the system using a second pumping unit. Therefore, pumping unit 1427 and/or pumping unit 1447 are used to deliver liquid into the system. At step 1591, the pistons 1408 and/or 1438 rapidly intake solvent into the chambers 1406 and/or 1436 in the pumping units 1405 and/or 1435. Pumping units 1405 and/or 1435 rapidly intake liquid into chambers 1406 and 1436, respectively. At step 1592, pressure is measured within the chamber 1406 and/or 1436 of the pumping units 1405 and/or 1435. Pressure sensor 1407 is used to measure the pressure of chamber 1406 and/or pressure sensor 1431 is used to measure the pressure of chamber 1436. At step 1593, the liquid in the chamber 1406 and/or 1436 is immediately compressed. Piston 1408 is used to compress liquid such as solvent stored in chamber 1406 and/or piston 1438 is used to compress liquid such as solvent stored in chamber 1436. At step 1594, the pressure in the chamber 1406 and/or 1436 is measured during the compression phase with the pressure sensor 1406 and/or 1431 in the chamber 1406 and/or 1436. As piston 1408 is compressing the liquid in chamber 1406, pressure sensor 1407 is used to measure the pressure in chamber 1406. As piston 1438 compresses liquid in chamber 1436, pressure sensor 1431 is used to measure the pressure in chamber 1436. At step 1595, the outlet valve associated with the first pumping chamber is immediately opened. Outlet valve 1424 and/or outlet valve 1442 is immediately opened. At step 1596, the pressure in the first pumping chamber may be used to measure the system pressure of the pumping system 1400. After opening outlet valves 1424 and/or 1442, pressure sensor 1407 and/or pressure sensor 1431 may be used to measure the system pressure. At step 1597, the outlet valve is kept opened by pumping a small amount of liquid until the second piston must be refilled. Outlet valve 1424 and/or outlet valve 1442 remains open and piston 1408 and/or piston 1438 deliver a small amount of liquid until the second pumping unit 1427 and/or 1447 must be refilled. At step 1598, monitor the system pressure and blockages with the pressure sensor in the first pumping chamber. Pressure sensor 1407 and/or pressure sensor 1431 are used to measure system pressure to detect blockage in the pumping system 1400. Changes in pressure measured by pressure sensor 1407 and/or pressure sensor 1431 when the pressure sensors (i.e., 1407 and/or 1431) are used to measure system pressure will signal a blockage in the pumping system. At step 1599, delivery of liquid into the system is stopped if a system blockage is detected. If a blockage is detected, delivery of solvent with pumping units 1427 and/or 1447 is terminated.

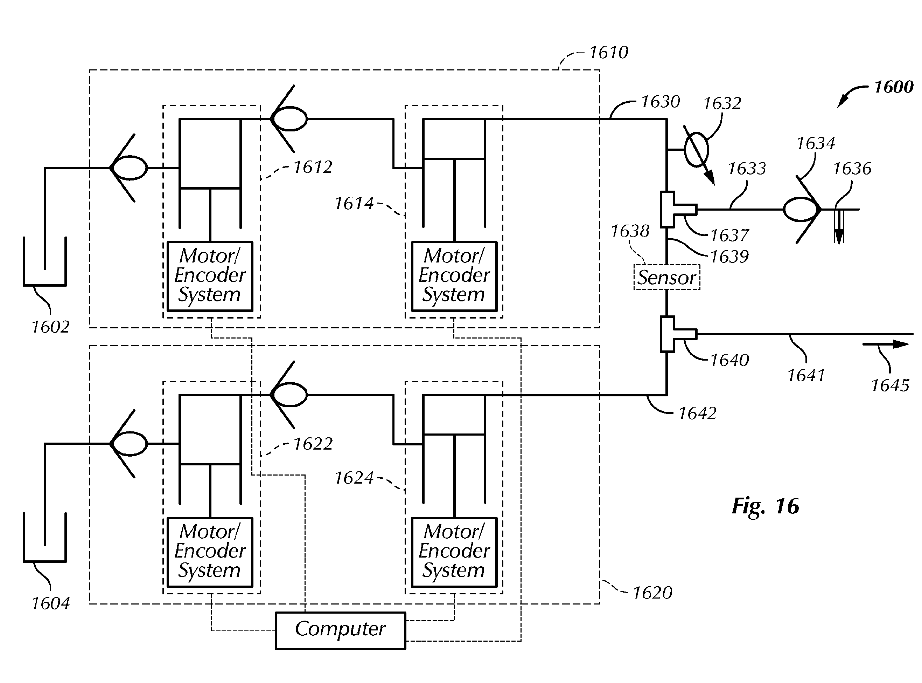

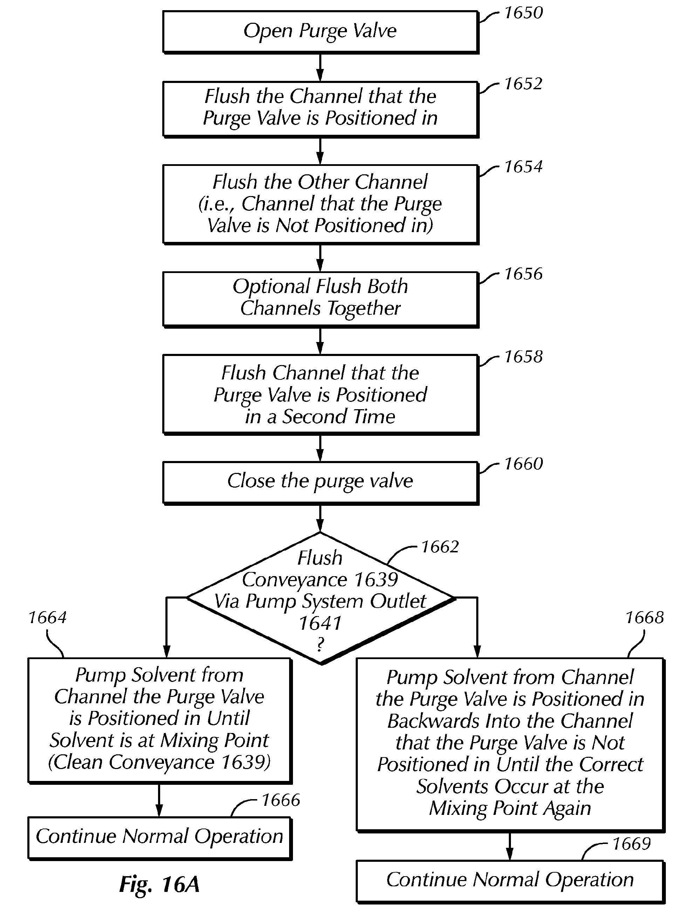

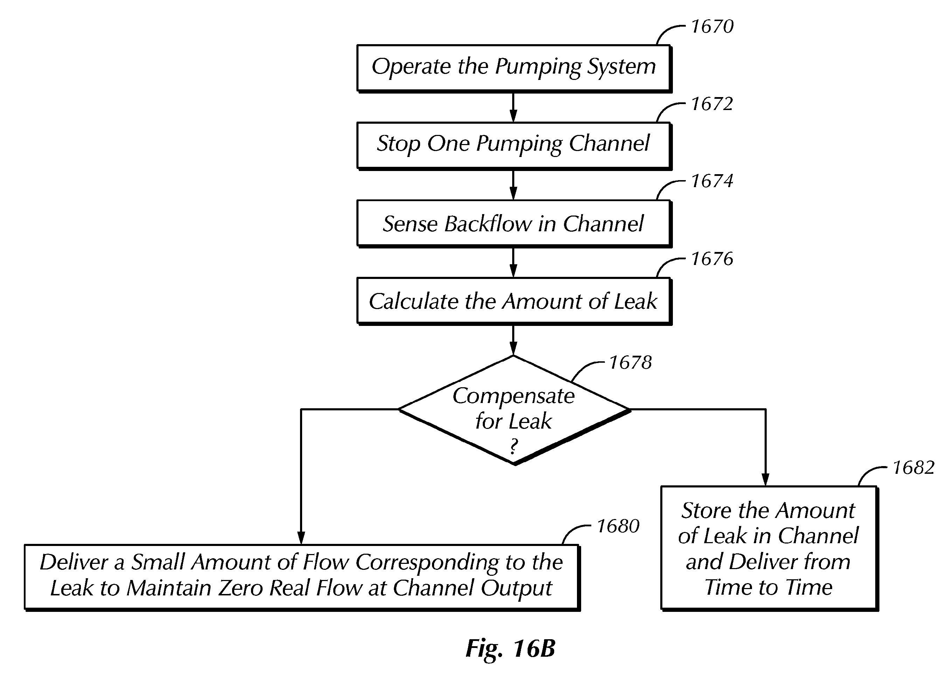

Fig. 16. displays a pumping system 1600. The pumping system 1600 includes a channel 1610 and a channel 1620. The channel 1610 includes a pumping unit 1612 in series with a pumping unit 1614. The channel 1620 includes a pumping unit 1622 in series with a pumping unit 1624. A reservoir 1602 stores a first liquid. A reservoir 1604 stores a second liquid. A channel output 1630 is connected to channel 1610. A channel output 1642 is connected to channel 1620. A pressure sensor 1632 is positioned on the channel output 1630. Channel output 1630 is connected to a waste output 1633 through a T-junction 1637. A purge valve 1634 is positioned on the waste output 1633. A waste exhaust 1636 provides an output for liquid conveyed on the waste output 1633.

A T-junction 1640 provides a connection between the channel output 1642 and a system output 1641. The system output 1641 provides a pathway to the chromatography system as shown by 1645. A conveyance 1639 is shown between T-junction 1637 and T-junction 1640. In one embodiment, a flow sensor 1638 is positioned along the conveyance 1639. In another embodiment, the flow sensor 1638 is not included in the pumping system. It should also be appreciated that in an alternate embodiment, the T-junction 1637, the purge valve 1634, the waste output 1633, and the waste exhaust 1636 may be positioned in channel output 1642.

During operation, a liquid is pumped through the channel 1610 to the channel output 1630 and through the channel 1620 to the channel output 1642. A mixture of the channel output 1630 and the channel output 1642 is combined at a mixing point identified by the T-junction 1640 and conveyed on a pumping system output 1641 to the system as shown at 1645. It should be appreciated that while an embodiment of a specific pumping unit is detailed in each channel (i.e., 1610, 1620), the present invention may be directed to pumping systems with different channel components (i.e., pumping units, valves, etc.). It should also be appreciated that more than two channels may be connected at T-junction 1640. In addition, waste from channel output 1630 and channel output 1642 may travel along waste output 1633, through the purge valve 1634 and through the waste exhaust 1636.

Fig. 16A displays a flowchart depicting a method of flushing a pumping system completely. Fig. 16A will be discussed in conjunction with Fig. 16. At step 1650 of Fig. 16A, a purge valve, such as purge valve 1634, is opened. At step 1652, the channel that the purge valve 1634 is positioned in is flushed. For example, using Fig. 16, the first channel 1610 is flushed. Flushing the first channel 1610 includes conveying liquid on channel output 1630, through T-junction 1637, through waste output 1633, through purge valve 1634, and through waste exhaust 1636. At step 1654, the channel that the purge valve 1634 is not positioned in is flushed. For example, the second channel 1620 is flushed. Flushing the second channel 1620 includes conveying liquid on channel output 1642, through T-junction 1640, through conveyance 1639, through T-junction 1637, through waste output 1633, through purge valve 1634, and through waste exhaust 1636. As an optional step, at step 1656, both channels 1610 and 1620 may be flushed together. At step 1658, the channel that the purge valve 1634 is positioned in is flushed one more time. For example, channel 1610 is flushed again. At step 1660, the purge valve, such as purge valve 1634, is closed. At step 1662, a decision is made on how to flush the conveyance 1639 between the two T-junctions (i.e., 1637 and 1640) with liquid from the channel the purge valve 1634 is positioned. For example, this would include flushing conveyance 1639 with liquid flowing through channel output 1630. If the decision is made to flush the conveyance 1639 via the system output 1641, then solvent is pumped from the channel that the purge valve 1639 is positioned in until liquid is at the mixing point. This has the effect of cleaning the conveyance between the two T-junctions of liquid from the second channel. Using Fig. 16 as an example, this would include pumping liquid from channel 1610, through the channel output 1630, across T-junction 1637, across conveyance 1639 to a mixing point defined by the location where channel output 1630, channel output 1642, and pumping system output 1641 meet in T-junction 1640. After step 1664, normal operation is continued as shown at 1666.

If a decision is made not to flush the conveyance between the two T-junctions (i.e., 1637 and 1640) via the pump system outlet 1641 as stated at 1662, then as stated at step 1668, solvent is pumped from the channel that the purge valve is positioned in backwards to the channel that the purge valve is not positioned in until the correct solvents occur at a defined mixing point. Using Fig. 16, this would mean pumping liquid from channel 1610 along channel output 1630, past T-junction 1637, along conveyance 1639, past T-junction 1640 backwards into channel output 1642. After step 1668, normal operation is continued as shown at 1669.

Fig. 16B displays a flowchart depicting a method of compensating for a leak in multi-channel pumping system. Fig. 16B will be discussed in conjunction with Fig. 16. At step 1670, a pumping system, such as pumping system 1600, is operating. At step 1672, the pumping in one channel is stopped. At step 1674, the backflow into the stopped channel is detected. At step 1676, the backflow into the stopped channel is used to calculate the amount of the leak. At step 1678, the leak is compensated for. The leak may be compensated for in a number of different ways. In one embodiment, at step 1680, a small amount of flow is delivered to maintain zero flow at the channel output. In another embodiment, at step 1682 the leak is stored in the stopped channel output. The channel output itself is cleaned from time to time by delivering the stored leak.

The method depicted by the flowchart of Fig. 16B will be discussed in conjunction with the pumping system 1600 of Fig. 16. At step 1670, the pumping system 1600 is operating. At step 1672 one channel, such as channel 1610, is stopped. At step 1674, the backflow into channel 1610 is sensed. In one embodiment, the backflow into channel 1610 is sensed in the flow sensor 1638. At step 1676, the amount of leak in the channel 1610 is calculated. The leak may be calculated using a number of the foregoing techniques presented in the instant application. For example, in one embodiment, the leak equals the measured flow minus the metered flow determined by the pumping units 1612 and 1614. At step 1680, a small amount of flow is delivered to maintain a zero flow at the mixing point. For example, an amount of flow equal to the leak may be generated dynamically to maintain a zero flow at the mixing point defined by T-junction 1640. Delivering the flow equal to the leak will include operating channel 1610 to generate an amount equivalent to the leak and a zero flow at T-junction 1640. In an alternate embodiment, at step 1682, an amount of liquid equivalent to the amount of leak is stored in the channel output 1630. The channel is cleaned from time to time preferable when the chromatography is not influenced.

Thus, the present invention has been described herein with reference to a particular embodiment for a particular application. Those having ordinary skill in the art and access to the present teachings will recognize additional modifications, applications, and embodiments within the scope thereof.

It is, therefore, intended by the appended claims to cover any and all such applications, modifications, and embodiments within the scope of the present invention.

## Claims

1. A method of managing fluid intake in a pumping system, preferably a pumping system according to claim 11, the pumping system comprising a conveyance coupled to a pumping unit, the method comprising:
conveying fluid on the conveyance, the fluid including discontinuities; and
operating the pumping unit to control, preferably limit, the discontinuities in the fluid.

2. The method of the preceding claim, comprising at least one of:
operating the pumping unit includes performing metering with the pumping unit, wherein metering is preferably performed according to hydraulic requirements of the pumping system;
measuring fluid on the conveyance and operating the pumping unit to control, preferably limit, the discontinuities in the fluid in response to measuring the fluid on the conveyance;
switching a proportioning valve when the fluid conveyed on the conveyance is flowing at low flow rates, and preferably after switching the valve changing the speed of the fluid on the conveyance - preferably by increasing the speed;
the fluid is conveyed on the conveyance at a flow rate and wherein the flow rate has a predefined maximum.

3. The method of claim 1 or any one of the above claims, the pumping unit further comprising a chamber coupled to the conveyance, the chamber including a piston disposed therein and wherein conveying fluid on the conveyance is performed in response to performing an intake stroke with the piston.

4. The method of claim 1 or any one of the above claims, the pumping unit further comprising a chamber coupled to the conveyance, the chamber including a piston disposed therein, the chamber including an upper dead center position and wherein operating the pumping unit to control, preferably compensate, for the discontinuities in the fluid is performed in response to adjusting the upper dead center position.

5. The method of claim 1 or any one of the above claims, the pumping unit further comprising a chamber coupled to the conveyance, the chamber including a piston disposed therein, the piston including a lower dead center position and wherein operating the pumping unit to control, preferably compensate, for the discontinuities in the fluid is performed in response to adjusting the lower dead center position.

6. The method of claim 1 or any one of the above claims, further comprising an intake line coupled to the conveyance and wherein the fluid is conveyed through the intake line and onto the conveyance at a flow rate and wherein the flow rate is controlled, preferably limited, to avoid generation of gas bubbles on the intake line.

7. The method of claim 1 or any one of the above claims, the pumping unit further comprising a chamber coupled to the conveyance, the chamber including a piston disposed therein, wherein operating the pumping unit to control, preferably compensate, for the discontinuities in the fluid is performed in response to at least one of accelerating the fluid on the conveyance in response to accelerating movement of the piston, and decelerating the fluid on the conveyance in response to decelerating movement of the piston.

8. The method of claim 1 or any one of the above claims, the pumping unit further comprising a chamber coupled to the conveyance, the chamber including a piston disposed therein, the piston including an upper dead center position and a lower dead center position and wherein operating the pumping unit to control, preferably compensate, for the discontinuities in the fluid is performed in response to at least one of accelerating the fluid on the conveyance in response to accelerating movement of the piston between the upper dead center and the lower dead center, and decelerating the fluid on the conveyance in response to decelerating movement of the piston between the upper dead center and the lower dead center.

9. A software program or product, preferably stored on a data carrier, for controlling or executing the method of claim 1 or any one of the above claims, when run on a data processing system such as a computer.

10. A system adapted to execute or control the method of claim 1 or any one of the above claims.

11. A pumping system comprising:
a channel conveying a fluid at a flow rate; and
a flow sensor positioned within the channel, the flow sensor capable of detecting the flow rate.

12. The pumping system as set forth in claim 11,
the channel comprising a first pumping unit and a second pumping unit, wherein the first pumping unit and the second pumping unit are positioned in series or in parallel;
further comprising at least one of:
the flow sensor is positioned between the first pumping unit and the second pumping unit;
the flow sensor is positioned before the first pumping unit;
the flow sensor is positioned after the second pumping unit;
the flow sensor is positioned before the first pumping unit and a second flow sensor is positioned before or after the second pumping unit;
the flow sensor is positioned after the first pumping unit and a second flow sensor is positioned after the second pumping unit.

13. The pumping system as set forth in claim 11 or any one of the above claims, comprising at least one of:
a second channel coupled to the first channel, the second channel conveying a second fluid at a second flow rate; wherein preferably a second flow sensor positioned within the second channel and capable of detecting the second flow rate.

14. The pumping system as set forth in claim 11 or any one of the above claims, the channel comprising:
a first pumping unit;
a drive system coupled to the first pumping unit and causing the first pumping unit to pump a fluid at a flow rate;
a second pumping unit coupled to the first pumping unit and receiving at least a portion of the fluid;
a second drive system coupled to the second pumping unit and causing the second pumping unit to pump the fluid.

15. The pumping system as set forth in claim 11 or any one of the above claims, the channel comprising:
a first pumping unit;
a first drive system coupled to the first pumping unit and causing the first pumping unit to pump a first fluid at a first flow rate;
a second pumping unit;
a second drive system coupled to the second pumping unit and causing the second pumping unit to pump a second fluid at a second flow rate.

16. The pumping system according to the preceding claim, wherein the first flow rate is substantially similar to the second flow rate.

17. The pumping system as set forth in claim 11 or any one of the above claims, further comprising at least one of: a computer coupled to at least one of the first and the second drive system, the computer being adapted for controlling each coupled to drive system, preferably controlling the movement of each coupled to drive system.

18. The pumping system as set forth in claim 11 or any one of the above claims, comprising at least one of:
wherein the pumping system is a low-pressure gradient pumping system;
the pumping system is a high-pressure gradient pumping system;
the pumping system further comprising a first driving unit coupled to and operating the first pumping unit and a second driving unit coupled to and operating the second pumping unit;
the pumping system operates at a high system pressure;
the flow sensor is capable of measuring flow independent of flow direction;
the flow sensor is calibrated for the solvent pumped in the first channel;
at least one of a switching valve and a proportioning valve coupled to the conveyance and capable of switching fluid onto the conveyance.

19. An analysis system comprising a pumping system according to claim 11 or any one of the above claims, comprising at least one of:
the analysis system is a chromatography system, preferably a High Pressure Liquid Chromatography system;
a column adapted for separating compounds of the fluid;
a sensor adapted for sensing separated compounds of the fluid;
a sampler adapted for introducing samples to be separated into the fluid;
a fractionator adapted for outputting separated compounds of the fluid.
